(19) Europäisches Patentamt
European Patent Office
Office européen des brevets

(11) **EP 3 395 871 B1**

(12) **EUROPEAN PATENT SPECIFICATION**

(45) Date of publication and mention of the grant of the patent:
**25.11.2020 Bulletin 2020/48**

(51) Int Cl.:
***C08J 9/14*** *(2006.01)*   ***C08J 9/00*** *(2006.01)*
***C08L 61/04*** *(2006.01)*

(21) Application number: **16878833.9**

(22) Date of filing: **21.12.2016**

(86) International application number:
**PCT/JP2016/088244**

(87) International publication number:
**WO 2017/110946 (29.06.2017 Gazette 2017/26)**

(54) **PHENOLIC RESIN FOAM AND METHOD FOR PRODUCING SAME**

PHENOLHARZSCHAUMSTOFF UND VERFAHREN ZUR HERSTELLUNG DAVON

MOUSSE DE RÉSINE PHÉNOLIQUE ET PROCÉDÉ POUR SA PRODUCTION

(84) Designated Contracting States:
**AL AT BE BG CH CY CZ DE DK EE ES FI FR GB GR HR HU IE IS IT LI LT LU LV MC MK MT NL NO PL PT RO RS SE SI SK SM TR**

(30) Priority: **22.12.2015 JP 2015250591**

(43) Date of publication of application:
**31.10.2018 Bulletin 2018/44**

(73) Proprietor: **Asahi Kasei Construction Materials Corporation**
**Tokyo 101-8101 (JP)**

(72) Inventor: **MUKAIYAMA, Shigemi**
**Tokyo 101-8101 (JP)**

(74) Representative: **Strehl Schübel-Hopf & Partner**
**Maximilianstrasse 54**
**80538 München (DE)**

(56) References cited:
**EP-A1- 3 159 375       WO-A1-99/11697**
**WO-A1-2014/092086    WO-A1-2015/194174**
**JP-A- H11 140 216**

## Description

TECHNICAL FIELD

The present disclosure relates to a phenolic resin foam and a method of producing the same. The present disclosure particularly relates to a phenolic resin foam with low thermal conductivity that can be used as insulating materials such as construction insulating materials, vehicle insulating materials, and appliance insulating materials, and a method of producing the same.

BACKGROUND

Phenolic resin foams used as insulating materials achieve required thermal insulation performance with thinner thickness, when thermal conductivity is lower. This can reduce the usage of the insulating material, and reduce the space necessary for construction work. In housing, for example, the effective living space can be expanded with respect to the building area of the housing.

Since insulating materials are used over the long term once installed, high thermal insulation performance needs to be maintained over the long term.

Moreover, insulating materials are required to have excellent compressive strength, especially in the case of being used in floors, roofs, external walls, etc.

In recent years, the need for long-life, quality housing has been increasing for the conservation of energy and resources. Hence, insulating materials that have low initial thermal conductivity and maintain low thermal conductivity over the long term while keeping high compressive strength have been demanded more than ever.

JP H11-140216 A (PTL 1), WO 99/11697 A1 (PTL 2), and JP 2007-131803 A (PTL 3) each disclose a phenolic resin foam obtained using a high-boiling foaming agent such as normal pentane or isopentane, paraffin, and the like.

PTL 4 discloses a phenol resin foam comprising cyclopentane and a high-boiling hydrocarbon having a boiling point of from 120°C to 550°C, the foam having a specific relationship between the mol-content X of cyclopentane and the extracted amount Y of high-boiling hydrocarbon.

CITATION LIST

Patent Literatures

PTL 1: JP H11-140216 A
PTL 2: WO 99/11697 A1
PTL 3: JP 2007-131803 A
PTL 4: EP 3 159 375 A1

SUMMARY

(Technical Problem)

The conventional phenolic resin foams mentioned above have improved thermal conductivity at low temperatures. However, there is still a need to further improve initial thermal conductivity and reduce an increase in thermal conductivity over time while ensuring compressive strength.

(Solution to Problem)

As a result of conducting extensive research, we discovered that a phenolic resin foam that has low initial thermal conductivity, maintains low thermal conductivity over the long term, and has excellent compressive strength can be obtained by: containing, in the phenolic resin foam, at least cyclopentane and a high-boiling hydrocarbon in a specific boiling point range; limiting the content of cyclopentane to a specific range; and limiting the amount of high-boiling hydrocarbon extracted from the phenolic resin foam into heptane to a specific range.

We thus provide the following.

(i) A phenolic resin foam as defined in claim 1.
(ii) The phenolic resin foam according to (i),

wherein the high-boiling hydrocarbon with a boiling point of 140 °C or more and 350 °C or less is liquid at a pressure of 101.325 kPa and a temperature of 30 °C.

(iii) The phenolic resin foam according to (i) or (ii),
wherein the hydrocarbon having a carbon number of 6 or less contained in the phenolic resin foam includes 60 mol% or more and 99.9 mol% or less of the cyclopentane, and
a boiling point average value of the hydrocarbon having a carbon number of 6 or less is 25 °C or more and 50 °C or less.

(iv) The phenolic resin foam according to (i) or (ii),
wherein the hydrocarbon having a carbon number of 6 or less contained in the phenolic resin foam includes 60 mol% or more and 99.9 mol% or less of the cyclopentane, and 0.1 mol% or more and 40 mol% or less of at least one selected from hydrocarbons with a boiling point of -50 °C or more and 5 °C or less, and
a boiling point average value of the hydrocarbon having a carbon number of 6 or less is 25 °C or more and 50 °C or less, and a content of the hydrocarbon having a carbon number of 6 or less in the phenolic resin foam is 0.3 mol or more and 1.0 mol or less per a space volume of $22.4 \times 10^{-3}$ m$^3$ in the phenolic resin foam.

(v) The phenolic resin foam according to any of (i) to (iv),
wherein thermal conductivity in a 10 °C environment and thermal conductivity in a 23 °C environment are each 0.0200 W/m·K or less.

(vi) The phenolic resin foam according to any of (i) to (v),
wherein the hydrocarbon having a carbon number of 6 or less contained in the phenolic resin foam includes a hydrocarbon with a boiling point of -50 °C or more and 5 °C or less, and
the hydrocarbon with a boiling point of -50 °C or more and 5 °C or less contains isobutane.

(vii) The phenolic resin foam according to any of (i) to (vi), comprising at least one of a poorly water-soluble metal hydroxide that releases water at 150 °C or more and a poorly water-soluble phosphorus-based flame retardant with a decomposition temperature of 150 °C or more.

(viii) The phenolic resin foam according to any of (i) to (vii), having a closed cell ratio of 90 % or more, an average cell diameter of 40 μm or more and 300 μm or less, and a density 30 kg/m$^3$ equivalent compressive strength of 9 N/cm$^2$ or more.

(ix) The phenolic resin foam according to any of (i) to (viii), further comprising a hydrofluoroolefin having a carbon number of 3 or 4,
wherein a value of a content Z in units of mol of the hydrofluoroolefin having a carbon number of 3 or 4 per a space volume of $22.4 \times 10^{-3}$ m$^3$ in the phenolic resin foam is 0.01 or more and 0.4 or less, and
a total in units of mol of a content of the hydrocarbon having a carbon number of 6 or less and the content Z of the hydrofluoroolefin having a carbon number of 3 or 4 per a space volume of $22.4 \times 10^{-3}$ m$^3$ in the phenolic resin foam is 0.3 or more and 0.9 or less.

(x) The phenolic resin foam according to (ix),
wherein the value of the extraction amount Y in units of g is not more than a coefficient c calculated according to the following formula (3):

$$c = -1.37Z + 7.4 \qquad (3).$$

(xi) The phenolic resin foam according to any of (i) to (x), further comprising a halogenated saturated hydrocarbon, wherein a value of a content in units of mol of the halogenated saturated hydrocarbon per a space volume of $22.4 \times 10^{-3}$ m$^3$ in the phenolic resin foam is 0.01 or more and 0.35 or less.

(xii) A method of producing the phenolic resin foam according to any of (i) to (viii), comprising:

mixing a foamable phenolic resin composition containing at least a phenolic resin, a surfactant, a high-boiling hydrocarbon with a boiling point of 140 °C or more and 350 °C or less, a foaming agent containing cyclopentane, and an acid curing catalyst, using a mixer;
discharging the foamable phenolic resin composition from a distribution section in the mixer; and
thereafter performing heating, to foam and cure the foamable phenolic resin composition,
wherein in a process of foaming and curing the foamable phenolic resin composition, pressure is applied to the foamable phenolic resin composition from above and below, to form a platelike phenolic resin foam.

(xiii) A method of producing the phenolic resin foam according to (ix) or (x), comprising:

mixing a foamable phenolic resin composition containing at least a phenolic resin, a surfactant, a high-boiling hydrocarbon with a boiling point of 140 °C or more and 350 °C or less, a foaming agent containing cyclopentane and a hydrofluoroolefin having a carbon number of 3 or 4, and an acid curing catalyst, using a mixer; discharging the foamable phenolic resin composition from a distribution section in the mixer; and thereafter performing heating, to foam and cure the foamable phenolic resin composition, wherein in a process of foaming and curing the foamable phenolic resin composition, pressure is applied to the foamable phenolic resin composition from above and below, to form a platelike phenolic resin foam.

(xiv) A method of producing the phenolic resin foam according to (xi), comprising:

mixing a foamable phenolic resin composition containing at least a phenolic resin, a surfactant, a high-boiling hydrocarbon with a boiling point of 140 °C or more and 350 °C or less, a foaming agent containing cyclopentane and a halogenated saturated hydrocarbon, and an acid curing catalyst, using a mixer; discharging the foamable phenolic resin composition from a distribution section in the mixer; and thereafter performing heating, to foam and cure the foamable phenolic resin composition, wherein in a process of foaming and curing the foamable phenolic resin composition, pressure is applied to the foamable phenolic resin composition from above and below, to form a platelike phenolic resin foam.

(xv) The method according to any of (xii) to (xiv), wherein the high-boiling hydrocarbon and the foaming agent are mixed, prior to the mixing of the foamable phenolic resin composition containing the phenolic resin, the surfactant, the high-boiling hydrocarbon, the foaming agent, and the acid curing catalyst.

(xvi) The method according to any of (xii) to (xv), wherein a pressure of the distribution section is 0.3 MPa or more and 10 MPa or less.

(xvii) The method according to any of (xii) to (xvi), wherein a water content in the phenolic resin charged into the mixer is 2 mass% or more and 20 mass% or less, in the process of foaming and curing the foamable phenolic resin composition, the pressure is applied to the foamable phenolic resin composition using a double conveyor, and a temperature in the double conveyor is 60 °C or more and 100 °C or less.

(xviii) The method according to any of (xii) to (xvii), wherein in the process of foaming and curing the foamable phenolic resin composition, the pressure is applied to the foamable phenolic resin composition using a double conveyor, and a coefficient R calculated according to the following formula (4) from a water content P in units of mass% in the phenolic resin charged into the mixer and a temperature Q in units of °C in the double conveyor is 20 or more and 36 or less:

$$R = P + 0.2286Q \qquad (4).$$

(Advantageous Effect)

It is thus possible to provide a phenolic resin foam that has low initial thermal conductivity, maintains low thermal conductivity over the long term, and has excellent compressive strength, and a method of producing the same. The disclosed phenolic resin foam is suitable for use as insulating materials such as construction insulating materials, vehicle insulating materials, and appliance insulating materials.

BRIEF DESCRIPTION OF THE DRAWINGS

In the accompanying drawings:

FIG. 1 is a schematic diagram illustrating an example of a mixer used in one of the disclosed embodiments; and
FIG. 2 is a schematic diagram illustrating an example of a forming machine with a slat-type double conveyor used in one of the disclosed embodiments.

DETAILED DESCRIPTION

The following provides a detailed description of one of the disclosed embodiments (hereinafter referred to as "this embodiment"). The disclosed techniques are, however, not limited to the embodiment described below, and various modifications are possible within the scope of the present disclosure.

The density of a phenolic resin foam according to this embodiment is 10 kg/m$^3$ or more and 150 kg/m$^3$ or less, and preferably 15 kg/m$^3$ or more and 70 kg/m$^3$ or less. If the density is excessively low, sufficient compressive strength cannot be obtained. Besides, since the cell walls are thin, a foaming agent in the foam tends to be displaced by air, causing a decrease in long-term thermal insulation performance. If the density is excessively high, the thermal conduction of the resin portion forming the cell walls may increase, causing a decrease in thermal insulation performance.

The phenolic resin foam according to this embodiment results from our discoveries that the initial thermal insulation performance at 10 °C and 23 °C and the long-term thermal insulation performance of the phenolic resin foam can be significantly improved and also excellent compressive strength can be imparted to the phenolic resin foam by, from among various hydrocarbons, containing a specific amount of cyclopentane, containing a specific amount of a high-boiling hydrocarbon with a boiling point of 140 °C or more and 350 °C or less, and optionally containing a specific amount of a hydrofluoroolefin having a carbon number of 3 or 4 and/or a halogenated saturated hydrocarbon.

The cyclopentane and the high-boiling hydrocarbon contained and the hydrofluoroolefin having a carbon number of 3 or 4 and the halogenated saturated hydrocarbon optionally contained in the phenolic resin foam according to this embodiment and their contents are described below.

(Cyclopentane)

Cyclopentane mainly functions as a foaming agent in the production of the phenolic resin foam having the above-mentioned density, and also is used to ensure compressive strength while decreasing the thermal conductivity of the phenolic resin foam to improve thermal insulation performance. We discovered that, by using cyclopentane as a foaming agent and further adding a high-boiling hydrocarbon, a phenolic resin foam that has low initial thermal conductivity, maintains low thermal conductivity over the long term, and has excellent compressive strength is obtained while avoiding a phenomenon that the compressive strength of the phenolic resin foam decreases. This is presumed to be because cyclopentane has a ring structure unlike normal pentane or isopentane, and has a high boiling point.

The value of the content X (units: mol) of the cyclopentane per a space volume of $22.4 \times 10^{-3}$ m$^3$ in the phenolic resin foam according to this embodiment is 0.25 or more and 0.85 or less. If the content of the cyclopentane is excessively low, long-term thermal insulation performance tends to decrease. If the content of the cyclopentane is decreased and instead another foaming agent (normal pentane or isopentane) is used, initial thermal insulation performance may degrade, and degradation in long-term thermal insulation performance may increase. If the content of the cyclopentane is excessively high, initial thermal insulation performance at 10 °C and 23 °C and compressive strength tend to decrease. The value of the content X of the cyclopentane is preferably 0.3 or more and 0.77 or less, more preferably 0.35 or more and 0.7 or less, and particularly preferably 0.4 or more and 0.65 or less.

The ratio of the cyclopentane in a hydrocarbon (or hydrocarbons) having a carbon number of 6 or less contained in the phenolic resin foam according to this embodiment is 60 mol% or more and 100 mol% or less, preferably 70 mol% or more and more preferably 75 mol% or more, and preferably 99.9 mol% or less. If the ratio of the cyclopentane in the hydrocarbon having a carbon number of 6 or less is excessively low, excellent thermal insulation performance and compressive strength of the phenolic resin foam are likely to be impaired. Therefore, the cyclopentane needs to be contained at a predetermined ratio or more.

In this embodiment, "hydrocarbon" is a compound consisting entirely of hydrogen atoms and carbon atoms. Examples of hydrocarbons having a carbon number of 6 or less include: chain aliphatic hydrocarbons including alkanes, alkenes, and dienes such as methane, ethane, ethylene, propane, propylene, butane, butene, butadiene, pentane, pentene, hexane, and hexane; and cyclic aliphatic hydrocarbons including cycloalkanes and cycloalkenes such as cyclobutane, cyclopentane, and cyclohexene.

The hydrocarbon having a carbon number of 6 or less contained in the phenolic resin foam according to this embodiment preferably includes cyclopentane and at least one selected from hydrocarbons with a boiling point of -50 °C or more and 5 °C or less. In the hydrocarbon having a carbon number of 6 or less contained in the foam, more preferably the content of the cyclopentane is 60 mol% or more and 99.9 mol% or less and the content of the at least one selected from hydrocarbons with a boiling point of -50 °C or more and 5 °C or less is 0.1 mol% or more and 40 mol% or less, further preferably the content of the cyclopentane is 70 mol% or more and 95 mol% or less and the content of the at least one selected from hydrocarbons with a boiling point of -50 °C or more and 5 °C or less is 5 mol% or more and 30 mol% or less, and particularly preferably the content of the cyclopentane is 75 mol% or more and 90 mol% or less and the content of the at least one selected from hydrocarbons with a boiling point of -50 °C or more and 5 °C or less is 10 mol% or more and 25 mol% or less.

If the hydrocarbon having a carbon number of 6 or less contained in the phenolic resin foam includes a hydrocarbon with a boiling point of -50 °C or more and 5 °C or less together with cyclopentane, a high closed cell ratio can be obtained easily, which contributes to improved long-term thermal insulation performance. Moreover, if a hydrocarbon with a boiling point of -50 °C or more and 5 °C or less is contained, good initial thermal insulation performance at 10 °C tends to be obtained even though the content of the high-boiling hydrocarbon with a boiling point of 140 °C or more and 350 °C or less is low, so that the production cost and high flame retardance which is an excellent property of a phenolic resin foam are easily maintained. If the content of the hydrocarbon with a boiling point of -50 °C or more and 5 °C or less is excessively high, the effect of improving the initial thermal insulation performance at 10 °C and 23 °C tends to decrease.

In this embodiment, "boiling point" is a boiling point at ordinary pressure.

Examples of hydrocarbons with a boiling point of -50 °C or more and 5 °C or less include propane, propylene, isobutane, normal butane, 1-butene, cis-2-butene, trans-2-butene, 2-methylpropene, and butadiene. In terms of thermal conductivity and stability, propane, normal butane, and isobutane are preferable, and isobutane is particularly preferable.

The hydrocarbon having a carbon number of 6 or less contained in the phenolic resin foam according to this embodiment preferably has a boiling point average value calculated according to the following formula (5) of 25 °C or more and 50 °C or less. The boiling point average value is more preferably 28.5 °C or more and 46.5 °C or less, and particularly preferably 31 °C or more and 44 °C or less. If the boiling point average value is excessively low, the thermal conductivity of the mixed gas tends to increase, so that the initial thermal insulation performance at 23 °C may decrease, and also the long-term thermal insulation performance improving effect may decrease because the content of cyclopentane hard to escape from inside the cells decreases (i.e. the content of a hydrocarbon lower in boiling point than cyclopentane increases). If the boiling point average value of the hydrocarbon having a carbon number of 6 or less is excessively high, the hydrocarbon is easily liquefied at low temperatures, so that the initial thermal insulation performance at 10 °C tends to decrease. Besides, when used together with the high-boiling hydrocarbon with a boiling point of 140 °C or more and 350 °C or less, the cell size tends to increase, and the thermal insulation performance improving effect is likely to decrease due to radiation.

$$\text{Boiling point average value } T_{AV} = a \times Ta + b \times Tb + c \times Tc + \dots \quad (5)$$

where the contents (mole fractions) of respective hydrocarbons contained are a, b, c, ..., and the boiling points (°C) of the respective hydrocarbons are Ta, Tb, Tc, ....

The content of the hydrocarbon having a carbon number of 6 or less in the phenolic resin foam according to this embodiment is preferably 0.3 mol or more and 1.0 mol or less per a space volume of $22.4 \times 10^{-3}$ m$^3$ (22.4 L) in the foam. The content of the hydrocarbon having a carbon number of 6 or less per a space volume of $22.4 \times 10^{-3}$ m$^3$ in the foam is more preferably 0.35 mol or more and further preferably 0.45 mol or more, and more preferably 0.85 mol or less, further preferably 0.77 mol or less, particularly preferably 0.7 mol or less, and most preferably 0.65 mol or less. If the content of the hydrocarbon having a carbon number of 6 or less is low, the long-term thermal insulation performance tends to decrease. If the content of the hydrocarbon having a carbon number of 6 or less is excessively high, the initial thermal insulation performance at 10 °C and 23 °C tends to decrease.

(Hydrofluoroolefin having a carbon number of 3 or 4)

The phenolic resin foam according to this embodiment may contain a hydrofluoroolefin having a carbon number of 3 or 4 (i.e. having a carbon number of 3 or more and 4 or less). In the production of the phenolic resin foam having the above-mentioned density, the hydrofluoroolefin having a carbon number of 3 or 4 functions as a foaming agent together with the cyclopentane, and also is used to reduce the cell diameter of the phenolic resin foam to decrease thermal conductivity and thus improve thermal insulation performance. The phenolic resin foam according to this embodiment may contain, as the hydrofluoreolefin having a carbon number of 3 or 4, only one of a hydrofluoroolefin having a carbon number of 3 and a hydrofluoroolefin having a carbon number of 4, or both of a hydrofluoroolefin having a carbon number of 3 and a hydrofluoroolefin having a carbon number of 4.

The hydrofluoroolefin having a carbon number of 3 or 4 in the phenolic resin foam according to this embodiment is a compound with a carbon number of 3 or 4 that has at least a fluorine atom, a hydrogen atom, and a carbon-carbon unsaturated bond (olefinic double bond). This compound has an ozone depletion potential (ODP) that is substantially 0, and a global warming potential (GWP) that is 0 or very low. Examples of hydrofluoroolefins having a carbon number of 3 or 4 include hydrofluoropropene, hydrochlorofluoropropene, hydrobromofluoropropene, hydrofluorobutene, hydrochlorofluorobutene, and hydrobromofluorobutene. In terms of stability, tetrafluoropropene (hydrofluoropropene), chlorotrifluoropropene (hydrochlorofluoropropene), hexafluoro-2-butene (hydrofluorobutene), and chlorohexafluoro-2-butene (hydrochlorofluorobutene) are preferable.

In the case where the phenolic resin foam according to this embodiment contains the hydrofluoroolefin having a carbon number of 3 or 4, the value of the content Z (units: mol) of the hydrofluoroolefin having a carbon number of 3 or 4 per a space volume of $22.4 \times 10^{-3}$ m$^3$ in the phenolic resin foam is preferably 0.01 or more and 0.4 or less, more preferably 0.02 or more and 0.35 or less, and further preferably 0.03 or more and 0.3 or less. The hydrofluoroolefin having a carbon number of 3 or 4 has a halogen atom such as a fluorine atom, and a carbon-carbon unsaturated bond. Such a structure contributes to low affinity with the cyclopentane and the high-boiling hydrocarbon. Accordingly, in the case where the phenolic resin foam contains a predetermined amount or more of the hydrofluoroolefin having a carbon number of 3 or 4, an effect of reducing the cell diameter and improving thermal conductivity is achieved. If the content of the hydrofluoroolefin having a carbon number of 3 or 4 is excessively high, the long-term thermal insulation performance and compressive strength of the phenolic resin foam tend to decrease because, due to high affinity of the compound with phenolic resin, scattering from the foam is facilitated and the closed cell ratio tends to decrease.

The phenolic resin foam according to this embodiment may contain inorganic gases such as carbon dioxide, nitrogen, oxygen, helium, and argon, ethers such as dimethyl ether, diethyl ether, methylethyl ether, and furan, ketones such as acetone and methyl ethyl ketone, and halogenated saturated hydrocarbons such as methyl chloride, ethyl chloride, dichloromethane, and isopropyl chloride. As a halogenated saturated hydrocarbon, isopropyl chloride is preferable for its low toxicity and low environmental impact.

In the case where the phenolic resin foam according to this embodiment contains the halogenated saturated hydrocarbon, the content of the halogenated saturated hydrocarbon per a space volume of $22.4 \times 10^{-3}$ $m^3$ in the phenolic resin foam is preferably 0.01 mol or more and 0.35 mol or less, more preferably 0.25 mol or less, and further preferably 0.15 mol or less.

If a lot of foamable or volatile substances are contained other than the hydrocarbon having a carbon number of 6 or less and the hydrofluoroolefin having a carbon number of 3 or 4, there is a possibility that initial thermal insulation performance or long-term thermal insulation performance decreases. Accordingly, the proportion of the total content of the cyclopentane, the hydrofluoroolefin having a carbon number of 3 or 4, and the hydrocarbon with a boiling point of -50 °C or more and 5 °C or less in the substances with a boiling point of -100 °C or more and 81 °C or less contained in the foam, which is measured by the below-mentioned method, is preferably 60 mol% or more and 100 mol% or less, more preferably 85 mol% or more and 100 mol% or less, and particularly preferably 95 mol% or more and 100 mol% or less.

In the case where the phenolic resin foam according to this embodiment contains the hydrofluoroolefin having a carbon number of 3 or 4, the total (units: mol) of the content of the hydrocarbon having a carbon number of 6 or less and the content Z of the hydrofluoroolefin having a carbon number of 3 or 4 per a space volume of $22.4 \times 10^{-3}$ $m^3$ in the phenolic resin foam is preferably 0.3 or more and 0.9 or less, more preferably 0.35 or more and 0.8 or less, and further preferably 0.45 or more and 0.7 or less. In this case, a hydrocarbon having a carbon number of 6 or less other than cyclopentane may or may not be contained in the phenolic resin foam. If the total content of the hydrocarbon having a carbon number of 6 or less and the hydrofluoroolefin having a carbon number of 3 or 4 is low, the long-term thermal insulation performance tends to decrease. If the total content is excessively high, the initial thermal insulation performance at 10 °C and 23 °C tends to decrease.

In the case where the phenolic resin foam according to this embodiment contains the halogenated saturated hydrocarbon, the total (units: mol) of the content of the hydrocarbon having a carbon number of 6 or less, the content Z of the hydrofluoroolefin having a carbon number of 3 or 4, and the content of the halogenated saturated hydrocarbon per a space volume of $22.4 \times 10^{-3}$ $m^3$ in the phenolic resin foam is preferably 0.3 or more and 1.0 or less, more preferably 0.35 or more and 0.85 or less, and further preferably 0.45 or more and 0.7 or less. In this case, a hydrocarbon having a carbon number of 6 or less other than cyclopentane and a hydrofluoroolefin having a carbon number of 3 or 4 may or may not be contained in the phenolic resin foam. If the total content of the hydrocarbon having a carbon number of 6 or less, the hydrofluoroolefin having a carbon number of 3 or 4, and the halogenated saturated hydrocarbon is low, the long-term thermal insulation performance tends to decrease. If the total content is excessively high, the initial thermal insulation performance at 10 °C and 23 °C tends to decrease.

(High-boiling hydrocarbon)

The high-boiling hydrocarbon with a boiling point of 140 °C or more and 350 °C or less is mainly used to decrease the thermal conductivity of the foam and improve thermal insulation performance and compressive strength, together with the cyclopentane and the hydrofluoroolefin having a carbon number of 3 or 4 optionally contained in the phenolic resin foam.

A high-boiling hydrocarbon with a boiling point of 140 °C or more and 350 °C or is generally a compound consisting entirely of hydrogen atoms and carbon atoms, and is preferably a compound that has a straight-chain, branched, or ring structure without including any conjugated double bond such as a benzene ring or a naphthalene ring. A high-boiling hydrocarbon is generally a compound whose number of double bonds per a carbon number of 5 is 1 or less, more preferably a compound whose number of double bonds per a carbon number of 10 is 1 or less, further preferably a compound whose number of double bonds per a carbon number of 20 is 1 or less, and particularly preferably a compound having no double bond. If the high-boiling hydrocarbon has a double bond such as a conjugated double bond in molecules, the affinity with the cyclopentane decreases, and the stabilizing ability of the cyclopentane liquefied at low temperatures in cells decreases.

The high-boiling hydrocarbon with a boiling point of 140 °C or more and 350 °C or less is a single compound or a mixture of a plurality of compounds selected from cyclooctane, nonane, decane, decalin, undecane, dodecane, tridecane, tetradecane, pentadecane, hexadecane, heptadecane, octadecane, nonadecane, and icosane.

If the boiling point of the high-boiling hydrocarbon in the phenolic resin foam according to this embodiment is excessively low or excessively high, the effect of improving the initial thermal insulation performance at 10 °C and 23 °C and/or the compressive strength tends to decrease. If the boiling point is excessively low, the thermal insulation performance improving effect tends to be insufficient even when the content of the high-boiling hydrocarbon is high, probably because the stabilizing ability of the liquefied cyclopentane rapidly decreases. If the boiling point is excessively high, a large amount of high-boiling hydrocarbon is needed to achieve a sufficient initial thermal insulation performance improving effect, probably because the molecular size increases and the affinity with the cyclopentane decreases. If the content of the high-boiling hydrocarbon increases, the long-term thermal insulation performance improving effect tends to decrease, and the compressive strength of the foam tends to decrease. The boiling point of the high-boiling hydrocarbon is therefore preferably 160 °C or more, and preferably 300 °C or less, more preferably 260 °C or less, and further preferably 240 °C or less. In the case where the phenolic resin foam contains a plurality of high-boiling hydrocarbons that differ in boiling point, preferably 40 mass% or more of the high-boiling hydrocarbons is a hydrocarbon with a boiling point of 160 °C or more and 350 °C or less, further preferably 80 mass% or more of the high-boiling hydrocarbons is a hydrocarbon with a boiling point of 160 °C or more and 300 °C or less, and particularly preferably 80 mass% or more of the high-boiling hydrocarbons is a hydrocarbon with a boiling point of 160 °C or more and 260 °C or less.

In this embodiment, "boiling point" is a boiling point at ordinary pressure. Particularly for a hydrocarbon with a very high boiling point (e.g. boiling point of 250 °C or more), its boiling point is a gas chromatography boiling point obtained by a gas chromatograph to which a non-polar column used for analysis of crude oil and the like is attached.

The amount of the high-boiling hydrocarbon with a boiling point of 140 °C or more and 350 °C or less contained in the phenolic resin foam according to this embodiment satisfies the following conditions in the relationship with the content of the cyclopentane in the foam.

The heptane extraction amount Y (units: g) of the high-boiling hydrocarbon with a boiling point of 140 °C or more and 350 °C or less per a space volume of $22.4 \times 10^{-3}$ m$^3$ in the phenolic resin foam according to this embodiment is in a range of not more than a coefficient a calculated according to the following formula (1) and not less than a coefficient b calculated according to the following formula (2):

$$a = \quad -1.95X + 6.2 \qquad\qquad (1)$$

$$b = \quad 0.47X + 0.14 \qquad\qquad (2).$$

Here, "heptane extraction amount" is the amount extracted into heptane when performing an extraction treatment by grinding the phenolic resin foam in heptane so that the volume average particle diameter of primary particles is 30 $\mu$m or less. In the formulas (1) and (2), X denotes the content (units: mol) of the cyclopentane per a space volume of $22.4 \times 10^{-3}$ m$^3$ in the phenolic resin foam.

If the extraction amount Y of the high-boiling hydrocarbon in the phenolic resin foam according to this embodiment is less than the coefficient b, the amount of the high-boiling hydrocarbon relative to the cyclopentane content in the foam is insufficient, and the initial thermal insulation performance at 10 °C and 23 °C tends to decrease. If the extraction amount Y of the high-boiling hydrocarbon is more than the coefficient a, the compressive strength tends to decrease, and high flame retardance, which is an excellent property of the phenolic resin foam, tends to be impaired.

In the case where the phenolic resin foam according to this embodiment contains the above-mentioned hydrofluoroolefin having a carbon number of 3 or 4, the amount of the high-boiling hydrocarbon with a boiling point of 140 °C or more and 350 °C or less contained in the foam preferably satisfies the following conditions in the relationship with the content of the hydrofluoroolefin having a carbon number of 3 or 4 in the foam.

The heptane extraction amount Y (units: g) of the high-boiling hydrocarbon with a boiling point of 140 °C or more and 350 °C or less per a space volume of $22.4 \times 10^{-3}$ m$^3$ in the phenolic resin foam according to this embodiment is preferably in a range of not more than a coefficient c calculated according to the following formula (3):

$$c = -1.37Z + 7.4 \qquad (3).$$

In the formula (3), Z denotes the content (units: mol) of the hydrofluoroolefin having a carbon number of 3 or 4 per a space volume of $22.4 \times 10^{-3}$ m$^3$ in the phenolic resin foam.

If the extraction amount Y of the high-boiling hydrocarbon in the phenolic resin foam according to this embodiment is more than the coefficient c, the compressive strength tends to decrease, probably because the interaction of the hydrofluoroolefin having polarity and the non-polar high-boiling hydrocarbon affects the formation of cells during foaming.

In terms of suppressing a decrease in compressive strength and a decrease in flame retardance, the extraction amount Y of the high-boiling hydrocarbon is not more than a coefficient a calculated according to formula (1), and preferably not more than a coefficient a' calculated according to the following formula (7). In terms of enhancing the initial thermal insulation performance at 10 °C and 23 °C, the extraction amount Y of the high-boiling hydrocarbon is not less than a coefficient b calculated according to formula (2), and preferably not less than a coefficient b' calculated according to the following formula (9). In terms of compressive strength, the extraction amount Y of the high-boiling hydrocarbon is further preferably not more than a coefficient c' calculated according to the following formula (10):

$$a' \; = -0.56X + 4.0 \qquad (7)$$

$$b' \; = 0.56X + 0.28 \qquad (9)$$

$$c' = -0.78Z + 5.5 \qquad (10).$$

The high-boiling hydrocarbon with a boiling point of 140 °C or more and 350 °C or less is preferably liquid at a pressure of 101.325 kPa (1 atm) and a temperature of 30 °C, more preferably liquid at a temperature of 20 °C, and further preferably liquid at a temperature of 10 °C.

If the high-boiling hydrocarbon is solid under the temperature conditions in which the foam is used, the effect of improving the initial thermal insulation performance at 10 °C and 23 °C tends to be insufficient, and a large amount of high-boiling hydrocarbon is needed to achieve a sufficient effect of improving the initial thermal insulation performance at 10 °C and 23 °C. If the content of the high-boiling hydrocarbon is high, the compressive strength tends to decrease. The reason why the initial thermal insulation performance improving effect is insufficient in the case where the high-boiling hydrocarbon is solid is not clear, but it is presumed that the high-boiling hydrocarbon is solidified in the foam and the interaction of the cyclopentane and the high-boiling hydrocarbon is hampered.

(Properties and the like of phenolic resin foam)

The phenolic resin foam according to this embodiment preferably has thermal conductivity in the below-mentioned 10 °C environment and thermal conductivity in the below-mentioned 23 °C environment of 0.0200 W/m·K or less. The thermal conductivity in the 10 °C environment and the thermal conductivity in the 23 °C environment are more preferably 0.0195 W/m·K or less, further preferably 0.0190 W/m·K or less, and particularly preferably 0.0185 W/m·K or less. In a phenolic resin foam using cyclopentane, thermal conductivity at low temperatures tends to be high. In the phenolic resin foam according to this embodiment containing the cyclopentane, the high-boiling hydrocarbon, and optionally the hydrofluoroolefin having a carbon number of 3 or 4 and the hydrocarbon with a boiling point of -50 °C or more and 5 °C or less, on the other hand, low thermal conductivity in the 10 °C environment can be achieved. The thermal conductivity in the 10 °C environment is preferably 0.0185 W/m·K or less, more preferably 0.0180 W/m·K or less, further preferably 0.0175 W/m·K or less, and particularly preferably 0.0170 W/m·K or less. Moreover, in the phenolic resin foam according to this embodiment, the width of deterioration (increase) of the thermal conductivity after the below-mentioned accelerated testing from the initial thermal conductivity before the accelerated testing (thermal conductivity after accelerated testing - initial thermal conductivity) is preferably 0.0020 W/m·K or less, more preferably 0.0010 W/m·K or less, further preferably 0.0005 W/m·K or less, and particularly preferably 0.0003 W/m·K or less. The phenolic resin foam with such thermal conductivity is preferable as it exhibits excellent thermal insulation performance both at ordinary temperatures and at low temperatures, and maintains excellent thermal insulation performance over the long term.

If the closed cell ratio of the phenolic resin foam according to this embodiment is low, the thermal insulation performance tends to decrease over time, and the compressive strength tends to decrease. The closed cell ratio is therefore preferably 90% or more, more preferably 93% or more, and particularly preferably 96% or more and 100% or less.

If the average cell diameter of the phenolic resin foam according to this embodiment is excessively small, the compressive strength tends to decrease, and the thermal insulation performance tends to decrease over time. If the average cell diameter is excessively large, the initial thermal insulation performance tends to decrease. The average cell diameter is therefore preferably 40 μm or more and 300 μm or less, more preferably 50 μm or more and 170 μm

or less, and further preferably 60 $\mu$m or more and 130 $\mu$m or less.

If the compressive strength of the phenolic resin foam according to this embodiment is excessively low, for example, the following problems may arise: (1) deformation occurs during handling or use and cell walls are broken, and the thermal insulation performance tends to decrease over time; (2) when the expansion ratio is decreased in order to obtain required compressive strength during use, the thermal conductivity of the resin portion increases and the initial thermal conductivity decreases, and also the weight increases, which causes poor handleability. The density 30 kg/m$^3$ equivalent compressive strength of the phenolic resin foam is therefore preferably 9 N/cm$^2$ or more, more preferably 11 N/cm$^2$ or more, and further preferably 13 N/cm$^2$ or more. No upper limit is placed on the density 30 kg/m$^3$ equivalent compressive strength, yet the density 30 kg/m$^3$ equivalent compressive strength is typically 30 N/cm$^2$ or less.

Although compressive strength required of the phenolic resin foam can be obtained by decreasing the expansion ratio of the foam as mentioned above, if excellent compressive strength can be obtained without decreasing the expansion ratio, the raw material costs can be reduced, and also the weight can be reduced, with it being possible to reduce the load on workers during construction work. These advantages can be attained according to this embodiment.

The phenolic resin foam according to this embodiment preferably contains at least one of a poorly water-soluble metal hydroxide that releases water at 150 °C or more, and a poorly water-soluble phosphorus-based flame retardant with a decomposition temperature of 150 °C or more. The total content of the poorly water-soluble metal hydroxide that releases water at 150 °C or more and the poorly water-soluble phosphorus-based flame retardant with a decomposition temperature of 150 °C or more is preferably 0.1 mass% or more and 40 mass% or less, more preferably 0.5 mass% or more and 20 mass% or less, and particularly preferably 1 mass% or more and 10 mass% or less, relative to the phenolic resin foam. If the foam contains the poorly water-soluble metal hydroxide that releases water at 150 °C or more and/or the poorly water-soluble phosphorus-based flame retardant with a decomposition temperature of 150 °C or more, the initial thermal insulation performance tends to increase. Moreover, with use of the high-boiling hydrocarbon with a boiling point of 140 °C or more and 350 °C or less, a decrease in the flame retardance of the phenolic resin foam is prevented, and the flame retardance of the phenolic resin foam is improved. If the content of the metal hydroxide and/or the phosphorus-based flame retardant is excessively low, the initial thermal insulation performance improving effect and the flame retardance improving effect tend to be insufficient. If the content of the metal hydroxide and/or the phosphorus-based flame retardant is excessively high, the initial thermal conductivity tends to degrade, and the thermal insulation performance tends to decrease over time.

In this embodiment, the expression "poorly water-soluble" with regard to a compound such as a metal hydroxide or a phosphorus-based flame retardant denotes that the amount of the compound dissolved in water when 100 g of the compound is mixed into 100 g of distilled water at a temperature of 23 °C is 15 g or less.

Examples of poorly water-soluble metal hydroxides that release water at 150 °C or more include aluminum hydroxide, magnesium hydroxide, calcium hydroxide, and kaolin. A metal hydroxide having reactivity with the below-mentioned acid curing catalyst preferably has a coating on its surface, to reduce or eliminate the reactivity with the acid curing catalyst. Aluminum hydroxide is preferable, as it has no reactivity with the below-mentioned acid curing catalyst, and has a high initial thermal insulation performance improving effect and flame retardance improving effect.

The volume average particle diameter of the poorly water-soluble metal hydroxide that releases water at 150 °C or more is preferably 0.5 $\mu$m or more and 500 $\mu$m or less, further preferably 2 $\mu$m or more and 100 $\mu$m or less, and particularly preferably 5 $\mu$m or more and 50 $\mu$m or less. If the volume average particle diameter is excessively small, the initial thermal insulation performance improving effect tends to decrease. If the volume average particle diameter is excessively large, the flame retardance improving effect tends to decrease.

Examples of poorly water-soluble phosphorus-based flame retardants with a decomposition temperature of 150 °C or more include aromatic condensation ester, melamine phosphate, melamine polyphosphate, and ammonium polyphosphate. Ammonium polyphosphate is preferable, as it has a high initial thermal insulation performance improving effect and flame retardance improving effect.

The volume average particle diameter of the poorly water-soluble phosphorus-based flame retardant with a decomposition temperature of 150 °C or more is preferably 0.5 $\mu$m or more and 500 $\mu$m or less, further preferably 2 $\mu$m or more and 100 $\mu$m or less, and particularly preferably 5 $\mu$m or more and 50 $\mu$m or less. If the volume average particle diameter is excessively small, the initial thermal insulation performance improving effect tends to decrease. If the volume average particle diameter is excessively large, the flame retardance improving effect tends to decrease.

The type and content of each of the poorly water-soluble metal hydroxide that releases water at 150 °C or more and/or the poorly water-soluble phosphorus-based flame retardant with a decomposition temperature of 150 °C or more contained in the phenolic resin foam according to this embodiment can be qualitatively and quantitively determined by an analysis method such as X-ray fluorescence analysis, X-ray electron spectroscopy, atomic absorption spectroscopy, or Auger electron spectroscopy after carrying out typical pre-treatment as necessary.

The volume average particle diameter of the metal hydroxide and/or the phosphorus-based flame retardant dispersed in the phenolic resin foam can be determined by cutting the phenolic resin foam, magnifying under an optical microscope, identifying a finely dispersed substance from the composition by elemental analysis or the like of a small localized section through Auger electron spectroscopy or the like to confirm positions at which particles of the metal hydroxide and/or the phosphorus-based flame retardant are present, measuring the particle diameters of dispersed particles, and calculating the average. The content of the metal hydroxide and/or the phosphorus-based flame retardant can be determined from the occupation area of the particles determined as set forth above and the density of the composition.

In the case where the metal hydroxide and/or the phosphorus-based flame retardant is used in this embodiment, its volume average particle diameter may be determined using a laser diffraction light scattering-type particle diameter distribution measurement apparatus.

The phenolic resin foam according to this embodiment may contain an inorganic fine powder other than those mentioned above and/or an organic fine powder other than those mentioned above. Such fine powders preferably do not have reactivity with the below-mentioned acid curing catalyst.

If the phenolic resin foam contains an inorganic fine powder having no reactivity with the acid curing catalyst, the initial thermal insulation performance tends to improve. Examples of the inorganic fine powder are talc, silicon oxide, glass powder, and titanium oxide. If the amount of the inorganic fine powder contained is excessively high, the initial thermal conductivity tends to degrade, and the thermal insulation performance tends to decrease over time. The content of the inorganic fine powder not reacting with the acid curing catalyst is therefore preferably 0.1 mass% or more and 35 mass% or less, more preferably 1 mass% or more and 20 mass% or less, and particularly preferably 2 mass% or more and 15 mass% or less, relative to the phenolic resin foam.

The volume average particle diameter of the inorganic fine powder having no reactivity with the acid curing catalyst is preferably 0.5 $\mu$m or more and 500 $\mu$m or less, further preferably 2 $\mu$m or more and 100 $\mu$m or less, and particularly preferably 5 $\mu$m or more and 50 $\mu$m or less.

If the phenolic resin foam contains an inorganic fine powder such as metal hydroxide, metal oxide, metal carboxylate, or metal powder having reactivity with the below-mentioned acid curing catalyst, the thermal insulation performance tends to decrease over time. Examaples of the inorganic fine powder are metal hydroxide, metal oxide, metal carboxylate, or metal powder, such as calcium oxide, calcium carbonate, calcium hydrogen carbonate, or sodium carbonate. Therefore, the phenolic resin foam preferably does not contain an inorganic fine powder having reactivity with the acid curing catalyst.

If the phenolic resin foam contains an organic fine powder having no reactivity with the acid curing catalyst, the initial thermal insulation performance tends to improve. Examples of the organic fine powder are fluororesin fine powder, polypropylene fine powder, and phenolic resin foam powder. If the amount of the organic fine powder contained is excessively high, the thermal insulation performance tends to decrease over time. The content of the organic fine powder having no reactivity with the acid curing catalyst is therefore preferably 0.1 mass% or more and 35 mass% or less, more preferably 0.5 mass% or more and 20 mass% or less, and particularly preferably 1 mass% or more and 10 mass% or less, relative to the phenolic resin foam.

The volume average particle diameter of the organic fine powder having no reactivity with the acid curing catalyst is preferably, 0.5 $\mu$m or more and 2000 $\mu$m or less, further preferably 5 $\mu$m or more and 500 $\mu$m or less, and particularly preferably 10 $\mu$m or more and 200 $\mu$m or less.

If the phenolic resin foam contains an organic fine powder having reactivity with the acid curing catalyst, the thermal insulation performance tends to decrease over time. Example of the organic fine powder is basic ion exchange resin fine powder. Therefore, the phenolic resin foam preferably does not contain an organic fine powder having reactivity with the acid curing catalyst.

The composition, average particle diameter, and content of each of the fine powders dispersed in the phenolic resin foam according to this embodiment can be determined by a method of cutting the phenolic resin foam, magnifying under an optical microscope, determining positions at which the powder is present, identifying a finely dispersed substance from the composition by elemental analysis or the like of a small localized section through Auger electron spectroscopy or the like to confirm positions at which the fine powder is present, measuring the particle diameters of the dispersed fine powder, and calculating the volume average, and a method of calculating the content from the occupation area of the dispersed fine powder and the density of the composition.

In the case where the fine powder is used in this embodiment, its volume average particle diameter may be determined using a laser diffraction light scattering-type particle diameter distribution measurement apparatus.

The phenolic resin foam according to this embodiment may contain plasticizers and the like in a range in which foamability is not affected, in addition to the above-mentioned components. Here, the phenolic resin foam preferably does not contain any compound having reactivity with the acid curing catalyst or any compound that changes in quality by the acid curing catalyst. For example, if the phenolic resin foam contains a partial hydrolysis condensate of an organosilicon compound having a hydrolyzable group such as a partial hydrolysis condensate of organomethoxysilane, the thermal insulation performance tends to decrease over time. Therefore, the phenolic resin foam preferably does not contain an organosilicon compound having a hydrolyzable group.

In the phenolic resin foam according to this embodiment, the total of the content of the compound having reactivity with the acid curing catalyst and the content of the compound that changes in quality by the acid curing catalyst is preferably 0.5 mass% or less, more preferably 0.1 mass% or less, and particularly preferably 0.01 mass% or less, relative to the phenolic resin foam.

The compound having reactivity with the acid curing catalyst and the compound that changes in quality by the acid curing catalyst do not include phenolic resin, compounds having a phenolic skeleton, aldehydes, and nitrogen-containing compounds.

The phenolic resin used in the formation of the phenolic resin foam according to this embodiment can be yielded by polymerization of phenols and aldehydes. The starting mole ratio (phenols:aldehydes) of phenols and aldehydes used in polymerization is preferably in a range of 1:1 to 1:4.5, and more preferably in a range of 1:1.5 to 1:2.5.

Urea, dicyandiamide, melamine, and the like may be added to the phenolic resin as additives. In this embodiment, in the case where these additives are added, the term "phenolic resin" denotes the phenolic resin to which the additives have been added.

Examples of phenols preferably used in the synthesis of the phenolic resin in this embodiment include phenol, resorcinol, catechol, o-, m-, and p-cresol, xylenols, ethylphenols, and p-tert-butylphenol. Diphenols are also available.

Examples of aldehydes preferably used in this embodiment include formaldehyde, glyoxal, acetaldehyde, chloral, furfural, benzaldehyde, and paraformaldehyde.

The viscosity of the phenolic resin at 40 °C is preferably 200 MPa·s or more and 100,000 MPa·s or less, and more preferably 500 MPa·s or more and 50,000 MPa·s or less. The water content is preferably 2 mass% or more and 20 mass% or less.

The method of mixing the fine powder and the phenolic resin in the case of adding the above-mentioned inorganic and/or organic fine powder is not limited. For example, the mixing may be performed using a mixer having a pin mixer, or using a twin screw extruder or a kneader. The stage at which the fine powder is mixed with the phenolic resin is not limited. For example, the fine powder may be added to the raw materials at the time of the synthesis of the phenolic resin, or the fine powder may be added after the synthesis of the phenolic resin and before or after the addition of the additives. The fine powder may be added after adjusting the viscosity of the phenolic resin, or mixed together with a surfactant and/or a foaming agent. Here, since the overall viscosity increases as a result of adding the fine powder to the phenolic resin, when adding the fine powder to the phenolic resin before the viscosity adjustment, it is preferable to adjust the viscosity of the phenolic resin while estimating the viscosity based on water content and the like. The fine powder may be added to the foamable phenolic resin composition containing the phenolic resin, the surfactant, the hydrocarbon-containing foaming agent, and the acid curing catalyst. The fine powder may be mixed into the phenolic resin by a necessary amount. Alternatively, phenolic resin containing the fine powder at high concentration may be prepared beforehand as a masterbatch, and added to the phenolic resin by a necessary amount.

The viscosity of the phenolic resin containing the fine powder at 40 °C is preferably 200 MPa·s or more and 300,000 MPa·s or less, more preferably 100,000 MPa·s or less, and further preferably 50,000 MPa·s or less, in terms of the load on the apparatus due to an increase in pressure in the liquid passage piping of the foamable phenolic resin composition. The water content is preferably 2 mass% or more and 20 mass% or less.

The phenolic resin foam according to this embodiment is obtained from the foamable phenolic resin composition containing the phenolic resin, the surfactant, the high-boiling hydrocarbon with a boiling point of 140 °C or more and 350 °C or less, the foaming agent containing cyclopentane and optionally containing a hydrofluoroolefin having a carbon number of 3 or 4, and the acid curing catalyst. The surfactant, the high-boiling hydrocarbon with a boiling point of 140 °C or more and 350 °C or less, and the foaming agent may be added to the phenolic resin beforehand, or added to the phenolic resin simultaneously with the acid curing catalyst. It is preferable that the high-boiling hydrocarbon with a boiling point of 140 °C or more and 350 °C or less and the foaming agent containing cyclopentane and optionally containing a hydrofluoroolefin having a carbon number of 3 or 4 are, in a premixed state, added to the phenolic resin. In detail, in the below-mentioned method of producing a phenolic resin foam according to this embodiment, it is preferable to premix the high-boiling hydrocarbon and the foaming agent, prior to the mixing of the foamable phenolic resin composition containing the phenolic resin, the surfactant, the high-boiling hydrocarbon, the foaming agent, and the acid curing catalyst. Such premixing is expected to improve the dispersion state of the high-boiling hydrocarbon in the foamable phenolic resin composition and the distribution state of the high-boiling hydrocarbon in the phenolic resin foam, so that the thermal insulation performance and compressive strength of the obtained phenolic resin foam can be improved. The premixing may be performed using the same mixer as that used in the mixing of the foamable phenolic resin composition, or using a different mixer.

Examples of the surfactant used in this embodiment include surfactants that are commonly used in the production of phenolic resin foam. Of such surfactants, non-ionic surfactants are effective, and preferable examples include alkylene oxides that are a copolymer of ethylene oxide and propylene oxide, condensates of alkylene oxides and castor oil, condensates of alkylene oxides and alkylphenols such as nonylphenol or dodecylphenol, polyoxyethylene alkyl ethers, fatty acid esters such as polyoxyethylene fatty acid ester, silicone-based compounds such as ethylene oxide graft polydimethylsiloxane, and polyalcohols. One surfactant may be used individually, or two or more surfactants may be used in combination. Although the usage of the surfactant is not limited, the amount relative to 100 parts by mass of the phenolic resin is preferably in a range of 0.3 parts by mass or more and 10 parts by mass or less.

The acid curing catalyst used in this embodiment is not limited, but the use of an acid curing catalyst having high water content may cause, for example, the foam cell walls to break. Accordingly, the acid curing catalyst is preferably an anhydrous phosphoric acid or an anhydrous arylsulfonic acid. Examples of anhydrous arylsulfonic acids include toluenesulfonic acid, xylenesulfonic acid, phenolsulfonic acid, substituted phenolsulfonic acid, xylenolsulfonic acid, substituted xylenolsulfonic acid, dodecylbenzenesulfonic acid, benzenesulfonic acid, and naphthalenesulfonic acid. One acid curing catalyst may be used individually, or two or more acid curing catalysts may be used in combination. As a curing aid, resorcinol, cresol, saligenin (o-methylolphenol), p-methylolphenol, or the like may be added. The acid curing catalyst may be diluted with a solvent such as ethylene glycol or diethylene glycol.

Once the acid curing catalyst has been added to the phenolic resin, the acid curing catalyst is dispersed uniformly using a pin mixer or the like as promptly as possible.

The usage of the foaming agent differs depending on the viscosity and water content of the phenolic resin and the foaming and curing temperature, but the amount relative to 100 parts by mass of the phenolic resin is preferably 1 parts by mass or more and 25 parts by mass or less, and more preferably 3 parts by mass or more and 15 parts by mass or less.

The usage of the high-boiling hydrocarbon with a boiling point of 140 °C or more and 350 °C or less differs depending on the usage of the cyclopentane and the usage of the optional hydrofluoroolefin having a carbon number of 3 or 4, but the amount relative to 100 parts by mass of the phenolic resin is preferably 0.01 parts by mass or more and 2 parts by mass or less, more preferably 0.05 parts by mass or more and 1.5 parts by mass or less, and particularly preferably 0.1 parts by mass or more and 1 parts by mass or less.

The usage of the acid curing catalyst differs depending on the type. In the case of using an anhydrous phosphoric acid, the amount relative to 100 parts by mass of the phenolic resin is preferably 3 parts by mass or more and 30 parts by mass or less, and more preferably 5 parts by mass or more and 25 parts by mass or less. In the case of using a mixture of 60 mass% of paratoluenesulfonic acid monohydrate and 40 mass% of diethylene glycol, the amount relative to 100 parts by mass of the phenolic resin is preferably 3 parts by mass or more and 30 parts by mass or less, and more preferably 5 parts by mass or more and 20 parts by mass or less.

(Method of producing phenolic resin foam)

The phenolic resin foam according to this embodiment is formed by mixing the above-mentioned foamable phenolic resin composition using a mixer, discharging the foamable phenolic resin composition from a distribution section, and then foaming and curing the foamable phenolic resin composition.

If the pressure of the distribution section in the mixer when discharging the foamable phenolic resin composition from the distribution section in the mixer is excessively low, an increase of voids, a decrease in thermal insulation performance, and a decrease in long-term thermal insulation performance tend to occur. If the pressure of the distribution section in the mixer is excessively high, high pressure resistant equipment is needed, which causes an increase in equipment cost. Besides, the homogeneity of the foam tends to decrease. The pressure of the distribution section in the mixer is therefore preferably 0.3 MPa or more and 10 MPa or less, and more preferably 0.5 MPa or more and 3 MPa or less. The pressure of the distribution section in the mixer is adjustable by a method of controlling the temperature of the mixer and/or the distribution section, the diameter of the tip of the distribution section, the diameter or length of piping provided downstream of the distribution section, and the like.

In this embodiment, the foamable phenolic resin composition charged into the mixer preferably contains moisture. Moisture contributes to foaming, too. Accordingly, if the water content is excessively low, the expansion ratio cannot be increased, and the initial thermal insulation performance may decrease. If the water content is excessively high, the closed cell ratio tends to decrease, and the long-term thermal insulation performance and the compressive strength may decrease. It is therefore preferable to control the water content in the phenolic resin charged into the mixer. The water content in the phenolic resin charged into the mixer is preferably adjusted to 2 mass% or more and 20 mass% or less. The water content is more preferably 2.5 mass% or more and 13 mass% or less, and particularly preferably 3 mass% or more and 10 mass% or less.

In this embodiment, the foamable phenolic resin composition discharged from the distribution section in the mixer can be formed platelike by applying pressure from above and below (upper surface direction and lower surface direction), for example by a method using a double conveyor, a method using a metal roll or a steel plate, or a method using a combination of a plurality of such members. The method using a double conveyor is preferable, as the obtained platelike foam has good smoothness. For example in the case of using a double conveyor, a platelike phenolic resin foam can be obtained by the following method: After discharging the foamable phenolic resin composition from the distribution section in the mixer onto a continuously moving lower surface material, the foamable phenolic resin composition is continuously guided in the double conveyor, while covering it with a continuously moving upper surface material.

Subsequently, while heating the foamable phenolic resin composition, pressure is applied to the foamable phenolic resin composition from above and below to adjust it to predetermined thickness, thus foaming and curing the foamable phenolic resin composition to form the foamable phenolic resin composition platelike. If the temperature in the double conveyor in the process of foaming and curing the foamable phenolic resin composition is excessively low, the expansion ratio cannot be increased, and the initial thermal insulation performance may decrease. If the temperature is excessively high, the closed cell ratio tends to decrease, and the long-term thermal insulation performance and the compressive strength may decrease. The temperature in the double conveyor is therefore preferably 60 °C or more and 100 °C or less, more preferably 65 °C or more and 98 °C or less, and further preferably 70 °C or more and 95 °C or less.

If a coefficient R calculated according to the following formula (4) from the water content P (units: mass%) in the phenolic resin charged into the mixer and the temperature Q (units: °C) in the double conveyor in the process of foaming and curing in this embodiment is excessively high, the content of the hydrocarbon having a carbon number of 6 or less per a space volume of $22.4 \times 10^{-3}$ m$^3$ (22.4 L) in the phenolic resin foam (in the case where the hydrofluoroolefin having a carbon number of 3 or 4 is contained, the total of the content of the hydrocarbon having a carbon number of 6 or less and the content Z of the hydrofluoroolefin having a carbon number of 3 or 4) may decrease, and the long-term thermal insulation performance may decrease. If the coefficient R is excessively low, the content of the hydrocarbon having a carbon number of 6 or less per a space volume of $22.4 \times 10^{-3}$ m$^3$ (22.4 L) in the phenolic resin foam (in the case where the hydrofluoroolefin having a carbon number of 3 or 4 is contained, the total of the content of the hydrocarbon having a carbon number of 6 or less and the content Z of the hydrofluoroolefin having a carbon number of 3 or 4) may increase, and the initial thermal insulation performance may decrease. The coefficient R is therefore preferably 20 or more and 36 or less, more preferably 21.5 or more and 33 or less, and particularly preferably 23 or more and 29 or less.

$$R = P + 0.2286Q \qquad (4).$$

The platelike phenolic resin foam in this embodiment may be post cured. The post curing temperature is preferably 40 °C or more and 130 °C or less, and more preferably 60 °C or more and 110 °C or less. The post curing may be performed in one stage, or performed in a plurality of stages while changing the curing temperature depending on the degree of curing.

EXAMPLES

The following provides a more specific description of the disclosed techniques based on examples and comparative examples, although the disclosed techniques are not limited to these examples.

The compositions, structures, and properties of phenolic resins and phenolic resin foams in the examples and comparative examples were measured and evaluated as follows.

(1) Foam density

The foam density is a value obtained by cutting out a 20 cm square specimen of each phenolic resin foam, removing surface materials and siding materials of the specimen, and measuring the weight and the apparent volume. The measurement was performed in accordance with JIS K 7222.

(2) Average cell diameter

The average cell diameter was measured by the following method with reference to JIS K 6402.

Each phenolic resin foam was cut in parallel with front and rear surfaces thereof at substantially the center of the phenolic resin foam in the thickness direction. A micrograph of the cut surface was obtained at $\times$50 magnification, and then four straight lines of 9 cm in length (equivalent to 1,800 $\mu$m in the actual foam cross-section) were drawn on the micrograph and an average value of the number of cells crossed by each of these straight lines was calculated. A value obtained by dividing 1,800 $\mu$m by the average value of the number of cells that were crossed was taken to be the average cell diameter.

(3) Closed cell ratio

The closed cell ratio was measured by the following method with reference to ASTM D 2856-94 (1998) A.

An approximately 25 mm cube specimen was cut out from a central portion, in the thickness direction, of each phenolic resin foam. In a situation in which the phenolic resin foam was thin and it was not possible to obtain a specimen having a uniform thickness of 25 mm, a cuboid specimen having a width and a length of about 25 mm and the same thickness as the foam was cut out from the foam, and a specimen having a uniform thickness obtained by slicing approximately 1 mm from each of the upper and lower surfaces having surface materials of the cuboid specimen is used. The length of each side of the specimen was measured using a Vernier caliper to determine the apparent volume (VI: $cm^3$), and the weight of the specimen (W: to four significant figures; g) was measured. Subsequently, the closed space volume (V2: $cm^3$) of the specimen was measured using an air pycnometer (Tokyo Science Co., Ltd., product name: MODEL1000) in accordance with Procedure A in ASTM D 2856 94. The cell diameter (t: cm) was measured by the above-mentioned measurement method in "(2) Average cell diameter". The surface area (A: $cm^2$) of the specimen was determined from the measured side lengths. The open volume (VA: $cm^3$) of cut cells at the surface of the specimen was calculated from t and A, according to a formula: VA = (A × t)/1.14. The density of the solid phenolic resin was taken to be 1.3 g/mL, and the volume (VS: $cm^3$) of a solid portion constituting cell walls contained in the specimen was calculated according to a formula: VS = specimen weight (W)/1.3.

The closed cell ratio was calculated according to the following formula (11):

$$\text{closed cell ratio } (\%) = [(V2 - VS)/(V1 - VA - VS)] \times 100 \qquad (11)$$

This measurement was conducted six times for foam samples obtained under the same production conditions, and the average value was taken to be a representative value of the corresponding production condition samples.

For each phenolic resin foam containing a solid such as an inorganic material different in density from the phenolic resin, the foam was ground to a state in which no closed space was included, and the density of the solid-containing phenolic resin calculated by measuring the weight and also measuring the volume using an air pycnometer (Tokyo Science Co., Ltd., product name: MODEL1000) was taken to be the density of the solid phenolic resin.

(4) Density 30 kg/$m^3$ equivalent compressive strength

A specimen of 100 mm in length and 100 mm in width was cut out from each phenolic resin foam laminate, and surface materials were removed from the specimen. The resultant specimen was cured in an atmosphere with a temperature of 23 °C and a relative humidity of 50 % until the difference between two weighed values taken at intervals of 24 hr was no greater than 0.1 %. The dimensions and weight of the cured specimen were measured, to measure the foam density (kg/$m^3$). Moreover, the 10 % compressive strength (N/$cm^2$) was measured in accordance with JIS K 7220.

The density 30 kg/$m^3$ equivalent compressive strength was calculated according to the following formula (12) using the foam density and the 10 % compressive strength:

$$\text{density 30 kg/m}^3 \text{ equivalent compressive strength } (N/cm^2) = (10$$
$$\% \text{ compressive strength/foam density}) \times 30 \qquad (12).$$

(5) Thermal conductivity in 10 °C environment and thermal conductivity in 23 °C environment

The thermal conductivity at 10 °C and 23 °C was measured by the following method in accordance with JIS A 1412-2: 1999.

An approximately 600 mm square specimen was cut out from each phenolic resin foam sample. The specimen was placed in an atmosphere with a temperature of 23 ± 1 °C and a humidity of 50 ± 2 %, and the change over time in weight of the specimen was measured at 24 hr intervals. Conditioning was carried out until the change in weight over 24 hr was no greater than 0.2 mass%. The conditioned specimen was introduced into a thermal conductivity measuring apparatus set up in the same environment. In the case where the thermal conductivity measuring apparatus had not been placed in the room having the specimen placed therein and controlled to 23 ± 1 °C with a humidity of 50 ± 2 %, the phenolic resin foam was promptly put into a polyethylene bag in an atmosphere of 23 ± 1 °C with a humidity of 50 ± 2 %, and the bag was closed. The phenolic resin foam was then taken out of the bag within 1 hr, and subjected to thermal conductivity measurement within 10 min.

The thermal conductivity was measured by peeling off the surface materials in a manner such that the foam portion was not damaged and then using a measurement device with a single specimen-symmetric configuration (produced by Eko Instruments, product name: HC-074/600) under conditions of a 0 °C low temperature plate and a 20 °C high temperature plate for the thermal conductivity in the 10 °C environment and a 13 °C low temperature plate and a 33 °C high temperature plate for the thermal conductivity in the 23 °C environment.

(6) Thermal conductivity after accelerated testing

The thermal conductivity after the following accelerated testing assuming a lapse of 25 years was measured, with reference to EN13166.

Each phenolic resin foam sample was cut to approximately 600 mm square. A foam having gas permeable surface materials was set as a specimen in a state of having the surface materials. A foam having gas impermeable surface materials was set as a specimen in a state where the surface materials were peeled off so as not to damage the foam portion, in order to evaluate the property of the foam itself. Each specimen was then subjected to accelerated testing.

The 600 mm square specimen was left for 14 $\pm$ 0.05 days in a circulation oven adjusted to a temperature of 110 $\pm$ 2 °C, to perform accelerated testing.

Following this, thermal conductivity measurement in the 10 °C environment and the 23 °C environment was conducted in accordance with the measurement method in "(5) Thermal conductivity in 10 °C environment and thermal conductivity in 23 °C environment".

(7) Water content in phenolic resin and phenolic resin foam

(A) Water content in phenolic resin

Each phenolic resin raw material was dissolved into dehydrated methanol (produced by Kanto Chemical Co., Inc.) whose water content had been measured, in a range of 3 mass% to 7 mass%. The water content in the dehydrated methanol was subtracted from the water content in the solution, to determine the water content in the phenolic resin raw material. The water content of the phenolic resin raw material was calculated from the measured water content. The measurement was performed using a Karl Fischer moisture titrator (produced by Kyoto Electronics Manufacturing Co., Ltd., MKC-510). In the water content measurement, HYDRANAL-Composite 5K produced by Sigma-Aldrich was used as a Karl Fischer reagent, and HAYASHI-Solvent CE dehydration solvent (for ketone) produced by Hayashi Pure Chemical Ind., Ltd. was used for Karl Fischer titration. Moreover, AQUAMICRON Standard Water/Methanol (moisture 2 mg) produced by Mitsubishi Chemical Corporation was used for Karl Fischer reagent titer measurement. The water content was measured using method 1 set in the apparatus, and the Karl Fischer reagent titer was determined using method 5. The proportion of the resultant water content to the mass of the phenolic resin raw material was calculated, and taken to be the water content of the phenolic resin raw material.

(B) Water content in phenolic resin foam

The water content in each phenolic resin foam was measured using a Karl Fischer moisture titrator having a boat-type moisture vaporizing device. Heating was performed at 110 °C in the moisture vaporizing device, and the vaporizing moisture was measured.

For a phenolic resin foam containing a solid that decomposes by high temperature heating and generates moisture such as a hydrate, heating was performed at a low temperature not higher than the decomposition temperature to vaporize contained moisture, and the water content was measured.

(8) Composition ratio of substance with a boiling point of -100 °C or more and 81 °C or less contained in foam

A sample of 10 g of each phenolic resin foam from which surface materials had been peeled off and a metal file were placed in a 10 L container (product name: Tedlar Bag), the container was tightly sealed, and 5 L of nitrogen was injected therein. The sample was scraped and finely ground with use of the file through the Tedlar Bag. Next, the sample was left for 10 minutes in an oven adjusted to 81 °C. A 100 $\mu$L sample of gas generated in the Tedlar Bag was collected and measured by GC/MS, to analyze the types and composition ratios of the generated gas components.

Separately, the detection sensitivities of the generated gas components were each measured, and the composition ratio was calculated from the detected region area and the detection sensitivity of each gas component obtained by GC/MS. The ratio of cyclopentane and a hydrocarbon with a boiling point of -50 °C or more and 5 °C or less in the hydrocarbon having a carbon number of 6 or less was then determined.

(9) Content of hydrocarbon having a carbon number of 6 or less, content of hydrofluoroolefin having a carbon number of 3 or 4, and content of halogenated saturated hydrocarbon in foam

Each phenolic resin foam sample was cut to approximately 100 mm square, and six specimens were prepared. In addition, six sealable heat-resistant reclosable bags (hereafter simply referred to as "reclosable bags") were prepared, and the weight of each bag was measured with a precision balance. Each specimen was left for 24 ± 0.5 hr in a circulation oven adjusted to 70 °C to cause contained moisture to scatter, and then promptly put in a separate reclosable bag. The reclosable bag was sealed, and cooled to room temperature. After cooling to room temperature, the specimen was taken out of each reclosable bag, and the surface materials of the specimen were promptly peeled off, and the weight (W1) of each specimen was measured with a precision balance. Moreover, the length of each side was measured using a vernier caliper, and the volume (V) of the specimen was calculated. After this, each specimen was put back into the corresponding reclosable bag, and the reclosable bag was sealed again while leaving a partial opening. The reclosable bag was placed between board faces of a hydraulic press at room temperature, and gradually compressed to a pressure of approximately 200 N/cm$^2$ by the hydraulic press, to destroy the cells of the specimen. For three specimens, a partial sample of each specimen was collected, and the water content (WS1) was measured by the above-mentioned phenolic resin foam water content measurement method. Following this, the specimen-containing reclosable bag with a partial opening was left for 30 ± 5 min in a circulation oven adjusted to 81 °C, and immediately the gas in the bag was discharged while keeping the powder within the bag. The bag was then sealed, and cooled to room temperature. After cooling to room temperature, the weight of the specimen-containing reclosable bag that had not been subjected to the measurement of the water content (WS1) was measured with a precision balance, and the weight of the reclosable bag was subtracted from the measured weight, to measure the weight (W2) excluding volatile components. Simultaneously, a partial sample was collected from the bags of the three specimens that had been subjected to the measurement of the water content (WS1), and the water content (WS2) after being left for 30 ± 5 min in a circulation oven adjusted to 81 °C was measured in the same manner.

Next, the water content difference (WS1 - WS2) was subtracted from the difference between W1 and W2 (W1 - W2). From the volume (V) of the specimen, the density of the solid phenolic resin was set to 1.3 g/cm$^3$. The air buoyancy weight (WF) calculated using the volume (space volume in the foam) from which the resin volume calculated from W2 was subtracted and the density of air (0.00119 g/mL) was added, to obtain the volatile component weight (W3). Thus, W3 was calculated according to the following formula (13):

$$W3 = (W1 - W2) - (WS1 - WS2) + WF \qquad (13).$$

After this, W3 was multiplied by each of the ratio in the gas components of the hydrocarbon having a carbon number of 6 or less, the ratio in the gas components of the hydrofluoroolefin having a carbon number of 3 or 4, and the ratio in the gas components of the halogenated saturated hydrocarbon measured by the measurement method (8), to calculate the corresponding content weight (W4, W4', W4"). For a phenolic resin foam containing a solid such as an inorganic material different in density from the phenolic resin, the phenolic resin foam was ground to a state in which no closed space was included, and the density of the solid-containing phenolic resin calculated by measuring the weight and also measuring the volume using an air pycnometer (Tokyo Science Co., Ltd., product name: MODEL1000) was taken to be the density of the solid phenolic resin.

The content of the hydrocarbon having a carbon number of 6 or less, the content of the hydrofluoroolefin having a carbon number of 3 or 4, and the content of the halogenated saturated hydrocarbon (mol/22.4 × 10$^{-3}$ m$^3$) in the foam were calculated using W4, W4', W4" and the measurement amounts and molecular weights of the respective substances measured by the measurement method (8) in a space volume of 22.4 × 10$^{-3}$ m$^3$ in the foam. The content of the cyclopentane (mol/22.4 × 10$^{-3}$ m$^3$) in the foam was calculated in the same manner.

(10) Content of high-boiling hydrocarbon with a boiling point of 140 °C or more and 350 °C or less

(i) Ground product extraction treatment in heptane

0.25 g of each phenolic resin foam sample cut and divided to approximately 5 mm square and not including surface materials and 10 ml of heptane (Wako Pure Chemical Industries, Ltd., high-performance liquid chromatography use) were mixed, and a treatment of extracting the high-boiling hydrocarbon in the foam into heptane was performed while grinding the foam by the following procedure.

The phenolic resin foam sample was collected from a 10 mm thickness portion of a central portion, in the thickness direction, of the foam, and the extraction treatment was started within 10 min after cutting the foam.

In this treatment, the following operation was performed in order to blend the cut and divided phenolic resin foam with the heptane and also carry out pregrinding. 25 glass balls of ULTRA-TURRAX® (ULTRA-TURRAX is a registered trademark in Japan, other countries, or both) Tube Drive control dedicated member BMT-50-G (a set of a ball mill-type grinding tube and glass balls (approximately 6 mm in diameter)) produced by IKA Corporation, 0.25 g of the phenolic resin foam sample cut and divided to approximately 5 mm square, and 10 ml of heptane (Wako Pure Chemical Industries, Ltd., high-performance liquid chromatography use) were put in a cylindrical glass container having an inner volume of approximately 100 ml and sealable with a screw-type lid, and the lid was closed to seal the cylindrical glass container. The container was then held by hand so that the cylinder was in the horizontal direction, and shaken in the cylinder length direction of the container with a shaking width of 20 ± 5 cm and a shaking speed of 80 ± 20 times/min for 5 ± 0.5 min. One reciprocating shaking/grinding operation was counted as 1 time.

Following this, the whole contents (preground foam, heptane, and glass balls) in the cylindrical glass container were transferred to the sealable ball mill-type grinding tube of BMT-50-G, and the grinding tube was sealed. The grinding tube was set in ULTRA-TURRAX® (ULTRA-TURRAX is a registered trademark in Japan, other countries, or both) Tube Drive control produced by IKA Corporation, and subjected to grinding at 4000 rpm for 5 min ± 10 sec. The cylindrical glass container emptied by removing the contents was promptly closed with the lid after the removal, and left to stand in an atmosphere of approximately 23 °C.

After the grinding ended, the whole contents (ground foam, heptane, and glass balls) in the grinding tube were transferred to the cylindrical glass container sealed after the use, and left to stand in an atmosphere of approximately 23 °C for 16 hr ± 15 min. The cylindrical glass container containing the contents was shaken by hand 10 times at a shaking speed of 80 ± 20 times/min. After this, the whole contents in the cylindrical glass container were promptly filtrated using a hydrophobic PTFE membrane filter (ADVANTEC Corporation, T050A047A) with a pore size of 0.5 $\mu$m, to remove the phenolic resin foam and the glass balls and obtain a filtrate (heptane extraction liquid).

Regarding the grinding state of the foam in this treatment, the foam may be ground so that the volume average particle diameter of the primary particles of the foam is about 30 $\mu$m or less.

Part of the filtrate was dried on an infrared spectroscopic analysis ZnSe crystal plate (Pier Optics Co., Ltd.), and whether or not impurities other than the hydrocarbon component were contained in the heptane was analyzed by infrared spectroscopic analysis. The infrared spectrometer and the cumulative number are, for example, an infrared spectrometer Spectrum One (PerkinElmer Co., Ltd.), and a cumulative number of 4.

The filtrate confirmed as not containing impurities other than the hydrocarbon component adversely affecting the quantification of the high-boiling hydrocarbon by infrared spectroscopic analysis was subjected to the below-mentioned gas chromatographic analysis without applying aftertreatment, and all peaks detected by gas chromatograph were taken to be the high-boiling hydrocarbon to integrate the detection peak area of each temperature region.

In this extraction treatment, there are cases where an oligomer component contained in the phenolic resin is included in the filtrate and detected by infrared spectroscopic analysis. In gas chromatographic analysis, however, the holding time of the oligomer significantly differs from that of the high-boiling hydrocarbon, and so the quantification of the high-boiling hydrocarbon by gas chromatographic analysis is not affected. However, in the case where infrared spectroscopic analysis reveals that there is a possibility of the presence of impurities affecting the quantification of the high-boiling hydrocarbon in the filtrate, the following pretreatment is performed prior to the extraction treatment.

(ii) Example of pretreatment

0.25 g of the phenolic resin foam sample not including surface materials and cut and divided to approximately 5 mm square, 10 ml of distilled water (Kanto Chemical Co., Inc., high-performance liquid chromatography use), and 10 ml of methanol (Kanto Chemical Co., Inc., high-performance liquid chromatography use) were mixed, and a treatment of removing a hydrophilic component contained in the phenolic resin foam was performed while grinding the foam by the following procedure. The equipment and the phenolic resin foam sample collection method used in this pretreatment are the same as those in the above-mentioned extraction treatment (i).

25 glass balls of BMT-50-G, 0.5 g of the phenolic resin foam sample cut and divided to approximately 5 mm square, 10 ml of distilled water (Kanto Chemical Co., Inc., high-performance liquid chromatography use), and 10 ml of methanol (Kanto Chemical Co., Inc., high-performance liquid chromatography use) were put into a ball mill-type grinding tube, and the grinding tube was sealed. The grinding tube was set in ULTRA-TURRAX® (ULTRA-TURRAX is a registered trademark in Japan, other countries, or both) Tube Drive control produced by IKA Corporation, and subjected to grinding at 5800 rpm for 10 min. After this, the whole contents (mixed solution of ground foam, glass balls, distilled water, and methanol) in the grinding tube were left to stand in the sealed container in an atmosphere of approximately 23 °C for 24 ± 0.5 hr.

Subsequently, the contents from which the glass balls had been removed were subjected to centrifugation by a centrifuge separator at 15000 revolutions for 30 min, and solid was isolated by filtration using a hydrophilic-treated PTFE membrane filter (ADVANTEC Corporation, H050A047A) with a pore size of 0.5 $\mu$m. In this treatment, any solid remaining in the centrifuge tube was washed out several times with 20 ml of methanol (Kanto Chemical Co., Inc., high-performance liquid chromatography use), and submitted to filtration.

The total solid after filtration was subjected to the above-mentioned extraction treatment (i).

(iii) Separation by refining

In the case where impurities affecting the quantification of the high-boiling hydrocarbon with a boiling point of 140 °C or more and 350 °C or less by gas chromatographic analysis are present even after the pretreatment (ii), refining is performed by a refining method that can remove impurities such as liquid chromatography, and then gas chromatographic analysis is performed. In the refining, in the case where the amount of the high-boiling hydrocarbon with a boiling point of 140 °C or more and 350 °C or less decreases due to refining loss or the like, a standard substance (high-boiling hydrocarbon) close to an average boiling point of high-boiling hydrocarbon with a boiling point of 140 °C or more and 350 °C or less contained in heptane (extraction liquid) is dissolved in heptane (Wako Pure Chemical Industries, Ltd., high-performance liquid chromatography use). The same refining treatment is then performed, the refining loss rate is calculated, and correction is made.

(iv) Method of peak qualification of high-boiling hydrocarbon and quantification of the high-boiling hydrocarbon with a boiling point of 140 °C or more and 350 °C or less by gas chromatographic analysis

Since the holding time increases as the boiling point of the high-boiling hydrocarbon increases in gas chromatographic analysis, gas chromatographic analysis was performed under measurement conditions enabling analysis of high-boiling hydrocarbon with a boiling point of 140 °C or more and 350 °C or less.

As a gas chromatograph structure, a heat-resistant capillary column having a non-polar liquid phase was used as a column, and a hydrogen flame ionization detector (FID) was used as a detector. As the measurement conditions, a high injection port temperature was set, and the column temperature was increased from low temperature to high temperature, to perform analysis. Specific examples of the gas chromatographic analysis conditions are described below.

The gas chromatograph was Agilent 7890 produced by Agilent Technologies, and the detector was a hydrogen flame ionization detector (FID). The column was a capillary column with product name: Equity-1 produced by Sigma-Aldrich Co. LLC., with an inner diameter of 0.25 mm, liquid-phase polydimethylsiloxane, a film thickness of 0.25 $\mu$m, and a length of 30 m. The carrier gas was helium, with a flow rate of 1 ml/min. The injection port temperature was 350 °C, and the injection method was a split method (1:10). The injection amount of the filtrate obtained by the extraction treatment (i) was 1 $\mu$l. The column temperature was adjusted to 40 °C and, upon the injection, the temperature was increased to 300 °C with a heating rate of 5 °C/min. The temperature of the detector (FID) was 350 °C.

The boiling point of the substance detected by gas chromatographic analysis was determined as follows: A high-boiling hydrocarbon with a known boiling point was subjected to gas chromatographic analysis under the same measurement conditions. From the holding time up to the detection by the gas chromatograph, the correlation between the boiling point and the holding time was determined, and the boiling point was calculated from the correlation and the holding time up to the detection of the high-boiling hydrocarbon in the filtrate. As the high-boiling hydrocarbon solution with the known boiling point in this method, a 1000 ppm heptane (Wako Pure Chemical Industries, Ltd., high-performance liquid chromatography use) solution of normal octane (boiling point: 125.7 °C, Kanto Chemical Co., Inc. first grade), normal nonane (boiling point: 150.8 °C, Kanto Chemical Co., Inc. special grade), normal decane (boiling point: 174.1 °C, Kanto Chemical Co., Inc. special grade), normal dodecane (boiling point: 216.3 °C, Kanto Chemical Co., Inc. special grade), normal hexadecane (boiling point: 287 °C, Kanto Chemical Co., Inc. special grade), eicosane (boiling point: 344 °C, Tokyo Chemical Industry Co., Ltd. GC standard substance), pentacosane (boiling point: 404 °C, Tokyo Chemical Industry Co., Ltd. GC standard substance), and triacontane (boiling point: 450 °C, Tokyo Chemical Industry Co., Ltd. grade GR) was used. The holding time up to the detection by the gas chromatograph for each high-boiling hydrocarbon was measured for the above-mentioned determination.

The amount (wt%) of the high-boiling hydrocarbon in each temperature region in the filtrate was calculated as follows: A heptane (Wako Pure Chemical Industries, Ltd., high-performance liquid chromatography use) solution different in the content of normal dodecane (boiling point: 216.3 °C, Kanto Chemical Co., Inc. special grade) was analyzed by gas chromatograph under the same conditions as the analysis of heptane (extraction liquid), and a calibration curve obtained from the normal dodecane content in the heptane (solution) and the detection peak area was used to calculate the amount.

In the case where the high-boiling hydrocarbon extraction weight was low and the detection peak area was very low, the high-boiling hydrocarbon extraction weight from the foam was measured by, for example, increasing the foam ratio to the heptane or performing analysis after concentrating the heptane (extraction liquid) as appropriate.

From the high-boiling hydrocarbon extraction weight per the foam weight and the density of the foam, the high-boiling hydrocarbon extraction weight (g) per a space volume of $22.4 \times 10^{-3}$ m$^3$ in the foam was calculated.

In the calculation of the extraction weight, typically the solid phenolic resin density was set to 1.3 g/cm$^3$. For each phenolic resin foam containing a solid such as an inorganic material different in density from the phenolic resin, however, the foam was ground to a state in which no closed space was included, and the density of the solid-containing phenolic resin calculated by measuring the weight and also measuring the volume using an air pycnometer (Tokyo Science Co., Ltd., product name: MODEL1000) was taken to be the density of the solid phenolic resin.

(11) Viscosity of phenolic resin

The viscosity of the phenolic resin was measured after stabilizing it at 40 °C for 3 min, using a rotational viscometer (R-100 produced by Toki Sangyo Co., Ltd., rotor: 3° × R-14). The viscosity of the foamable phenolic resin composition in platelike formation was measured after a lapse of 2 min at 40 °C using the viscometer, in order to make evaluation with as little influence of viscosity increase due to resin curing as possible.

(12) Volume average particle diameter of powder

The volume average particle diameter of the powder was measured after treating it by ultrasound for 1 min in order to uniformly disperse the powder in water, using a laser diffraction light scattering-type particle diameter distribution measurement apparatus (produced by Nikkiso Co., Ltd., Microtrac HRA; 9320-X100).

(Example 1) (Reference)

A reactor was charged with 3500 kg of a 52 mass% formaldehyde aqueous solution and 2510 kg of 99 mass% phenol, and the charged material was stirred using a rotating propeller stirrer. The liquid temperature inside the reactor was adjusted to 40 °C using a temperature controller. Next, while adding a 50 mass% sodium hydroxide aqueous solution, heating was performed to cause reaction. At a stage at which the Ostwald viscosity reached 60 centistokes (measured value at 25°C), the reaction liquid was cooled, and 570 kg of urea (corresponding to 15 mol% of the charged amount of formaldehyde) was added thereto. Thereafter, the reaction liquid was cooled to 30 °C, and a 50 mass% aqueous solution of para-toluenesulfonic acid monohydrate was added to neutralize the pH to 6.4.

The resultant reaction liquid was dehydrated at 60 °C. The water content of the reaction solution after the dehydration was measured to be 3.5 mass%.

100 parts by mass of the reaction solution after the dehydration was mixed with 2.5 parts by mass of an ethylene oxide-propylene oxide block copolymer (produced by BASF SE, Pluronic F-127) as a surfactant. The mixture was taken to be a phenolic resin A.

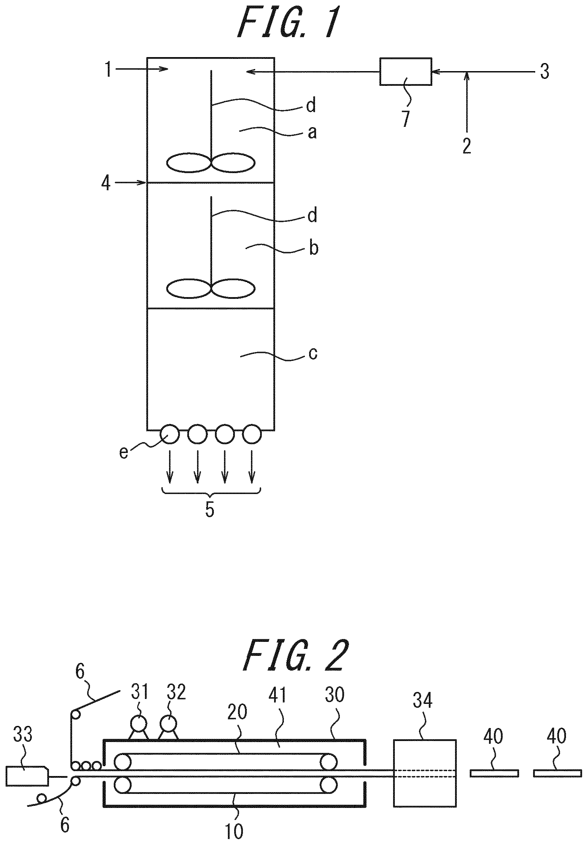

100 parts by mass of the phenolic resin A was mixed with 1.4 parts by mass of normal dodecane (boiling point: 216 °C, melting point: -10 °C) (hereafter simply referred to as "nDD"), 7.5 parts by mass of cyclopentane as a foaming agent, and 11 parts by mass of a mixture of 80 mass% of xylene sulfonic acid and 20 mass% of diethylene glycol as an acid curing catalyst. The resultant foamable phenolic resin composition was supplied to a mixing head adjusted to 25 °C, and supplied onto a moving lower surface material through multi-port distribution piping. Here, the nDD and the foaming agent were uniformly mixed by a static mixer before the supply to the mixer, and then supplied to the mixer. The mixer used is illustrated in FIG. 1. This mixer is obtained by increasing the size of the mixer disclosed in JP H10-225993 A and providing, upstream of the mixer body, a static mixer for uniformly mixing the high-boiling hydrocarbon and the foaming agent. In detail, the mixer has introduction ports for phenolic resin 1 obtained by adding a surfactant to phenolic resin and a mixture of a high-boiling hydrocarbon 2 and a foaming agent 3 on an upper side surface, and an introduction port for a curing catalyst 4 on a side surface near the center of a stirring section in which a rotor d performs stirring. Downstream of the stirring section leads to a nozzle e for discharging a foamable phenolic resin composition 5. Thus, the mixer is made up of a mixing section a up to the catalyst introduction port, a mixing section b from the catalyst introduction port to the stirring end section, and a distribution section c from the stirring end section to the discharge nozzle. The distribution section c has a plurality of nozzles e at the tip, and is designed to uniformly distribute the mixed foamable phenolic resin composition. In the distribution section c, a distribution section temperature sensor and a distribution section pressure sensor are set so that the temperature and the pressure in the system can be measured (not illustrated). Further, the mixing sections and the distribution section each include a temperature-control jacket for enabling temperature control. The temperature measured by the distribution section temperature sensor was 43.8 °C, and the pressure measured by the distribution section pressure sensor was 0.73 MPa.

As the surface materials, a nonwoven fabric made of polyester (Spunbond E05030 produced by Asahi Kasei Corporation, Fibers and Textiles SBU, weight per unit area: 30 $g/m^2$, thickness: 0.15 mm) was used.

The foamable phenolic resin composition supplied onto the lower surface material, while being covered with the upper surface material, was transferred to a slat-type double conveyor in a state of being sandwiched between the upper and lower surface materials, and cured in a residence time of 20 min. The slat-type double conveyor used is illustrated in FIG. 2. This conveyor is the slat-type double conveyor disclosed in JP 2000-218635 A. A conveyor temperature sensor is set at the center between upper and lower plates of the upper slat conveyor at the position at which the foamable phenolic resin composition passes after 3 min from the discharge, to enable measurement of the double conveyor temperature in the foaming and curing process (not illustrated). The temperature measured by the conveyor temperature sensor was 78 °C. In FIG. 2, reference sign 6 is a surface material, 10 is a lower slat conveyor, 20 is an upper slat conveyor, 30 is an insulating material, 31 is an air supply fan, 32 is an exhaust fan, 33 is a mixer, 34 is a cutting apparatus, 40 is a panel-like phenolic resin foam, and 41 is a forming apparatus. The foamable phenolic resin composition covered with the upper and lower surface materials was formed platelike, by appropriately applying pressure by the slat-type double conveyor from above and below via the surface materials.

The resultant foam for which curing had not been completed was then heated in an oven of 110 °C for 2 hr, to obtain a phenolic resin foam with a thickness of 48.3 mm.

(Example 2)

A phenolic resin foam with a thickness of 49.5 mm was obtained in the same way as Example 1, except that the amount of nDD was 1.1 parts by mass and the amount of cyclopentane as the foaming agent was 7.3 parts by mass relative to 100 parts by mass of the phenolic resin, and the double conveyor temperature measured by the conveyor temperature sensor was changed to 81 °C. The temperature measured by the distribution section temperature sensor was 43.2 °C, and the pressure measured by the distribution section pressure sensor was 0.73 MPa.

(Example 3)

A phenolic resin foam with a thickness of 51.5 mm was obtained in the same way as Example 1, except that the amount of nDD was 1.1 parts by mass and the amount of cyclopentane as the foaming agent was 7.1 parts by mass relative to 100 parts by mass of the phenolic resin same as that in Example 1 except that the water content was 5.7 mass% with only the reaction solution dehydration condition being different, and the double conveyor temperature measured by the conveyor temperature sensor was changed to 83 °C. The temperature measured by the distribution section temperature sensor was 42.6 °C, and the pressure measured by the distribution section pressure sensor was 0.71 MPa.

(Example 4)

A phenolic resin foam with a thickness of 50.2 mm was obtained in the same way as Example 3, except that the amount of nDD was 0.7 parts by mass and the amount of cyclopentane as the foaming agent was 6.0 parts by mass relative to 100 parts by mass of the phenolic resin, and the double conveyor temperature measured by the conveyor temperature sensor was changed to 85 °C. The temperature measured by the distribution section temperature sensor was 42.5 °C, and the pressure measured by the distribution section pressure sensor was 0.75 MPa.

(Example 5) (Reference)

A phenolic resin foam with a thickness of 48.3 mm was obtained in the same way as Example 4, except that the amount of nDD was 1.6 parts by mass and 5.7 parts by mass of a mixture of 93 mol% of cyclopentane and 7 mol% of isobutane was used as a foaming agent relative to 100 parts by mass of the phenolic resin. The temperature measured by the distribution section temperature sensor was 42.8 °C, and the pressure measured by the distribution section pressure sensor was 0.80 MPa.

(Example 6)

A phenolic resin foam with a thickness of 48.5 mm was obtained in the same way as Example 5, except that the amount of nDD was changed to 1.2 parts by mass relative to 100 parts by mass of the phenolic resin. The temperature measured by the distribution section temperature sensor was 42.7 °C, and the pressure measured by the distribution section pressure sensor was 0.78 MPa.

(Example 7)

A phenolic resin foam with a thickness of 48.9 mm was obtained in the same way as Example 5, except that the amount of nDD was changed to 0.9 parts by mass relative to 100 parts by mass of the phenolic resin. The temperature measured by the distribution section temperature sensor was 42.3 °C, and the pressure measured by the distribution section pressure sensor was 0.76 MPa.

(Example 8)

A phenolic resin foam with a thickness of 49.2 mm was obtained in the same way as Example 5, except that the amount of nDD was changed to 0.6 parts by mass relative to 100 parts by mass of the phenolic resin. The temperature measured by the distribution section temperature sensor was 42.3 °C, and the pressure measured by the distribution section pressure sensor was 0.76 MPa.

(Example 9)

A phenolic resin foam with a thickness of 50.1 mm was obtained in the same way as Example 5, except that the amount of nDD was changed to 0.17 parts by mass relative to 100 parts by mass of the phenolic resin. The temperature measured by the distribution section temperature sensor was 42.0 °C, and the pressure measured by the distribution section pressure sensor was 0.75 MPa.

(Example 10)

A phenolic resin foam with a thickness of 51.2 mm was obtained in the same way as Example 5, except that the amount of nDD was changed to 0.12 parts by mass relative to 100 parts by mass of the phenolic resin. The temperature measured by the distribution section temperature sensor was 41.8 °C, and the pressure measured by the distribution section pressure sensor was 0.77 MPa.

(Example 11) (Reference)

A phenolic resin foam with a thickness of 51.8 mm was obtained in the same way as Example 5, except that the amount of nDD was changed to 0.08 parts by mass relative to 100 parts by mass of the phenolic resin. The temperature measured by the distribution section temperature sensor was 41.7 °C, and the pressure measured by the distribution section pressure sensor was 0.78 MPa.

(Example 12)

A phenolic resin foam with a thickness of 48.7 mm was obtained in the same way as Example 4, except that the amount of nDD was 0.6 parts by mass and 5.6 parts by mass of a mixture of 87 mol% of cyclopentane and 13 mol% of isobutane was used as a foaming agent relative to 100 parts by mass of the phenolic resin. The temperature measured by the distribution section temperature sensor was 41.8 °C, and the pressure measured by the distribution section pressure sensor was 0.82 MPa.

(Example 13)

A phenolic resin foam with a thickness of 56.7 mm was obtained in the same way as Example 1, except that the amount of nDD was 0.6 parts by mass and 4.1 parts by mass of a mixture of 85 mol% of cyclopentane and 15 mol% of isobutane was used as a foaming agent relative to 100 parts by mass of the phenolic resin same as that in Example 1 except that the water content was 11.0 mass% with only the reaction solution dehydration condition being different, and the double conveyor temperature measured by the conveyor temperature sensor was changed to 99 °C. The temperature measured by the distribution section temperature sensor was 40.7 °C, and the pressure measured by the distribution section pressure sensor was 0.71 MPa.

(Example 14)

A phenolic resin foam with a thickness of 54.6 mm was obtained in the same way as Example 1, except that the amount of nDD was 0.6 parts by mass and 4.6 parts by mass of a mixture of 85 mol% of cyclopentane and 15 mol% of isobutane was used as a foaming agent relative to 100 parts by mass of the phenolic resin same as that in Example 1 except that the water content was 8.5 mass% with only the reaction solution dehydration condition being different, and the double conveyor temperature measured by the conveyor temperature sensor was changed to 96 °C. The temperature measured by the distribution section temperature sensor was 41.4 °C, and the pressure measured by the distribution section pressure sensor was 0.77 MPa.

(Example 15)

A phenolic resin foam with a thickness of 50.3 mm was obtained in the same way as Example 4, except that the amount of nDD was 0.6 parts by mass and 4.7 parts by mass of a mixture of 85 mol% of cyclopentane and 15 mol% of isobutane was used as a foaming agent relative to 100 parts by mass of the phenolic resin, and the double conveyor temperature measured by the conveyor temperature sensor was changed to 90 °C. The temperature measured by the distribution section temperature sensor was 41.8 °C, and the pressure measured by the distribution section pressure sensor was 0.83 MPa.

(Example 16) (Reference)

A phenolic resin foam with a thickness of 48.2 mm was obtained in the same way as Example 4, except that the amount of nDD was 1.5 parts by mass and 5.6 parts by mass of a mixture of 80 mol% of cyclopentane and 20 mol% of isobutane was used as a foaming agent relative to 100 parts by mass of the phenolic resin. The temperature measured by the distribution section temperature sensor was 42.1 °C, and the pressure measured by the distribution section pressure sensor was 0.81 MPa.

(Example 17)

A phenolic resin foam with a thickness of 48.8 mm was obtained in the same way as Example 16, except that the amount of nDD was changed to 1.2 parts by mass relative to 100 parts by mass of the phenolic resin. The temperature measured by the distribution section temperature sensor was 42.2 °C, and the pressure measured by the distribution section pressure sensor was 0.80 MPa.

(Example 18)

A phenolic resin foam with a thickness of 49.8 mm was obtained in the same way as Example 16, except that the amount of nDD was changed to 0.9 parts by mass relative to 100 parts by mass of the phenolic resin. The temperature measured by the distribution section temperature sensor was 41.4 °C, and the pressure measured by the distribution section pressure sensor was 0.83 MPa.

(Example 19)

A phenolic resin foam with a thickness of 50.6 mm was obtained in the same way as Example 16, except that the amount of nDD was changed to 0.16 parts by mass relative to 100 parts by mass of the phenolic resin. The temperature measured by the distribution section temperature sensor was 40.7 °C, and the pressure measured by the distribution section pressure sensor was 0.83 MPa.

(Example 20)

A phenolic resin foam with a thickness of 51.3 mm was obtained in the same way as Example 16, except that the amount of nDD was changed to 0.12 parts by mass relative to 100 parts by mass of the phenolic resin. The temperature measured by the distribution section temperature sensor was 40.6 °C, and the pressure measured by the distribution section pressure sensor was 0.84 MPa.

(Example 21)

A phenolic resin foam with a thickness of 51.6 mm was obtained in the same way as Example 16, except that the amount of nDD was changed to 0.07 parts by mass relative to 100 parts by mass of the phenolic resin. The temperature measured by the distribution section temperature sensor was 40.5 °C, and the pressure measured by the distribution section pressure sensor was 0.86 MPa.

(Example 22)

A phenolic resin foam with a thickness of 51.2 mm was obtained in the same way as Example 16, except that 0.3 parts by mass of normal nonane (boiling point: 151 °C, melting point: -51 °C) was used instead of nDD relative to 100 parts by mass of the phenolic resin. The temperature measured by the distribution section temperature sensor was 40.7 °C, and the pressure measured by the distribution section pressure sensor was 0.85 MPa.

(Example 23)

A phenolic resin foam with a thickness of 51.1 mm was obtained in the same way as Example 16, except that 0.3 parts by mass of normal decane (boiling point: 172 °C, melting point: -30 °C) was used instead of nDD relative to 100 parts by mass of the phenolic resin. The temperature measured by the distribution section temperature sensor was 40.6 °C, and the pressure measured by the distribution section pressure sensor was 0.85 MPa.

(Example 24) (Reference)

A phenolic resin foam with a thickness of 49.3 mm was obtained in the same way as Example 16, except that 0.3 parts by mass of a saturated hydrocarbon mixture (produced by Sankyo Chemical Co., Ltd., Metal Cleaner 2000) with a freezing point of -10 °C or less and a boiling point of 150 °C to 220 °C was used instead of nDD relative to 100 parts by mass of the phenolic resin. The temperature measured by the distribution section temperature sensor was 40.6 °C, and the pressure measured by the distribution section pressure sensor was 0.85 MPa.

(Example 25)

A phenolic resin foam with a thickness of 51.2 mm was obtained in the same way as Example 16, except that 0.3 parts by mass of normal tetradecane (produced by JX Nippon Oil & Energy Corporation, TS Paraffin TS 4, melting point: 5.3 °C, boiling point: 245 °C to 248 °C) was used instead of nDD relative to 100 parts by mass of the phenolic resin. The temperature measured by the distribution section temperature sensor was 40.4 °C, and the pressure measured by the distribution section pressure sensor was 0.85 MPa.

(Example 26) (Reference)

A phenolic resin foam with a thickness of 51.0 mm was obtained in the same way as Example 16, except that 0.3 parts by mass of a saturated hydrocarbon mixture (produced by Sankyo Chemical Co. Ltd., Metal Cleaner 3000) with a freezing point of -10 °C or less and a boiling point of 240 °C to 260 °C was used instead of nDD relative to 100 parts by mass of the phenolic resin. The temperature measured by the distribution section temperature sensor was 40.7 °C, and the pressure measured by the distribution section pressure sensor was 0.85 MPa.

(Example 27)

A phenolic resin foam with a thickness of 50.4 mm was obtained in the same way as Example 16, except that 0.3 parts by mass of normal hexadecane (produced by JX Nippon Oil & Energy Corporation, TS Paraffin TS 6, melting point: 17 °C, boiling point: 276 °C to 308 °C) was used instead of nDD relative to 100 parts by mass of the phenolic resin. The temperature measured by the distribution section temperature sensor was 41.0 °C, and the pressure measured by the distribution section pressure sensor was 0.85 MPa.

(Example 28)

A phenolic resin foam with a thickness of 49.1 mm was obtained in the same way as Example 16, except that 0.3 parts by mass of normal octadecane (produced by JX Nippon Oil & Energy Corporation, TS Paraffin TS 8, melting point: 26 °C, boiling point: 300 °C to 332 °C) was used instead of nDD relative to 100 parts by mass of the phenolic resin. The temperature measured by the distribution section temperature sensor was 40.6 °C, and the pressure measured by the distribution section pressure sensor was 0.85 MPa.

(Example 29) (Reference)

A phenolic resin foam with a thickness of 48.7 mm was obtained in the same way as Example 16, except that 0.6 parts by mass of highly refined paraffinic oil Cosmo White P 60 produced by Cosmo Oil Lubricants Co., Ltd. was used instead of nDD relative to 100 parts by mass of the phenolic resin. The temperature measured by the distribution section temperature sensor was 40.3 °C, and the pressure measured by the distribution section pressure sensor was 0.85 MPa.

(Example 30)

A phenolic resin foam with a thickness of 47.8 mm was obtained in the same way as Example 16, except that the amount of nDD was changed to 0.5 parts by mass relative to 105 parts by mass of aluminum hydroxide-mixed phenolic resin obtained by mixing 5 parts by mass of aluminum hydroxide (produced by Almorix Ltd., B325, volume average particle diameter: 27 μm with 100 parts by mass of the phenolic resin using an extruder. The temperature measured by the distribution section temperature sensor was 40.3 °C, and the pressure measured by the distribution section pressure sensor was 0.85 MPa.

(Example 31)

A phenolic resin foam with a thickness of 50.8 mm was obtained in the same way as Example 4, except that the amount of nDD was 0.5 parts by mass and 5.6 parts by mass of a mixture of 78 mol% of cyclopentane and 22 mol% of isobutane was used as a foaming agent relative to 100 parts by mass of the phenolic resin. The temperature measured by the distribution section temperature sensor was 41.1 °C, and the pressure measured by the distribution section pressure sensor was 0.85 MPa.

(Example 32) (Reference)

A phenolic resin foam with a thickness of 49.7 mm was obtained in the same way as Example 4, except that the amount of nDD was 1.7 parts by mass and 5.4 parts by mass of a mixture of 72 mol% of cyclopentane and 28 mol% of isobutane was used as a foaming agent relative to 100 parts by mass of the phenolic resin. The temperature measured by the distribution section temperature sensor was 41.8 °C, and the pressure measured by the distribution section pressure sensor was 0.90 MPa.

(Example 33)

A phenolic resin foam with a thickness of 49.8 mm was obtained in the same way as Example 32, except that the amount of nDD was changed to 1.3 parts by mass relative to 100 parts by mass of the phenolic resin. The temperature measured by the distribution section temperature sensor was 41.6 °C, and the pressure measured by the distribution section pressure sensor was 0.90 MPa.

(Example 34)

A phenolic resin foam with a thickness of 50.2 mm was obtained in the same way as Example 32, except that the amount of nDD was changed to 0.9 parts by mass relative to 100 parts by mass of the phenolic resin. The temperature measured by the distribution section temperature sensor was 41.2 °C, and the pressure measured by the distribution section pressure sensor was 0.90 MPa.

(Example 35)

A phenolic resin foam with a thickness of 50.4 mm was obtained in the same way as Example 32, except that the amount of nDD was changed to 0.16 parts by mass relative to 100 parts by mass of the phenolic resin. The temperature measured by the distribution section temperature sensor was 41.0 °C, and the pressure measured by the distribution section pressure sensor was 0.90 MPa.

(Example 36)

A phenolic resin foam with a thickness of 50.1 mm was obtained in the same way as Example 32, except that the amount of nDD was changed to 0.11 parts by mass relative to 100 parts by mass of the phenolic resin. The temperature measured by the distribution section temperature sensor was 41.1 °C, and the pressure measured by the distribution section pressure sensor was 0.90 MPa.

(Example 37) (Reference)

A phenolic resin foam with a thickness of 50.1 mm was obtained in the same way as Example 32, except that the amount of nDD was changed to 0.07 parts by mass relative to 100 parts by mass of the phenolic resin. The temperature measured by the distribution section temperature sensor was 41.0 °C, and the pressure measured by the distribution section pressure sensor was 0.90 MPa.

(Example 38)

A phenolic resin foam with a thickness of 49.6 mm was obtained in the same way as Example 4, except that the amount of nDD was 0.6 parts by mass and 5.4 parts by mass of a mixture of 62 mol% of cyclopentane and 38 mol% of isobutane was used as a foaming agent relative to 100 parts by mass of the phenolic resin. The temperature measured by the distribution section temperature sensor was 40.7 °C, and the pressure measured by the distribution section pressure sensor was 1.00 MPa.

(Example 39)

A phenolic resin foam with a thickness of 49.7 mm was obtained in the same way as Example 4, except that the amount of nDD was 1.3 parts by mass and 5.6 parts by mass of a mixture of 84 mol% of cyclopentane, 3 mol% of hydrofluoroolefin HFO1233zd (trans-1-chloro-3,3,3-trifluoropropene, produced by Honeywell, product name: Solstice® (Solstice is a registered trademark in Japan, other countries, or both) LBA) (hereafter simply referred to as HFO1233zd), and 13 mol% of isobutane was used as a foaming agent relative to 100 parts by mass of the phenolic resin. The temperature measured by the distribution section temperature sensor was 41.3 °C, and the pressure measured by the distribution section pressure sensor was 0.81 MPa.

(Example 40) (Reference)

A phenolic resin foam with a thickness of 49.3 mm was obtained in the same way as Example 4, except that the amount of nDD was 1.7 parts by mass and 5.8 parts by mass of a mixture of 81 mol% of cyclopentane, 8 mol% of HFO1233zd, and 11 mol% of isobutane was used as a foaming agent relative to 100 parts by mass of the phenolic resin. The temperature measured by the distribution section temperature sensor was 41.9 °C, and the pressure measured by the distribution section pressure sensor was 0.80 MPa.

(Example 41)

A phenolic resin foam with a thickness of 50.6 mm was obtained in the same way as Example 4, except that the amount of nDD was 1.3 parts by mass and 8.9 parts by mass of a mixture of 57 mol% of cyclopentane, 40 mol% of HFO1233zd, and 3 mol% of isobutane was used as a foaming agent relative to 100 parts by mass of the phenolic resin, and the double conveyor temperature measured by the conveyor temperature sensor was changed to 80 °C. The temperature measured by the distribution section temperature sensor was 39.7 °C, and the pressure measured by the distribution section pressure sensor was 0.70 MPa.

(Example 42) (Reference)

A phenolic resin foam with a thickness of 51.3 mm was obtained in the same way as Example 4, except that the amount of nDD was 1.8 parts by mass and 10.6 parts by mass of a mixture of 46 mol% of cyclopentane, 52 mol% of HFO1233zd, and 2 mol% of isobutane was used as a foaming agent relative to 100 parts by mass of the phenolic resin, and the double conveyor temperature measured by the conveyor temperature sensor was changed to 78 °C. The temperature measured by the distribution section temperature sensor was 39.4 °C, and the pressure measured by the distribution section pressure sensor was 0.65 MPa.

(Example 43)

A phenolic resin foam with a thickness of 50.3 mm was obtained in the same way as Example 4, except that the amount of nDD was 0.6 parts by mass and 6.8 parts by mass of a mixture of 80 mol% of cyclopentane, 15 mol% of hydrofluoroolefin HFO1336mzz (cis-1,1,1,4,4,4-hexafluoro-2-butene, produced by DuPont, product name: Formacel® (Formacel is a registered trademark in Japan, other countries, or both) 1100), and 5 mol% of isobutane was used as a foaming agent relative to 100 parts by mass of the phenolic resin. The temperature measured by the distribution section temperature sensor was 41.0 °C, and the pressure measured by the distribution section pressure sensor was 0.79 MPa.

(Example 44)

A phenolic resin foam with a thickness of 49.2 mm was obtained in the same way as Example 4, except that the amount of nDD was 0.9 parts by mass and 5.9 parts by mass of a mixture of 94 mol% of cyclopentane and 6 mol% of isopropyl chloride was used as a foaming agent relative to 100 parts by mass of the phenolic resin. The temperature measured by the distribution section temperature sensor was 41.9 °C, and the pressure measured by the distribution section pressure sensor was 0.69 MPa.

(Example 45)

A phenolic resin foam with a thickness of 50.4 mm was obtained in the same way as Example 4, except that the amount of nDD was 0.3 parts by mass and 5.9 parts by mass of a mixture of 75 mol% of cyclopentane, 20 mol% of isopropyl chloride, and 5 mol% of isobutane was used as a foaming agent relative to 100 parts by mass of the phenolic resin. The temperature measured by the distribution section temperature sensor was 39.7 °C, and the pressure measured by the distribution section pressure sensor was 0.66 MPa.

(Example 46)

A phenolic resin foam with a thickness of 50.6 mm was obtained in the same way as Example 4, except that the amount of nDD was 0.5 parts by mass and 6.5 parts by mass of a mixture of 75 mol% of cyclopentane, 10 mol% of HFO1233zd, 10 mol% of isopropyl chloride, and 5 mol% of isobutane was used as a foaming agent relative to 100 parts by mass of the phenolic resin. The temperature measured by the distribution section temperature sensor was 40.1 °C, and the pressure measured by the distribution section pressure sensor was 0.67 MPa.

(Example 47)

A phenolic resin foam with a thickness of 48.1 mm was obtained in the same way as Example 4, except that the same mixer as that in Example 1 except having, on the same circumference as a nozzle for supplying a mixture of high-boiling hydrocarbon and a foaming agent, another nozzle to allow high-boiling hydrocarbon and a foaming agent to be supplied separately was used, the amount of nDD was 1.2 parts by mass and 5.6 parts by mass of a mixture of 80 mol% of cyclopentane and 20 mol% of isobutane was used as a foaming agent relative to 100 parts by mass of the phenolic resin, and the nDD and the foaming agent were supplied to the mixer separately (i.e. the foaming agent and the high-boiling hydrocarbon were not premixed). The temperature measured by the distribution section temperature sensor was 42.4 °C, and the pressure measured by the distribution section pressure sensor was 0.81 MPa. The composition of the foamable phenolic resin composition is the same as that in Example 17.

(Example 48)

A phenolic resin foam with a thickness of 50.2 mm was obtained in the same way as Example 47, except that the amount of nDD was changed to 0.16 parts by mass relative to 100 parts by mass of the phenolic resin. The temperature measured by the distribution section temperature sensor was 41.0 °C, and the pressure measured by the distribution section pressure sensor was 0.84 MPa. The composition of the foamable phenolic resin composition is the same as that in Example 19.

(Comparative Example 1)

A phenolic resin foam with a thickness of 50.8 mm was obtained in the same way as Example 4, except that the amount of nDD was changed to 0 parts by mass (i.e. normal dodecane was not blended). The temperature measured by the distribution section temperature sensor was 41.5 °C, and the pressure measured by the distribution section pressure sensor was 0.80 MPa.

(Comparative Example 2)

A phenolic resin foam with a thickness of 50.7 mm was obtained in the same way as Example 4, except that 6.0 parts by mass of normal pentane was used as a foaming agent relative to 100 parts by mass of the phenolic resin (i.e. cyclopentane was not used), and the amount of nDD was changed to 0.3 parts by mass relative to 100 parts by mass of the phenolic resin. The temperature measured by the distribution section temperature sensor was 41.4 °C, and the pressure measured by the distribution section pressure sensor was 0.83 MPa.

(Comparative Example 3)

A phenolic resin foam with a thickness of 50.6 mm was obtained in the same way as Example 4, except that 6.0 parts by mass of isopentane was used as a foaming agent relative to 100 parts by mass of the phenolic resin (i.e.

cyclopentane was not used), and the amount of nDD was changed to 0.3 parts by mass relative to 100 parts by mass of the phenolic resin. The temperature measured by the distribution section temperature sensor was 41.2 °C, and the pressure measured by the distribution section pressure sensor was 0.86 MPa.

(Comparative Example 4)

A phenolic resin foam with a thickness of 49.3 mm was obtained in the same way as Example 4, except that the amount of nDD was 0.05 parts by mass and 5.7 parts by mass of a mixture of 85 mol% of cyclopentane and 15 mol% of isobutane was used as a foaming agent relative to 100 parts by mass of the phenolic resin. The temperature measured by the distribution section temperature sensor was 42.1 °C, and the pressure measured by the distribution section pressure sensor was 0.85 MPa.

(Comparative Example 5)

A phenolic resin foam with a thickness of 48.7 mm was obtained in the same way as Comparative Example 4, except that the amount of nDD was changed to 2.5 parts by mass relative to 100 parts by mass of the phenolic resin. The temperature measured by the distribution section temperature sensor was 40.6 °C, and the pressure measured by the distribution section pressure sensor was 0.78 MPa.

(Comparative Example 6)

A phenolic resin foam with a thickness of 50.1 mm was obtained in the same way as Comparative Example 4, except that 0.6 parts by mass of normal octane (boiling point: 126 °C, melting point: -60 °C) was used instead of nDD relative to 100 parts by mass of the phenolic resin. The temperature measured by the distribution section temperature sensor was 42.3 °C, and the pressure measured by the distribution section pressure sensor was 0.81 MPa.

(Comparative Example 7)

A phenolic resin foam with a thickness of 49.7 mm was obtained in the same way as Comparative Example 4, except that 0.8 parts by mass of highly refined paraffinic oil Cosmo White P 260 produced by Cosmo Oil Lubricants Co., Ltd. was used instead of nDD relative to 100 parts by mass of the phenolic resin. The temperature measured by the distribution section temperature sensor was 42.3 °C, and the pressure measured by the distribution section pressure sensor was 0.81 MPa.

(Comparative Example 8)

A phenolic resin foam with a thickness of 53.5 mm was obtained in the same way as Comparative Example 4, except that the amount of nDD was 0.3 parts by mass and 3.1 parts by mass of a foaming agent was used relative to 100 parts by mass of the phenolic resin same as that in Example 1 except that the water content was 15.0 mass% with only the reaction solution dehydration condition being different, and the double conveyor temperature measured by the conveyor temperature sensor was changed to 101 °C. The temperature measured by the distribution section temperature sensor was 39.5 °C, and the pressure measured by the distribution section pressure sensor was 0.75 MPa.

(Comparative Example 9)

A phenolic resin foam with a thickness of 46.7 mm was obtained in the same way as Comparative Example 4, except that the amount of nDD was 0.3 parts by mass and 10.5 parts by mass of a foaming agent was used relative to 100 parts by mass of the phenolic resin same as that in Example 1 except that the water content was 3.5 mass% with only the reaction solution dehydration condition being different, the double conveyor temperature measured by the conveyor temperature sensor was changed to 68 °C, and the residence time in the slat-type double conveyor was changed to 35 min. The temperature measured by the distribution section temperature sensor was 41.3 °C, and the pressure measured by the distribution section pressure sensor was 0.89 MPa.

(Comparative Example 10)

A phenolic resin foam with a thickness of 50.7 mm was obtained in the same way as Comparative Example 4, except that the amount of nDD was 0.3 parts by mass and 5.4 parts by mass of a mixture of 40 mol% of cyclopentane and 60 mol% of isobutane was used as a foaming agent relative to 100 parts by mass of the phenolic resin. The temperature measured by the distribution section temperature sensor was 40.7 °C, and the pressure measured by the distribution section pressure sensor was 1.08 MPa.

For these Examples and Comparative Examples, Tables 1 and 2 list the water content in the mixer charged phenolic resin, the content of cyclopentane, the content of hydrofluoroolefin (HFO) having a carbon number of 3 or 4, the total content of hydrocarbon having a carbon number of 6 or less and hydrofluoroolefin having a carbon number of 3 or 4, the content of hydrocarbon having a carbon number of 6 or less, and the content of halogenated saturated hydrocarbon per a space volume of $22.4 \times 10^{-3}$ m$^3$ in the resultant phenolic resin foam, the ratio of cyclopentane and the ratio of hydrocarbon with a boiling point of -50 °C to 5 °C in hydrocarbon having a carbon number of 6 or less, and the boiling point average value of hydrocarbon having a carbon number of 6 or less, Tables 3 and 4 list the extraction amount of high-boiling hydrocarbon into heptane per a space volume of $22.4 \times 10^{-3}$ m$^3$ in the resultant phenolic resin foam, and Tables 5 and 6 list the property and thermal conductivity evaluation results of the resultant phenolic resin foam.

[Table 1]

| | | water content in phenolic resin (wt%) | Temperature of double conveyor (°C) | Coefficient R | Pressure of distribution section (Mpa) | Content of cyclopentane (mol/22.4×10⁻³m³) | Content of HFO (mol/22.4×10⁻³m³) | Content of HFO+hydrocarbon with C6 or less (mol/22.4×10⁻³m³) | Content of halogenated saturated hydrocarbon (mol/22.4×10⁻³m³) | Content of hydrocarbon with C6 or less (mol/22.4×10⁻³m³) | Content ratio in hydrocarbon with C6 or less | | Boiling point average value of C6 hydrocarbon with C6 or less (°C) |
|---|---|---|---|---|---|---|---|---|---|---|---|---|---|
| | | | | | | | | | | | Ratio of cyclopentane (mol%) | Ratio of hydrocarbon with boiling point of -50 to 5°C (mol%) | |
| Example 1 | Cyclopentane | 3.5 | 78 | 21.3 | 0.73 | 0.840 | 0.000 | 0.840 | 0.000 | 0.840 | 100 | 0 | 49.3 |
| Example 2 | Cyclopentane | 3.5 | 81 | 22.0 | 0.73 | 0.745 | 0.000 | 0.745 | 0.000 | 0.745 | 100 | 0 | 49.3 |
| Example 3 | Cyclopentane | 5.7 | 83 | 24.7 | 0.71 | 0.686 | 0.000 | 0.687 | 0.000 | 0.687 | 100 | 0 | 49.3 |
| Example 4 | Cyclopentane | 5.7 | 85 | 25.1 | 0.75 | 0.614 | 0.000 | 0.614 | 0.000 | 0.614 | 100 | 0 | 49.3 |
| Example 5 | Cyclopentane/isobutane | 5.7 | 85 | 25.1 | 0.80 | 0.567 | 0.000 | 0.603 | 0.000 | 0.608 | 93.3 | 6.7 | 45.2 |
| Example 6 | Cyclopentane/isobutane | 5.7 | 85 | 25.1 | 0.78 | 0.562 | 0.000 | 0.603 | 0.000 | 0.603 | 93.2 | 6.8 | 45.2 |
| Example 7 | Cyclopentane/isobutane | 5.7 | 85 | 25.1 | 0.76 | 0.556 | 0.000 | 0.596 | 0.000 | 0.596 | 93.3 | 6.7 | 45.2 |
| Example 8 | Cyclopentane/isobutane | 5.7 | 85 | 25.1 | 0.76 | 0.566 | 0.000 | 0.607 | 0.000 | 0.607 | 93.2 | 6.8 | 45.2 |
| Example 9 | Cyclopentane/isobutane | 5.7 | 85 | 25.1 | 0.75 | 0.543 | 0.000 | 0.582 | 0.000 | 0.582 | 93.3 | 6.7 | 45.2 |

| | | water content in phenolic resin (wt%) | Temperature of double conveyor (°C) | Coefficient R | Pressure of distribution section (Mpa) | Content of cyclopentane (mol/ 22.4×10⁻³m³) | Content of HFO (mol/ 22.4×10⁻³m³) | Content of HFO +hydrocarbon with C6 or less (mol/ 22.4×10⁻³m³) | Content of halogenated saturated hydrocarbon (mol/ 22.4×10⁻³m³) | Content of hydrocarbon with C6 or less (mol/ 22.4×10⁻³m³) | Content ratio in hydrocarbon with C6 or less | | Boiling point average value of hydrocarbon with C6 or less (°C) |
|---|---|---|---|---|---|---|---|---|---|---|---|---|---|
| | | | | | | | | | | | Ratio of cyclopentane (mol%) | Ratio of hydrocarbon with boiling point of -50 to 5°C (mol%) | |
| Example 10 | Cyclopentane/ isobutane | 5.7 | 85 | 25.1 | 0.77 | 0.539 | 0.000 | 0.578 | 0.000 | 0.578 | 93.3 | 6.7 | 45.2 |
| Example 11 | Cyclopentane/ isobutane | 5.7 | 85 | 25.1 | 0.78 | 0.532 | 0.000 | 0.570 | 0.000 | 0.570 | 93.3 | 6.7 | 45.2 |
| Example 12 | Cyclopentane/ isobutane | 5.7 | 85 | 25.1 | 0.82 | 0.535 | 0.000 | 0.613 | 0.000 | 0.613 | 87.3 | 12.7 | 41.5 |
| Example 13 | Cyclopentane/ isobutane | 11.0 | 99 | 33.6 | 0.71 | 0.272 | 0.000 | 0.319 | 0.000 | 0.319 | 85.3 | 14.7 | 40.3 |
| Example 14 | Cyclopentane/ isobutane | 8.5 | 96 | 30.4 | 0.77 | 0.325 | 0.000 | 0379 | 0.000 | 0.379 | 85.8 | 14.2 | 40.6 |
| Example 15 | Cyclopentane/ isobutane | 5.7 | 90 | 26.3 | 0.83 | 0.377 | 0.000 | 0.441 | 0.000 | 0.441 | 85.5 | 14.5 | 40.4 |
| Example 16 | Cyclopentane/ isobutane | 5.7 | 85 | 25.1 | 0.81 | 0.487 | 0.000 | 0.609 | 0.000 | 0.609 | 80.0 | 20.0 | 37.1 |
| Example 17 | Cyclopentane/ isobutane | 5.7 | 85 | 25.1 | 0.80 | 0.491 | 0.000 | 0.613 | 0.000 | 0.613 | 80.1 | 19.9 | 37.2 |

EP 3 395 871 B1

| | | water content in phenolic resin (wt%) | Temperature of double conveyor (°C) | Coefficient R | Pressure of distribution section (Mpa) | Content of cyclopentane (mol/22.4×10⁻³m³) | Content of HFO (mol/22.4×10⁻³m³) | Content of HFO +hydrocarbon with C6 or less (mol/22.4×10⁻³m³) | Content of halogenated saturated hydrocarbon (mol/22.4×10⁻³m³) | Content of hydrocarbon with C6 or less (mol/22.4×10⁻³m³) | Content ratio in hydrocarbon with C6 or less | | Boiling point average value of hydrocarbon with C6 or less (°C) |
|---|---|---|---|---|---|---|---|---|---|---|---|---|---|
| | | | | | | | | | | | Ratio of cyclopentane (mol%) | Ratio of hydrocarbon with boiling point of -50 to 5°C (mol%) | |
| Example 18 | Isopentane/ isobutane | 5.7 | 85 | 25.1 | 0.83 | 0.481 | 0.000 | 0.602 | 0.000 | 0.602 | 79.9 | 20.1 | 37.0 |
| Example 19 | Cyclopentane isobutane | 5.7 | 85 | 25.1 | 0.83 | 0.476 | 0.000 | 0.596 | 0.000 | 0.596 | 79.9 | 20.1 | 37.0 |
| Example 20 | Cyclopentane/ isobutane | 5.7 | 85 | 25.1 | 0.84 | 0.477 | 0.000 | 0.596 | 0.000 | 0.598 | 79.8 | 20.2 | 37.0 |
| Example 21 | Cyclopentane/ isobutane | 5.7 | 85 | 25.1 | 0.86 | 0.466 | 0.000 | 0.586 | 0.000 | 0.586 | 79.5 | 20.5 | 36.8 |
| Example 22 | Cyclopentane/ isopentane | 5.7 | 85 | 25.1 | 0.85 | 0.469 | 0.000 | 0.590 | 0.000 | 0.590 | 79.5 | 20.5 | 36.8 |
| Example 23 | Cyclopentane/ isobutane | 5.7 | 85 | 25.1 | 0.85 | 0.467 | 0.000 | 0.588 | 0.000 | 0.588 | 79.4 | 20.6 | 36.7 |
| Example 24 | Cyclopentane/ isobutane | 5.7 | 85 | 25.1 | 0.85 | 0.487 | 0.000 | 0.609 | 0.000 | 0.609 | 80.0 | 20.0 | 37.1 |
| Example 25 | Cyclopentane/ isobutane | 5.7 | 85 | 25.1 | 0.85 | 0.466 | 0.000 | 0.589 | 0.000 | 0.589 | 79.1 | 20.9 | 36.6 |

(continued)

| | | water content in phenolic resin (wt%) | Temperature of double conveyor (°C) | Coefficient R | Pressure of distribution section (Mpa) | Content of cyclopentane (mol/ $22.4 \times 10^{-3}$ m$^3$) | Content of HFO (mol/ $22.4 \times 10^{-3}$ m$^3$) | Content of HFO +hydrocarbon with C6 or less (mol/ $22.4 \times 10^{-3}$ m$^3$) | Content of halogenated saturated hydrocarbon (mol/ $22.4 \times 10^{-3}$ m$^3$) | Content of hydrocarbon with C6 or less (mol/ $22.4 \times 10^{-3}$ m$^3$) | Content ratio in hydrocarbon with C6 or less | | Boiling point average value of hydrocarbon with C6 or less (°C) |
|---|---|---|---|---|---|---|---|---|---|---|---|---|---|
| | | | | | | | | | | | Ratio of cyclopentane (mol%) | Ratio of hydrocarbon with boiling point of -50 to 5°C (mol%) | |
| Example 26 | Cyclopentane/ isopentane | 5.7 | 85 | 25.1 | 0.85 | 0.483 | 0.000 | 0.607 | 0.000 | 0.607 | 79.6 | 20.4 | 36.8 |

[Table 2]

| | | water content in phenolic resin (wt%) | Temperature of double conveyor (°C) | Coefficient R | Pressure of distribution section (Mpa) | Content of cyclopentane (mol/22.4×10⁻³m³) | Content of HFO (mol/22.4×10⁻³m³) | Content of HFO + hydrocarbon with C6 or less (mol/22.4×10⁻³m³) | Content of halogenated saturated hydrocarbon (mol/22.4×10⁻³m³) | Content of hydrocarbon with C6 or less (mol/22.4×10⁻³m³) | Content ratio in hydrocarbon with C6 or less | | Boiling point average value of hydrocarbon with C6 or less (°C) |
|---|---|---|---|---|---|---|---|---|---|---|---|---|---|
| | | | | | | | | | | | Ratio of cyclopentane (mol%) | Ratio of hydrocarbon with boiling point of -50 to 5°C (mol%) | |
| Example 27 | Cyclopentane/ isobutane | 5.7 | 85 | 25.1 | 0.85 | 0.483 | 0.000 | 0.605 | 0.000 | 0.605 | 79.8 | 20.2 | 37.0 |
| Example 28 | Cyclopentane/ isobutane | 5.7 | 85 | 25.1 | 0.85 | 0.497 | 0.000 | 0.624 | 0.000 | 0.624 | 79.6 | 20.4 | 36.9 |
| Example 29 | Cyclopentane/ isobutane | 5.7 | 85 | 25.1 | 0.85 | 0.508 | 0.000 | 0.635 | 0.000 | 0.635 | 80.0 | 20.0 | 37.1 |
| Example 30 | Cyclopentane/ isobutane | 5.7 | 85 | 25.1 | 0.85 | 0.498 | 0.000 | 0.623 | 0.000 | 0.623 | 79.9 | 20.1 | 37.1 |
| Example 31 | Cyclopentane/ isobutane | 5.7 | 85 | 25.1 | 0.85 | 0.469 | 0.000 | 0.000 | 0.000 | 0.600 | 78.2 | 21.8 | 36.0 |
| Example 32 | Cyclopentane/ isobutane | 5.7 | 85 | 25.1 | 0.90 | 0.423 | 0.000 | 0.593 | 0.000 | 0.593 | 71.3 | 28.7 | 31.8 |
| Example 33 | Cyclopentane/ isobutane | 5.7 | 85 | 25.1 | 0.90 | 0.425 | 0.000 | 0.596 | 0.000 | 0.596 | 71.3 | 28.7 | 31.8 |
| Example 34 | Cyclopentane/ isobutane | 5.7 | 85 | 25.1 | 0.90 | 0.413 | 0.000 | 0.582 | 0.000 | 0.582 | 71.0 | 28.0 | 31.6 |

(continued)

| | | water content in phenolic resin (wt%) | Temperature of double conveyor (°C) | Coefficient R | Pressure of distribution section (Mpa) | Content of cyclopentane (mol/22.4×10⁻³m³) | Content of HFO (mol/22.4×10⁻³m³) | Content of HFO + hydrocarbon with C6 or less (mol/22.4×10⁻³m³) | Content of halogenated saturated hydrocarbon (mol/22.4×10⁻³m³) | Content of hydrocarbon with C6 or less (mol/22.4×10⁻³m³) | Content ratio in hydrocarbon with C6 or less — Ratio of cyclopentane (mol%) | Content ratio in hydrocarbon with C6 or less — Ratio of hydrocarbon with boiling point of -50 to 5°C (mol%) | Boiling point average value of hydrocarbon with C6 or less (°C) |
|---|---|---|---|---|---|---|---|---|---|---|---|---|---|
| Example 35 | Cyclopentane/isobutane | 5.7 | 85 | 25.1 | 0.90 | 0.414 | 0.000 | 0.583 | 0.000 | 0.583 | 71.0 | 29.0 | 31.6 |
| Example 36 | Cyclopentane/isobutane | 5.7 | 85 | 25.1 | 0.90 | 0.422 | 0.000 | 0.592 | 0.000 | 0.592 | 71.3 | 28.7 | 31.8 |
| Example 37 | Cyclopentane/isobutane | 5.7 | 85 | 25.1 | 0.90 | 0.403 | 0.000 | 0.568 | 0.000 | 0.568 | 71.0 | 29.0 | 31.6 |
| Example 38 | Cyclopentane/isobutane | 5.7 | 85 | 25.1 | 1.00 | 0.371 | 0.000 | 0.592 | 0.000 | 0.592 | 62.7 | 37.3 | 26.5 |
| Example 39 | Cyclopentane/isobutane/HFO1233zd | 5.7 | 85 | 25.1 | 0.81 | 0.482 | 0.016 | 0.584 | 0.000 | 0.568 | 84.9 | 15.1 | 40.1 |
| Example 40 | Cyclopentane/isobutane/HFO1233zd | 5.7 | 85 | 25.1 | 0.80 | 0.472 | 0.042 | 0.577 | 0.000 | 0.535 | 88.2 | 11.8 | 42.1 |
| Example 41 | Cyclopentane/isobutane/HFO1233zd | 5.7 | 80 | 24.0 | 0.70 | 0.382 | 0.255 | 0.654 | 0.000 | 0.399 | 95.7 | 4.3 | 46.7 |

| | | water content in phenolic resin (wt%) | Temperature of double conveyor (°C) | Coefficient R | Pressure of distribution section (Mpa) | Content of cyclopentane (mol/ $22.4\times10^{-3}m^3$) | Content of HFO (mol/ $22.4\times10^{-3}m^3$) | Content of HFO + hydrocarbon with C6 or less (mol/ $22.4\times10^{-3}m^3$) | Content of halogenated saturated hydrocarbon (mol/ $22.4\times10^{-3}m^3$) | Content of hydrocarbon with C6 or less (mol/ $22.4\times10^{-3}m^3$) | Content ratio in hydrocarbon with C6 or less | | Boiling point average value of hydrocarbon with C6 or less (°C) |
|---|---|---|---|---|---|---|---|---|---|---|---|---|---|
| | | | | | | | | | | | Ratio of cyclopentane (mol%) | Ratio of hydrocarbon with boiling point of -50 to 5°C (mol%) | |
| Example 42 | Cyclopentane/isobutane/ HFO1233zd | 5.7 | 78 | 23.5 | 0.65 | 0.321 | 0.362 | 0.697 | 0.000 | 0.335 | 96.0 | 4.0 | 46.8 |
| Example 43 | Cyclopentane/isobutane/ HFO1336mzz | 5.7 | 85 | 25.1 | 0.79 | 0.463 | 0.086 | 0.577 | 0.000 | 0.491 | 94.3 | 5.7 | 45.8 |
| Example 44 | Cyclopentane/ isopropyl chloride | 5.7 | 85 | 25.1 | 0.69 | 0.578 | 0.000 | 0.578 | 0.036 | 0.578 | 100 | 0.0 | 49.3 |
| Example 45 | Cyclopentane/isobutane/ isopropyl chloride | 5.7 | 85 | 25.1 | 0.66 | 0.445 | 0.000 | 0.475 | 0.121 | 0.475 | 93.7 | 6.3 | 45.4 |
| Example 46 | Cyclopentane/isobutane/ HFO1233zd /isopropyl chloride | 5.7 | 85 | 25.1 | 0.67 | 0.446 | 0.062 | 0.539 | 0.061 | 0.477 | 93.5 | 6.5 | 45.3 |
| Example 47 | Cyclopentane/ isobutane | 5.7 | 85 | 25.1 | 0.81 | 0.496 | 0.000 | 0.619 | 0.000 | 0.619 | 80.1 | 19.9 | 37.2 |

EP 3 395 871 B1

36

EP 3 395 871 B1

| | | water content in phenolic resin (wt%) | Temperature of double conveyor (°C) | Coefficient R | Pressure of distribution section (Mpa) | Content of cyclopentane (mol/ 22.4×10⁻³m³) | Content of HFO (mol/ 22.4×10⁻³m³) | Content of HFO + hydrocarbon with C6 or less (mol/ 22.4×10⁻³m³) | Content of halogenated saturated hydrocarbon (mol/ 22.4×10⁻³m³) | Content of hydrocarbon with C6 or less (mol/ 22.4×10⁻³m³) | Content ratio in hydrocarbon with C6 or less | | Boiling point average value of hydrocarbon with C6 or less (°C) |
|---|---|---|---|---|---|---|---|---|---|---|---|---|---|
| | | | | | | | | | | | Ratio of cyclopentane (mol%) | Ratio of hydrocarbon with boiling point of -50 to 5°C (mol%) | |
| Example 48 | Cyclopentane/ isobutane | 5.7 | 85 | 25.1 | 0.84 | 0.477 | 0.000 | 0.596 | 0.000 | 0.596 | 80.0 | 20.0 | 37.1 |
| Comparative Example 1 | Cyclopentane | 5.7 | 85 | 25.1 | 0.80 | 0.614 | 0.000 | 0.614 | 0.000 | 0.614 | 100 | 0 | 49.3 |
| Comparative Example 2 | Normal pentane | 5.7 | 85 | 25.1 | 0.83 | 0.000 | 0.000 | 0.594 | 0.000 | 0.594 | 0 | 0 | 36.1 |
| Comparative Example 3 | Isopentane | 5.7 | 85 | 25.1 | 0.86 | 0.000 | 0.000 | 0.596 | 0.000 | 0.596 | 0 | 0 | 27.7 |
| Comparative Example 4 | Cyclopentane/ isobutane | 5.7 | 85 | 25.1 | 0.85 | 0.532 | 0.000 | 0.624 | 0.000 | 0.624 | 85.3 | 14.7 | 40.3 |
| Comparative Example 5 | Cyclopentane/ isopentane | 5.7 | 85 | 25.1 | 0.78 | 0.542 | 0.000 | 0.633 | 0.000 | 0.633 | 85.7 | 14.3 | 40.6 |
| Comparative Example 6 | Cyclopentane/ isobutane | 5.7 | 85 | 25.1 | 0.81 | 0.510 | 0.000 | 0.599 | 0.000 | 0.599 | 85.1 | 14.9 | 40.2 |
| Comparative Example 7 | Cyclopentane/ isobutane | 5.7 | 85 | 25.1 | 0.81 | 0.521 | 0.000 | 0.612 | 0.000 | 0.612 | 85.1 | 14.9 | 40.2 |

(continued)

| | | water content in phenolic resin (wt%) | Temperature of double conveyor (°C) | Coefficient R | Pressure of distribution section (Mpa) | Content of cyclopentane (mol/ $22.4\times10^{-3}m^3$) | Content of HFO (mol/ $22.4\times10^{-3}m^3$) | Content of HFO + hydrocarbon with C6 or less (mol/ $22.4\times10^{-3}m^3$) | Content of halogenated saturated hydrocarbon (mol/ $22.4\times10^{-3}m^3$) | Content of hydrocarbon with C6 or less (mol/ $22.4\times10^{-3}m^3$) | Content ratio in hydrocarbon with C6 or less | | Boiling point average value of hydrocarbon with C6 or less (°C) |
|---|---|---|---|---|---|---|---|---|---|---|---|---|---|
| | | | | | | | | | | | Ratio of cyclopentane (mol%) | Ratio of hydrocarbon with boiling point of -50 to 5°C (mol%) | |
| Comparative Example 8 | Cyclopentane/ isobutane | 15.0 | 101 | 38.1 | 0.75 | 0.203 | 0.000 | 0.236 | 0.000 | 0.236 | 86.0 | 14.0 | 40.8 |
| Comparative Example 9 | Cyclopentane/ isobutane | 37.1 | 68 | 19.0 | 0.89 | 1.090 | 0.000 | 1.281 | 0.000 | 1.281 | 85.1 | 14.9 | 40.2 |
| Comparative Example 10 | Cyclopentane/ isobutane | 5.7 | 85 | 25.1 | 1.08 | 0.248 | 0.000 | 0.617 | 0.000 | 0.617 | 40.2 | 59.8 | 12.8 |

[Table 3]

| | High-boiling hydrocarbon used | High-boiling saturated hydrocarbon extracted from foam into heptane (according to boiling point) (g/22.4×10⁻³m³) | | | | | | | Coefficient a* | Coefficient a | Coefficient a* | Coefficient b* | Coefficient b | Coefficient b' | Coefficient c | Coefficient c' |
|---|---|---|---|---|---|---|---|---|---|---|---|---|---|---|---|---|
| | | Boiling point 140 to 350°C | Boiling point 140 to 160°C | Boiling point 160 to 240°C | Boiling point 240 to 260°C | Boiling point 260 to 300°C | Boiling point 300 to 350°C | Boiling point 350 to 450°C | | | | | | | | |
| Example 1 | Normal dodecane | 5,9 | 0,0 | 5,9 | 0,0 | 0,0 | 0,0 | 0,0 | 8,40 | 6,20 | 4,00 | 0,04 | 0,14 | 0,28 | - | - |
| Example 2 | Normal dodecane | 4,5 | 0,0 | 4,5 | 0,0 | 0,0 | 0,0 | 0,0 | 8,40 | 6,20 | 4,00 | 0,04 | 0,14 | 0,28 | - | - |
| Example 3 | Normal dodecane | 4,2 | 0,0 | 4,2 | 0,0 | 0,0 | 0,0 | 0,0 | 8,40 | 6,20 | 4,00 | 0,04 | 0,14 | 0,28 | - | - |
| Example 4 | Normal dodecane | 2,8 | 0,0 | 2,8 | 0,0 | 0,0 | 0,0 | 0,0 | 8,40 | 6,20 | 4,00 | 0,04 | 0,14 | 0,28 | - | - |
| Example 5 | Normal dodecane | 6,4 | 0,0 | 6,4 | 0,0 | 0,0 | 0,0 | 0,0 | 8,40 | 6,20 | 4,00 | 0,04 | 0,14 | 0,28 | - | - |
| Example 6 | Normal dodecane | 4,7 | 0,0 | 4,7 | 0,0 | 0,0 | 0,0 | 0,0 | 8,40 | 6,20 | 4,00 | 0,04 | 0,14 | 0,28 | - | - |
| Example 7 | Normal dodecane | 3,4 | 0,0 | 3,4 | 0,0 | 0,0 | 0,0 | 0,0 | 8,40 | 6,20 | 4,00 | 0,04 | 0,14 | 0,28 | - | - |
| Example 8 | Normal dodecane | 2,4 | 0,0 | 2,4 | 0,0 | 0,0 | 0,0 | 0,0 | 8,40 | 6,20 | 4,00 | 0,04 | 0,14 | 0,28 | - | - |
| Example 9 | Normal dodecane | 0,65 | 0,0 | 0,65 | 0,0 | 0,0 | 0,0 | 0,0 | 8,40 | 6,20 | 4,00 | 0,04 | 0,14 | 0,28 | - | - |
| Example 10 | Normal dodecane | 0.45 | 0,0 | 0,45 | 0,0 | 0,0 | 0,0 | 0,0 | 8,40 | 6,20 | 4,00 | 0,04 | 0,14 | 0,28 | - | - |
| Example 11 | Normal dodecane | 0,29 | 0,0 | 0,29 | 0,0 | 0,0 | 0,0 | 0,0 | 8,40 | 6,20 | 4,00 | 0,04 | 0,14 | 0,28 | - | - |
| Example 12 | Normal dodecane | 2,5 | 0,0 | 2,5 | 0,0 | 0.0 | 0,0 | 0,0 | 8,40 | 6,20 | 4,00 | 0,04 | 0,14 | 0,28 | - | - |

(continued)

| Example | High-boiling hydrocarbon used | High-boiling saturated hydrocarbon extracted from foam into heptane (according to boiling point) (g/22.4×10⁻³m³) | | | | | | | Coefficient a* | Coefficient a | Coefficient a* | Coefficient b* | Coefficient b | Coefficient b' | Coefficient c | Coefficient c' |
|---|---|---|---|---|---|---|---|---|---|---|---|---|---|---|---|---|
| | | Boiling point 140 to 350°C | Boiling point 140 to 160°C | Boiling point 160 to 240°C | Boiling point 240 to 260°C | Boiling point 260 to 300°C | Boiling point 300 to 350°C | Boiling point 350 to 450°C | | | | | | | | |
| Example 13 | Normal dodecane | 2,0 | 0,0 | 2,0 | 0,0 | 0,0 | 0,0 | 0,0 | 8,40 | 6,20 | 4,00 | 0,04 | 0.14 | 0,28 | - | - |
| Example 14 | Normal dodecane | 2,1 | 0,0 | 2,1 | 0,0 | 0,0 | 0,0 | 0,0 | 8,40 | 6,20 | 4,00 | 0,04 | 0,14 | 0,28 | - | - |
| Example 15 | Normal dodecane | 2,4 | 0,0 | 2,4 | 0,0 | 0,0 | 0,0 | 0,0 | 8,40 | 6,20 | 4,00 | 0,04 | 0,14 | 0,28 | - | - |
| Example 16 | Normal dodecane | 6,2 | 0,0 | 6,2 | 0,0 | 0,0 | 0,0 | 0,0 | 8,40 | 6,20 | 4,00 | 0,04 | 0,14 | 0,28 | - | - |
| Example 17 | Normal dodecane | 4,9 | 0,0 | 4,9 | 0,0 | 0,0 | 0,0 | 0,0 | 8,40 | 6,20 | 4,00 | 0,04 | 0,14 | 0,28 | - | - |
| Example 18 | Normal dodecane | 3,6 | 0,0 | 3,6 | 0,0 | 0,0 | 0,0 | 0,0 | 8,40 | 6,20 | 4,00 | 0,04 | 0,14 | 0,28 | - | - |
| Example 19 | Normal dodecane | 0,61 | 0,0 | 0,61 | 0,0 | 0,0 | 0,0 | 0,0 | 8,40 | 6,20 | 4,00 | 0,04 | 0,14 | 0,28 | - | - |
| Example 20 | Normal dodecane | 0,44 | 0,0 | 0,44 | 0,0 | 0,0 | 0,0 | 0,0 | 8,40 | 6,20 | 4,00 | 0,04 | 0,14 | 0,28 | - | - |
| Example 21 | Normal dodecane | 0,25 | 0,0 | 0,25 | 0,0 | 0,0 | 0,0 | 0,0 | 8,40 | 6,20 | 4,00 | 0,04 | 0,14 | 0,28 | - | - |
| Example 22 | Normal nonane | 1,1 | 1,1 | 0,0 | 0,0 | 0,0 | 0,0 | 0,0 | 8,40 | 6,20 | 4,00 | 0,04 | 0,14 | 0,28 | - | - |
| Example 23 | Normal decane | 1,1 | 0,0 | 1,1 | 0,0 | 0,0 | 0,0 | 0,0 | 8,40 | 6,20 | 4,00 | 0,04 | 0,14 | 0,28 | - | - |
| Example 24 | Metal Cleaner #2000 | 1,2 | 0,0 | 1,2 | 0,0 | 0,0 | 0,0 | 0,0 | 8,40 | 6,20 | 4,00 | 0,04 | 0,14 | 0,28 | - | - |

(continued)

| Example | High-boiling hydrocarbon used | High-boiling saturated hydrocarbon extracted from foam into heptane (according to boiling point) (g/22.4×10⁻³m³) | | | | | | | Coeffi-cient a* | Coeffi-cient a | Coeffi-cient a* | Coeffi-cient b* | Coeffi-cient b | Coeffi-cient b' | Coeffi-cient c | Coeffi-cient c' |
|---|---|---|---|---|---|---|---|---|---|---|---|---|---|---|---|---|
| | | Boiling point 140 to 350°C | Boiling point 140 to 160°C | Boiling point 160 to 240°C | Boiling point 240 to 260°C | Boiling point 260 to 300°C | Boiling point 300 to 350°C | Boiling point 350 to 450°C | | | | | | | | |
| Example 25 | Normal tetradecane melting point: 5.3°C | 1,1 | 0,0 | 0,0 | 1,1 | 0,0 | 0,0 | 0,0 | 8,40 | 6,20 | 4,00 | 0,04 | 0,14 | 0,28 | - | - |
| Example 26 | Metal Cleaner #3000 | 1,2 | 0,0 | 0,0 | 1,2 | 0,0 | 0,0 | 0,0 | 8,40 | 6,20 | 4,00 | 0,04 | 0.14 | 0,28 | - | - |

41

[Table 4]

| | High-boiling hydro-carbon used | High-boiling hydrocarbon extracted from foam into heptane (according to boiling point) (g/22,4×10⁻³m³) | | | | | | | Coefficient a* | Coefficient a | Coefficient a* | Coefficient b* | Coefficient b | Coefficient b' | Coefficient c | Coefficient c' |
| | | Boiling point 140 to 350°C | Boiling point 140 to 160°C | Boiling point 160 to 240°C | Boiling point 240 to 260°C | Boiling point 260 to 300°C | Boiling point 300 to 350°C | Boiling point 350 to 450°C | | | | | | | | |
|---|---|---|---|---|---|---|---|---|---|---|---|---|---|---|---|---|
| Example 27 | Normal hexadecane melting point: 17°C | 1,1 | 0,0 | 0,0 | 0,0 | 1,1 | 0,0 | 0,0 | 8,40 | 6,20 | 4,00 | 0,04 | 0,14 | 0,28 | - | - |
| Example 28 | Normal octadecane melting point: 26°C | 1,2 | 0,0 | 0,0 | 0,0 | 0,0 | 1,2 | 0,0 | 8,40 | 6,20 | 4,00 | 0,04 | 0,14 | 0,28 | - | - |
| Example 29 | Cosmo White p-60 | 1,2 | 0,0 | 0,0 | 0,0 | 0,1 | 1,1 | 1,0 | 8,40 | 6,20 | 4,00 | 0,04 | 0,14 | 0,28 | - | - |
| Example 30 | Normal dodecane | 2.0 | 0,0 | 2,0 | 0,0 | 0,0 | 0,0 | 0,0 | 8,40 | 6,20 | 4,00 | 0,04 | 0,14 | 0,28 | - | - |
| Example 31 | Normal dodecane | 1,8 | 0,0 | 1,8 | 0,0 | 0,0 | 0,0 | 0,0 | 8,40 | 6,20 | 4,00 | 0,04 | 0,14 | 0,28 | - | - |
| Example 32 | Normal dodecane | 6,8 | 0,0 | 6,3 | 0,0 | 0,0 | 0,0 | 0,0 | 8,40 | 6,20 | 4,00 | 0,04 | 0,14 | 0,28 | - | - |
| Example 33 | Normal dodecane | 5,1 | 0,0 | 5,1 | 0,0 | 0,0 | 0,0 | 0,0 | 8,40 | 6,20 | 4,00 | 0,04 | 0,14 | 0,28 | - | - |
| Example 34 | Normal dodocane | 3,4 | 0,0 | 3,4 | 0,0 | 0,0 | 0,0 | 0,0 | 8,40 | 6,20 | 4,00 | 0,04 | 0,14 | 0,28 | - | - |
| Example 35 | Normal dodecane | 0,61 | 0,0 | 0,61 | 0,0 | 0,0 | 0,0 | 0,0 | 8,40 | 6,20 | 4,00 | 0,04 | 0,14 | 0,28 | - | - |
| Example 36 | Normal dodecane | 0,41 | 0,0 | 0,41 | 0,0 | 0,0 | 0,0 | 0,0 | 8,40 | 6,20 | 4,00 | 0,04 | 0,14 | 0,28 | - | - |
| Example 37 | Normal dodecane | 0,24 | 0,0 | 0,24 | 0,0 | 0,0 | 0,0 | 0,0 | 8,40 | 6,20 | 4,00 | 0,04 | 0,14 | 0,28 | - | - |

EP 3 395 871 B1

42

(continued)

| | High-boiling bydrocarbon used | High-boiling hydrocarbon extracted from foam into heptane (according to boiling point) ($g/22,4 \times 10^{-3} m^3$) | | | | | | | Coefficient a* | Coefficient a | Coefficient a* | Coefficient b* | Coefficient b | Coefficient b' | Coefficient c | Coefficient c' |
|---|---|---|---|---|---|---|---|---|---|---|---|---|---|---|---|---|
| | | Boiling point 140 to 350°C | Boiling point 140 to 160°C | Boiling point 160 to 240°C | Boiling point 240 to 260°C | Boiling point 260 to 300°C | Boiling point 300 to 350°C | Boiling point 350 to 450°C | | | | | | | | |
| Example 38 | Normal dodecane | 2.2 | 0,0 | 2,2 | 0,0 | 0,0 | 0,0 | 0,0 | 8,40 | 6,20 | 4,00 | 0,04 | 0,14 | 0,28 | - | - |
| Example 39 | Normal dodecane | 5,1 | 0,0 | 5,1 | 0,0 | 0,0 | 0,0 | 0,0 | 8,40 | 6,20 | 4,00 | 0,04 | 0,14 | 0,28 | 7,40 | 5,50 |
| Example 40 | Normal dodecane | 6,7 | 0,0 | 6,7 | 0,0 | 0,0 | 0,0 | 0,0 | 8,40 | 6,20 | 4,00 | 0,04 | 0.14 | 0,28 | 7,40 | 5,50 |
| Example 41 | Normal dodecane | 4,9 | 0,0 | 4,9 | 0,0 | 0,0 | 0,0 | 0,0 | 8,40 | 6,20 | 4,00 | 0,04 | 0,14 | 0,28 | 7.40 | 5,50 |
| Example 42 | Normal dodecane | 6,6 | 0,0 | 6,6 | 0,0 | 0,0 | 0,0 | 0,0 | 8.40 | 6,20 | 4,00 | 0,04 | 0,14 | 0,28 | 7.40 | 5,50 |
| Example 43 | Normal dodecane | 2,3 | 0,0 | 2.3 | 0,0 | 0,0 | 0,0 | 0,0 | 8,40 | 6,20 | 4,00 | 0,04 | 0,14 | 0,28 | 7,40 | 5,50 |
| Example 44 | Normal dodecane | 3,5 | 0,0 | 3,5 | 0,0 | 0,0 | 0,0 | 0,0 | 8,40 | 6,20 | 4,00 | 0,04 | 0,14 | 0,28 | 7,40 | 5,50 |
| Example 45 | Normal dodecane | 1,1 | 0,0 | 1,1 | 0,0 | 0,0 | 0,0 | 0,0 | 8,40 | 6,20 | 4,00 | 0,04 | 0,14 | 0,28 | 7,40 | 5,50 |
| Example 46 | Normal dodecane | 1,9 | 0,0 | 1,9 | 0,0 | 0,0 | 0,0 | 0,0 | 8,40 | 6,20 | 4,00 | 0,04 | 0,14 | 0,28 | 7,40 | 5,50 |
| Example 47 | Normal dodecane | 4,0 | 0,0 | 4,0 | 0,0 | 0,0 | 0,0 | 0,0 | 8,40 | 6,20 | 4,00 | 0,04 | 0,14 | 0,28 | - | - |
| Example 48 | Normal dodecane | 0,51 | 0,0 | 0,51 | 0,0 | 0,0 | 0,0 | 0,0 | 8,40 | 6,20 | 4,00 | 0,04 | 0,14 | 0,28 | - | - |
| Comparative Example 1 | - | 0,0 | 0,0 | 0,0 | 0,0 | 0,0 | 0,0 | 0,0 | 8,40 | 6,20 | 4,00 | 0,04 | 0,14 | 0,28 | - | - |

(continued)

| High-boiling hydrocarbon used | High-boiling hydrocarbon extracted from foam into heptane (according to boiling point) (g/22,4×10⁻³m³) | | | | | | | Coefficient a* | Coefficient a | Coefficient a* | Coefficient b* | Coefficient b | Coefficient b' | Coefficient c | Coefficient c' |
|---|---|---|---|---|---|---|---|---|---|---|---|---|---|---|---|
| | Boiling point 140 to 350°C | Boiling point 140 to 160°C | Boiling point 160 to 240°C | Boiling point 240 to 260°C | Boiling point 260 to 300°C | Boiling point 300 to 350°C | Boiling point 350 to 450°C | | | | | | | | |
| Example 2 — Normal dodecane | 1,1 | 0,0 | 1,1 | 0,0 | 0,0 | 0,0 | 0,0 | 8,40 | 6,20 | 4,00 | 0,04 | 0,14 | 0,28 | - | - |
| Comparative Example 3 — Normal dodecane | 1,1 | 0,0 | 1,1 | 0,0 | 0,0 | 0,0 | 0,0 | 8,40 | 6,20 | 4,00 | 0,04 | 0,14 | 0,28 | - | - |
| Comparative Example 4 — Normal dodecane | 0,18 | 0,0 | 0,18 | 0,0 | 0,0 | 0,0 | 0,0 | 8,40 | 6,20 | 4,00 | 0,04 | 0,14 | 0,28 | - | - |
| Comparative Example 5 — Normal dodecane | 9,9 | 0,0 | 9,9 | 0,0 | 0,0 | 0,0 | 0,0 | 8,40 | 6,20 | 4,00 | 0,04 | 0,14 | 0,28 | - | - |
| Comparative Example 6 — Normal octane | 0,0 | 0,0 | 0,0 | 0,0 | 0,0 | 0,0 | 0,0 | 8,40 | 6,20 | 4,00 | 0,04 | 0,14 | 0,28 | - | - |
| Comparative Example 7 — Cosmo White p-260 | 0,0 | 0,0 | 0,0 | 0,0 | 0,0 | 0,0 | 1,5 | 8,40 | 6,20 | 4.00 | 0,04 | 0,14 | 0,28 | - | - |
| Comparative Example 8 — Normal dodecane | 0,90 | 0,0 | 0,90 | 0,0 | 0,0 | 0,0 | 0,0 | 8,40 | 6,20 | 4,00 | 0,04 | 0,14 | 0,28 | - | - |
| Comparative Example 9 — Normal dodecane | 1,2 | 0,0 | 1,2 | 0,0 | 0,0 | 0,0 | 0,0 | 8,40 | 6,20 | 4,00 | 0,04 | 0,14 | 0,28 | - | - |
| Comparative Example 10 — Normal dodecane | 1,1 | 0,0 | 1,1 | 0,0 | 0,0 | 0,0 | 0,0 | 8,40 | 6,20 | 4,00 | 0,04 | 0,14 | 0,28 | - | - |

[Table 5]

| | Foam density (kg/m³) | Closed cell ratio (%) | Average cell diameter (μm) | Density 30 kg/m³ equivalent compressive strength (N/cm²) | Initial thermal conductivity (W/m·K) | | Thermal conductivity after accelerated testing (W/m·K) | | Difference in thermal conductivity between before and after accelerated testing (W/m·K) | |
|---|---|---|---|---|---|---|---|---|---|---|
| | | | | | 10°C | 23°C | 10°C | 23°C | 10°C | 23°C |
| Example 1 | 31.5 | 95 | 180 | 9.8 | 0.0183 | 0.0187 | 0.0191 | 0.0195 | 0.0008 | 0.0008 |
| Example 2 | 30.6 | 95 | 160 | 10.4 | 0.0175 | 0.0185 | 0.0182 | 0.0192 | 0.0007 | 0.0007 |
| Example 3 | 28.5 | 95 | 160 | 11.4 | 0.0173 | 0.0184 | 0.0179 | 0.0190 | 0.0006 | 0.0006 |
| Example 4 | 29.8 | 97 | 150 | 12.7 | 0.0171 | 0.0183 | 0.0175 | 0.0187 | 0.0004 | 0.0004 |
| Example 5 | 31.1 | 97 | 150 | 9.5 | 0.0166 | 0.0181 | 0.0172 | 0.0187 | 0.0006 | 0.0006 |
| Example 6 | 30.8 | 97 | 145 | 11.5 | 0.0167 | 0.0182 | 0.0173 | 0.0188 | 0.0006 | 0.0006 |
| Example 7 | 30.5 | 97 | 147 | 13.1 | 0.0167 | 0.0182 | 0.0172 | 0.0187 | 0.0005 | 0.0005 |
| Example 8 | 31.0 | 97 | 140 | 13.2 | 0.0167 | 0.0182 | 0.0172 | 0.0187 | 0.0005 | 0.0005 |
| Example 9 | 29.8 | 98 | 138 | 13.4 | 0.0169 | 0.0183 | 0.0173 | 0.0187 | 0.0004 | 0.0004 |
| Example 10 | 29.6 | 98 | 135 | 13.5 | 0.0179 | 0.0188 | 0.0182 | 0.0191 | 0.0003 | 0.0003 |
| Example 11 | 29.2 | 98 | 135 | 13.6 | 0.0184 | 0.0193 | 0.0187 | 0.0196 | 0.0003 | 0.0003 |
| Example 12 | 31.6 | 98 | 122 | 14.8 | 0.0166 | 0.0181 | 0.0169 | 0.0184 | 0.0003 | 0.0003 |
| Example 13 | 26.0 | 93 | 143 | 12.1 | 0.0173 | 0.0188 | 0.0186 | 0.0201 | 0.0013 | 0.0013 |

EP 3 395 871 B1

(continued)

| | Foam density (kg/m³) | Closed cell ratio (%) | Average cell diameter (μm) | Density 30 kg/m³ equivalent compressive strength (N/cm²) | Initial thermal conductivity (W/m·K) | | Thermal conductivity after accelerated testing (W/m·K) | | Difference in thermal conductivity between before and after accelerated testing (W/m·K) | |
|---|---|---|---|---|---|---|---|---|---|---|
| | | | | | 10°C | 23°C | 10°C | 23°C | 10°C | 23°C |
| Example 14 | 27.0 | 95 | 135 | 12.7 | 0.0170 | 0.0185 | 0.0178 | 0.0193 | 0.0008 | 0.0008 |
| Example 15 | 30.0 | 97 | 129 | 14.1 | 0.0170 | 0.0185 | 0.0174 | 0.0189 | 0.0004 | 0.0004 |
| Example 16 | 31.2 | 97 | 121 | 10.4 | 0.0173 | 0.0188 | 0.0176 | 0.0191 | 0.0003 | 0.0003 |
| Example 17 | 30.9 | 97 | 125 | 12.1 | 0.0168 | 0.0183 | 0.0171 | 0.0186 | 0.0003 | 0.0003 |
| Example 18 | 30.3 | 98 | 123 | 14.1 | 0.0168 | 0.0183 | 0.0170 | 0.0185 | 0.0002 | 0.0002 |
| Example 19 | 29.6 | 98 | 126 | 14.9 | 0.0169 | 0.0184 | 0.0171 | 0.0186 | 0.0002 | 0.0002 |
| Example 20 | 29.6 | 99 | 121 | 15.1 | 0.0178 | 0.0186 | 0.0181 | 0.0189 | 0.0003 | 0.0003 |
| Example 21 | 29.4 | 98 | 118 | 14.9 | 0.0184 | 0.0191 | 0.0187 | 0.0192 | 0.0003 | 0.0001 |
| Example 22 | 29.4 | 96 | 126 | 15.1 | 0.0186 | 0.0190 | 0.0190 | 0.0194 | 0.0004 | 0.0004 |
| Example 23 | 29.3 | 96 | 123 | 15.1 | 0.0168 | 0.0183 | 0.0172 | 0.0187 | 0.0004 | 0.0004 |
| Example 24 | 30.3 | 98 | 124 | 15.2 | 0.0168 | 0.0182 | 0.0171 | 0.0185 | 0.0003 | 0.0003 |
| Example 25 | 29.3 | 98 | 126 | 15.3 | 0.0173 | 0.0186 | 0.0176 | 0.0189 | 0.0003 | 0.0003 |
| Example 26 | 31.2 | 98 | 128 | 15.1 | 0.0171 | 0.0185 | 0.0174 | 0.0188 | 0.0003 | 0.0003 |

[Table 6]

| | Foam density (kg/m³) | Closed cell ratio (%) | Average cell diameter (µm) | Density 30 kg/m³ equivalent compressive strength (N/cm²) | Initial thermal conductivity (W/m·K) | | Thermal conductivity after accelerated testing (W/m·K) | | Difference in thermal conductivity between before and after accelerated testing (W/m·K) | |
|---|---|---|---|---|---|---|---|---|---|---|
| | | | | | 10°C | 23°C | 10°C | 23°C | 10°C | 23°C |
| Example 27 | 29.7 | 98 | 128 | 14.8 | 0.0175 | 0.0188 | 0.0178 | 0.0191 | 0.0003 | 0.0003 |
| Example 28 | 30.9 | 96 | 131 | 14.1 | 0.0183 | 0.0191 | 0.0187 | 0.0195 | 0.0004 | 0.0004 |
| Example 29 | 32.1 | 96 | 136 | 13.6 | 0.0189 | 0.0195 | 0.0193 | 0.0199 | 0.0004 | 0.0004 |
| Example 30 | 31.6 | 99 | 98 | 14.1 | 0.0164 | 0.0179 | 0.0166 | 0.0181 | 0.0002 | 0.0002 |
| Example 31 | 29.4 | 99 | 125 | 15.4 | 0.0169 | 0.0183 | 0.0171 | 0.0185 | 0.0002 | 0.0002 |
| Example 32 | 30.4 | 98 | 127 | 10.5 | 0.0172 | 0.0185 | 0.0175 | 0.0188 | 0.0003 | 0.0003 |
| Example 33 | 30.4 | 98 | 125 | 12.5 | 0.0173 | 0.0186 | 0.0176 | 0.0189 | 0.0003 | 0.0003 |
| Example 34 | 29.7 | 98 | 123 | 15.3 | 0.0172 | 0.0186 | 0.0175 | 0.0189 | 0.0003 | 0.0003 |
| Example 35 | 29.7 | 98 | 125 | 15.6 | 0.0173 | 0.0187 | 0.0176 | 0.0190 | 0.0003 | 0.0003 |
| Example 36 | 30.3 | 98 | 122 | 15.2 | 0.0180 | 0.0188 | 0.0183 | 0.0191 | 0.0003 | 0.0003 |
| Example 37 | 29.2 | 98 | 122 | 15.5 | 0.0186 | 0.0194 | 0.0189 | 0.0197 | 0.0003 | 0.0003 |
| Example 38 | 30.3 | 98 | 122 | 15.1 | 0.0179 | 0.0193 | 0.0185 | 0.0199 | 0.0006 | 0.0006 |
| Example 39 | 30.3 | 98 | 127 | 12.8 | 0.0171 | 0.0186 | 0.0174 | 0.0189 | 0.0003 | 0.0003 |
| Example 40 | 30.6 | 98 | 118 | 9.5 | 0.0166 | 0.0180 | 0.0169 | 0.0183 | 0.0003 | 0.0003 |
| Example 41 | 29.7 | 97 | 117 | 12.6 | 0.0164 | 0.0178 | 0.0169 | 0.0183 | 0.0005 | 0.0005 |
| Example 42 | 28.3 | 96 | 116 | 9.4 | 0.0163 | 0.0177 | 0.0170 | 0.0184 | 0.0007 | 0.0007 |
| Example 43 | 29.6 | 98 | 117 | 14.5 | 0.0167 | 0.0180 | 0.0170 | 0.0183 | 0.0003 | 0.0003 |
| Example 44 | 30.4 | 97 | 153 | 12.4 | 0.0172 | 0.0184 | 0.0177 | 0.0189 | 0.0004 | 0.0004 |
| Example 45 | 29.8 | 95 | 144 | 13.2 | 0.0171 | 0.0184 | 0.0180 | 0.0191 | 0.0007 | 0.0007 |
| Example 46 | 29.3 | 97 | 121 | 14.3 | 0.0169 | 0.0182 | 0.0173 | 0.0186 | 0.0004 | 0.0004 |
| Example 47 | 31.1 | 97 | 133 | 10.6 | 0.0171 | 0.0183 | 0.0175 | 0.0187 | 0.0004 | 0.0004 |
| Example 48 | 29.9 | 97 | 131 | 13.6 | 0.0180 | 0.0189 | 0.0183 | 0.0192 | 0.0003 | 0.0003 |

(continued)

| | Foam density (kg/m³) | Closed cell ratio (%) | Average cell diameter (μm) | Density 30 kg/m³ equivalent compressive strength (N/cm²) | Initial thermal conductivity (W/m·K) | | Thermal conductivity after accelerated testing (W/m·K) | | Difference in thermal conductivity between before and after accelerated testing (W/m·K) | |
|---|---|---|---|---|---|---|---|---|---|---|
| | | | | | 10°C | 23°C | 10°C | 23°C | 10°C | 23°C |
| Comparative Example 1 | 29.5 | 99 | 145 | 14.8 | 0.0235 | 0.0216 | 0.0238 | 0.0219 | 0.0003 | 0.0003 |
| Comparative Example 2 | 29.3 | 96 | 135 | 15.7 | 0.0203 | 0.0214 | 0.0215 | 0.0226 | 0.0012 | 0.0012 |
| Comparative Example 3 | 29.4 | 96 | 123 | 15.9 | 0.0204 | 0.0211 | 0.0215 | 0.0222 | 0.0011 | 0.0011 |
| Comparative Example 4 | 30.3 | 99 | 126 | 15.0 | 0.0211 | 0.0205 | 0.0214 | 0.0208 | 0.0003 | 0.0003 |
| Comparative Example 5 | 31.5 | 95 | 135 | 8.5 | 0.0175 | 0.0191 | 0.0182 | 0.0198 | 0.0007 | 0.0007 |
| Comparative Example 6 | 29.7 | 94 | 125 | 11.3 | 0.0205 | 0.0203 | 0.0209 | 0.0207 | 0.0004 | 0.0004 |
| Comparative Example 7 | 30.3 | 95 | 135 | 10.7 | 0.0209 | 0.0208 | 0.0213 | 0.0212 | 0.0004 | 0.0004 |
| Comparative Example 8 | 25.6 | 86 | 137 | 10.3 | 0.0177 | 0.0193 | 0.0222 | 0.0238 | 0.0045 | 0.0045 |
| Comparative Example 9 | 34.7 | 99 | 127 | 15.0 | 0.0201 | 0.0206 | 0.0204 | 0.0209 | 0.0003 | 0.0003 |
| Comparative Example 10 | 29.3 | 97 | 118 | 15.1 | 0.0191 | 0.0206 | 0.0202 | 0.0217 | 0.0011 | 0.0011 |

INDUSTRIAL APPLICABILITY

It is thus possible to provide a phenolic resin foam that has low initial thermal conductivity, maintains low thermal conductivity over the long term, and has excellent compressive strength, and a method of producing the same. The disclosed phenolic resin foam is suitable for use as insulating materials such as construction insulating materials, vehicle insulating materials, and appliance insulating materials.

REFERENCE SIGNS LIST

    1 phenolic resin
    2 high-boiling hydrocarbon with a boiling point of 140 °C or more and 350 °C or less
    3 foaming agent
    4 curing catalyst
    5 foamable phenolic resin composition
    6 surface material
    7 static mixer
    10 lower slat conveyor
    20 upper slat conveyor
    30 insulating material
    31 air supply fan
    32 exhaust fan
    33 mixer
    34 cutting apparatus
    40 panel-like phenolic resin foam
    41 forming apparatus
    a mixing section
    b mixing section
    c distribution section
    d stirring rotor
    e discharge nozzle

**Claims**

1. A phenolic resin foam comprising: cyclopentane as a hydrocarbon having a carbon number of 6 or less; optionally another hydrocarbon having a carbon number of 6 or less; and a high-boiling hydrocarbon with a boiling point of 140 °C or more and 350 °C or less which is a single compound or a plurality of compounds selected from cyclooctane, nonane, decane, decalin, undecane, dodecane, tridecane, tetradecane, pentadecane, hexadecane, heptadecane, octadecane, nonadecane, and icosane, and having a density of 10 kg/m$^3$ or more and 150 kg/m$^3$ or less, wherein a value of a content X in units of mol of the cyclopentane per a space volume of $22.4 \times 10^{-3}$ m$^3$ in the phenolic resin foam, determined as described in "(9) Content of hydrocarbon having a carbon number of 6 or less, content of hydrofluoroolefin having a carbon number of 3 or 4, and content of halogenated saturated hydrocarbon in foam" in the description, is 0.25 or more and 0.85 or less, a ratio of the cyclopentane in the hydrocarbon having a carbon number of 6 or less or the hydrocarbons having a carbon number of 6 or less contained in the phenolic resin foam, determined as described in "(9) Content of hydrocarbon having a carbon number of 6 or less, content of hydrofluoroolefin having a carbon number of 3 or 4, and content of halogenated saturated hydrocarbon in foam" in the description, is 60 mol% or more and 100 mol% or less, and a value of an extraction amount Y in units of g of the high-boiling hydrocarbon with a boiling point of 140 °C or more and 350 °C or less extracted into heptane when the phenolic resin foam is ground and subjected to an extraction treatment in the heptane, per a space volume of $22.4 \times 10^{-3}$ m$^3$ in the phenolic resin foam, is in a range of not more than a coefficient a calculated according to the following formula (1) and not less than a coefficient b calculated according to the following formula (2):

$$a = -1.95X + 6.2 \qquad (1)$$

$$b = 0.47X + 0.14 \qquad (2).$$

2. The phenolic resin foam according to claim 1,
   wherein the high-boiling hydrocarbon with a boiling point of 140 °C or more and 350 °C or less is liquid at a pressure of 101.325 kPa and a temperature of 30 °C.

3. The phenolic resin foam according to claim 1 or 2,
   wherein the hydrocarbon having a carbon number of 6 or less contained in the phenolic resin foam includes 60 mol% or more and 99.9 mol% or less of the cyclopentane, and
   a boiling point average value $T_{AV} = a \times Ta + b \times Tb + c \times Tc + ...$ where the contents (mole fractions) of respective hydrocarbons contained are a, b, c, ..., and the boiling points (°C) of the respective hydrocarbons are Ta, Tb, Tc, ...., of the hydrocarbon having a carbon number of 6 or less is 25 °C or more and 50 °C or less.

4. The phenolic resin foam according to claim 1 or 2,
   wherein the hydrocarbon having a carbon number of 6 or less contained in the phenolic resin foam includes 60 mol% or more and 99.9 mol% or less of the cyclopentane, and 0.1 mol% or more and 40 mol% or less of at least one selected from hydrocarbons with a boiling point of -50 °C or more and 5 °C or less, and
   a boiling point average value $T_{AV} = a \times Ta + b \times Tb + c \times Tc + ...$ where the contents (mole fractions) of respective hydrocarbons contained are a, b, c, ..., and the boiling points (°C) of the respective hydrocarbons are Ta, Tb, Tc, ...., of the hydrocarbon having a carbon number of 6 or less is 25 °C or more and 50 °C or less, and a content of the hydrocarbon having a carbon number of 6 or less in the phenolic resin foam, determined as described in "(9) Content of hydrocarbon having a carbon number of 6 or less, content of hydrofluoroolefin having a carbon number of 3 or 4, and content of halogenated saturated hydrocarbon in foam" in the description, is 0.3 mol or more and 1.0 mol or less per a space volume of $22.4 \times 10^{-3}$ m$^3$ in the phenolic resin foam.

5. The phenolic resin foam according to any of claims 1 to 4,
   wherein thermal conductivity in a 10 °C environment and thermal conductivity in a 23 °C environment, determined as described in "(5) Thermal conductivity in 10 °C environment and thermal conductivity in 23 °C environment" in the description, are each 0.0200 W/m·K or less.

6. The phenolic resin foam according to any of claims 1 to 5,
   wherein the hydrocarbon having a carbon number of 6 or less contained in the phenolic resin foam includes a hydrocarbon with a boiling point of -50 °C or more and 5 °C or less, and
   the hydrocarbon with a boiling point of -50 °C or more and 5 °C or less contains isobutane.

7. The phenolic resin foam according to any of claims 1 to 6, comprising at least one of a poorly water-soluble metal hydroxide that releases water at 150 °C or more, wherein the amount dissolved in water when 100 g of the poorly water-soluble metal hydroxide is mixed into 100 g of distilled water at a temperature of 23 °C, is 15 g or less, and a poorly water-soluble phosphorus-based flame retardant with a decomposition temperature of 150 °C or more, wherein the amount dissolved in water when 100 g of the poorly water-soluble phosphorus-based flame retardant is mixed into 100 g of distilled water at a temperature of 23 °C, is 15 g or less.

8. The phenolic resin foam according to any of claims 1 to 7, having a closed cell ratio, determined as described in "(3) Closed cell ratio" in the description, of 90 % or more, an average cell diameter, determined as described in "(2) Average cell diameter" in the description, of 40 $\mu$m or more and 300 $\mu$m or less, and a density 30 kg/m$^3$ equivalent compressive strength, determined as described in "(4) Density 30 kg/m$^3$ equivalent compressive strength" in the description, of 9 N/cm$^2$ or more.

9. The phenolic resin foam according to any of claims 1 to 8, further comprising a hydrofluoroolefin having a carbon number of 3 or 4,
   wherein a value of a content Z in units of mol of the hydrofluoroolefin having a carbon number of 3 or 4 per a space volume of $22.4 \times 10^{-3}$ m$^3$ in the phenolic resin foam, determined as described in "(9) Content of hydrocarbon having a carbon number of 6 or less, content of hydrofluoroolefin having a carbon number of 3 or 4, and content of halogenated saturated hydrocarbon in foam" in the description, is 0.01 or more and 0.4 or less, and
a total in units of mol of a content of the hydrocarbon having a carbon number of 6 or less and the content Z of the hydrofluoroolefin having a carbon number of 3 or 4 per a space volume of $22.4 \times 10^{-3}$ m$^3$ in the phenolic resin foam is 0.3 or more and 0.9 or less.

10. The phenolic resin foam according to claim 9,
wherein the value of the extraction amount Y in units of g is not more than a coefficient c calculated according to the following formula (3):

$$c = -1.37Z + 7.4 \qquad (3).$$

11. The phenolic resin foam according to any of claims 1 to 10, further comprising a halogenated saturated hydrocarbon, wherein a value of a content in units of mol of the halogenated saturated hydrocarbon per a space volume of $22.4 \times 10^{-3}$ m$^3$ in the phenolic resin foam, determined as described in "(9) Content of hydrocarbon having a carbon number of 6 or less, content of hydrofluoroolefin having a carbon number of 3 or 4, and content of halogenated saturated hydrocarbon in foam" in the description, is 0.01 or more and 0.35 or less.

12. A method of producing the phenolic resin foam according to any of claims 1 to 8, comprising:

mixing a foamable phenolic resin composition containing at least a phenolic resin, a surfactant, a high-boiling hydrocarbon with a boiling point of 140 °C or more and 350 °C or less, a foaming agent containing cyclopentane, and an acid curing catalyst, using a mixer;
discharging the foamable phenolic resin composition from a distribution section in the mixer; and
thereafter performing heating, to foam and cure the foamable phenolic resin composition,
wherein in a process of foaming and curing the foamable phenolic resin composition, pressure is applied to the foamable phenolic resin composition from above and below, to form a platelike phenolic resin foam.

13. A method of producing the phenolic resin foam according to claim 9 or 10, comprising:

mixing a foamable phenolic resin composition containing at least a phenolic resin, a surfactant, a high-boiling hydrocarbon with a boiling point of 140 °C or more and 350 °C or less, a foaming agent containing cyclopentane and a hydrofluoroolefin having a carbon number of 3 or 4, and an acid curing catalyst, using a mixer;
discharging the foamable phenolic resin composition from a distribution section in the mixer; and
thereafter performing heating, to foam and cure the foamable phenolic resin composition,
wherein in a process of foaming and curing the foamable phenolic resin composition, pressure is applied to the foamable phenolic resin composition from above and below, to form a platelike phenolic resin foam.

14. A method of producing the phenolic resin foam according to claim 11, comprising:

mixing a foamable phenolic resin composition containing at least a phenolic resin, a surfactant, a high-boiling hydrocarbon with a boiling point of 140 °C or more and 350 °C or less, a foaming agent containing cyclopentane and a halogenated saturated hydrocarbon, and an acid curing catalyst, using a mixer;
discharging the foamable phenolic resin composition from a distribution section in the mixer; and
thereafter performing heating, to foam and cure the foamable phenolic resin composition,
wherein in a process of foaming and curing the foamable phenolic resin composition, pressure is applied to the foamable phenolic resin composition from above and below, to form a platelike phenolic resin foam.

15. The method according to any of claims 12 to 14,
wherein the high-boiling hydrocarbon and the foaming agent are mixed, prior to the mixing of the foamable phenolic resin composition containing the phenolic resin, the surfactant, the high-boiling hydrocarbon, the foaming agent, and the acid curing catalyst.

16. The method according to any of claims 12 to 15,
wherein a pressure of the distribution section is 0.3 MPa or more and 10 MPa or less.

17. The method according to any of claims 12 to 16,

wherein a water content in the phenolic resin charged into the mixer is 2 mass% or more and 20 mass% or less, in the process of foaming and curing the foamable phenolic resin composition, the pressure is applied to the foamable phenolic resin composition using a double conveyor, and a temperature in the double conveyor is 60 °C or more and 100 °C or less.

18. The method according to any of claims 12 to 17, wherein in the process of foaming and curing the foamable phenolic resin composition, the pressure is applied to the foamable phenolic resin composition using a double conveyor, and a coefficient R calculated according to the following formula (4) from a water content P in units of mass% in the phenolic resin charged into the mixer and a temperature Q in units of °C in the double conveyor is 20 or more and 36 or less:

$$R = P + 0.2286Q \qquad (4).$$

**Patentansprüche**

1. Phenolharzschaum, umfassend: Cyclopentan als einen Kohlenwasserstoff mit einer Kohlenstoffzahl von 6 oder weniger; optional einen anderen Kohlenwasserstoff mit einer Kohlenstoffzahl von 6 oder weniger; und einen hochsiedenden Kohlenwasserstoff mit einem Siedepunkt von 140 °C oder mehr und 350 °C oder weniger, der eine einzelne Verbindung oder eine Vielzahl von Verbindungen ist, ausgewählt aus Cyclooctan, Nonan, Decan, Decalin, Undecan, Dodecan, Tridecan, Tetradecan, Pentadecan, Hexadecan, Heptadecan, Octadecan, Nonadecan und Icosan, und mit einer Dichte von 10 kg/m$^3$ oder mehr und 150 kg/m$^3$ oder weniger, wobei ein Wert eines Gehalts X, in Mol-Einheiten, des Cyclopentans pro Raumvolumen von 22,4 10$^{-3}\times$ m$^3$ in dem Phenolharzschaum, bestimmt wie in "(9) Content of hydrocarbon having a carbon number of 6 or less, content of hydrofluoroolefin having a carbon number of 3 or 4, and conent of halogenated saturated hydrocarbon in foam" in der Beschreibung beschrieben, 0,25 oder mehr und 0,85 oder weniger beträgt, ein Anteil des Cyclopentans in dem Kohlenwasserstoff mit einer Kohlenstoffzahl von 6 oder weniger oder den Kohlenwasserstoffen mit einer Kohlenstoffzahl von 6 oder weniger, das/die in dem Phenolharzschaum enthalten ist/sind, bestimmt wie in "(9) Content of hydrocarbon having a carbon number of 6 or less, content of hydrofluoroolefin having a carbon number of 3 or 4, and content of halogenated saturated hydrocarbon in foam" in der Beschreibung beschrieben, 60 Mol-% oder mehr und 100 Mol-% oder weniger beträgt, und ein Wert einer Extraktionsmenge Y, in Einheiten von g, des hochsiedenden Kohlenwasserstoffs mit einem Siedepunkt von 140 °C oder mehr und 350 °C oder weniger, der in Heptan extrahiert wird, wenn der Phenolharzschaum gemahlen und einer Extraktionsbehandlung in dem Heptan unterzogen wird, pro Raumvolumen von 22,4 10$^{-3}\times$ m$^3$ in dem Phenolharzschaum, in einem Bereich von nicht mehr als einem Koeffizienten a, berechnet nach der folgenden Formel (1), und nicht weniger als einem Koeffizienten b, berechnet nach der folgenden Formel (2), liegt:

$$a = -1{,}95X + 6{,}2 \qquad (1)$$

$$b = 0{,}47X + 0{,}14 \qquad (2).$$

2. Phenolharzschaum nach Anspruch 1 wobei der hochsiedende Kohlenwasserstoff mit einem Siedepunkt von 140 °C oder mehr und 350 °C oder weniger bei einem Druck von 101,325 kPa und einer Temperatur von 30° C flüssig ist.

3. Phenolharzschaum nach Anspruch 1 oder 2, wobei der Kohlenwasserstoff mit einer Kohlenstoffzahl von 6 oder weniger, der in dem Phenolharzschaum enthalten ist, 60 Mol-% oder mehr und 99,9 Mol-% oder weniger des Cyclopentans enthält, und ein Siedepunkt-Mittelwert $T_{AV}$ = a $\times$Ta + b $\times$Tb + c $\times$Tc + ... , wobei die Gehalte (Molenbrüche) der jeweiligen enthaltenen Kohlenwasserstoffe mit a, b, c, ... bezeichnet sind und die Siedepunkte (°C) der jeweiligen Kohlenwasserstoffe mit Ta, Tb, Tc, ... bezeichnet sind, des Kohlenwasserstoffs mit einer Kohlenstoffzahl von 6 oder weniger 25° C oder mehr und 50° C oder weniger beträgt.

**4.** Phenolharzschaum nach Anspruch 1 oder 2,
wobei der Kohlenwasserstoff mit einer Kohlenstoffzahl von 6 oder weniger, der in dem Phenolharzschaum enthalten ist, 60 Mol-% oder mehr und 99,9 Mol-% oder weniger des Cyclopentans und 0,1 Mol-% oder mehr und 40 Mol-% oder weniger von mindestens einem enthält, ausgewählt aus Kohlenwasserstoffen mit einem Siedepunkt von -50° C oder mehr und 5 °C oder weniger, und
ein Siedepunkt-Mittelwert $T_{AV}$ = a ×Ta + b ×Tb + c ×Tc + ...
wobei die Gehalte (Molenbrüche) der jeweiligen enthaltenen Kohlenwasserstoffe mit a, b, c, ... bezeichnet sind und die Siedepunkte (°C) der jeweiligen Kohlenwasserstoffe mit Ta, Tb, Tc, ... bezeichnet sind, des Kohlenwasserstoffs mit einer Kohlenstoffzahl von 6 oder weniger 25° C oder mehr und 50° C oder weniger beträgt und der Gehalt des Kohlenwasserstoffs mit einer Kohlenstoffzahl von 6 oder weniger in dem Phenolharzschaum, bestimmt wie in "(9) Content of hydrocarbon having a carbon number of 6 or less, content of hydrofluoroolefin having a carbon number of 3 or 4, and content of halogenated saturated hydrocarbon in foam" in der Beschreibung beschrieben, 0,3 Mol oder mehr und 1,0 Mol oder weniger pro Raumvolumen von 22,4 $10^{-3}$×m³ in dem Phenolharzschaum ist.

**5.** Phenolharzschaum nach einem der Ansprüche 1 bis 4,
wobei die Wärmeleitfähigkeit in einer 10 °C-Umgebung und die Wärmeleitfähigkeit in einer 23 °C-Umgebung, bestimmt wie in "(5) Thermal conductivity in 10°C environment and thermal conductivity in 23 °C environment" in der Beschreibung beschrieben, jeweils 0,0200 W/m·K oder weniger betragen.

**6.** Phenolharzschaum nach einem der Ansprüche 1 bis 5,
wobei der in dem Phenolharzschaum enthaltene Kohlenwasserstoff mit einer Kohlenstoffzahl von 6 oder weniger einen Kohlenwasserstoff mit einem Siedepunkt von -50° C oder mehr und 5 °C oder weniger enthält, und
der Kohlenwasserstoff mit einem Siedepunkt von -50° C oder mehr und 5 °C oder weniger Isobutan enthält.

**7.** Phenolharzschaum nach einem der Ansprüche 1 bis 6, umfassend mindestens eines von einem schwer wasserlöslichen Metallhydroxid, das bei 150° C oder mehr Wasser freisetzt, wobei die in Wasser gelöste Menge, wenn 100 g des schwer wasserlöslichen Metallhydroxids in 100 g destilliertes Wasser bei einer Temperatur von 23 °C eingemischt werden, 15 g oder weniger beträgt, und eines schwer wasserlöslichen Flammschutzmittels auf Phosphorbasis mit einer Zersetzungstemperatur von 150° C oder mehr, wobei die in Wasser gelöste Menge, wenn 100 g des schwer wasserlöslichen Flammschutzmittels auf Phosphorbasis in 100 g destilliertes Wasser bei einer Temperatur von 23 °C eingemischt werden, 15 g oder weniger beträgt.

**8.** Phenolharzschaumstoff nach einem der Ansprüche 1 bis 7 mit einem Anteil geschlossener Zellen, bestimmt wie in "(3) Closed cell ratio" in der Beschreibung beschrieben, von 90 % oder mehr, einem durchschnittlichen Zellendurchmesser, bestimmt wie in "(2) Average cell diameter" in der Beschreibung beschrieben, von 40 μm oder mehr und 300 μm oder weniger und einer 30 kg/m³-Dichte-Äquivalentdruckfestigkeit, bestimmt wie in "(4) Density 30 kg/m³ equivalent compressive strength" in der Beschreibung beschrieben, von 9 N/cm² oder mehr.

**9.** Phenolharzschaumstoff nach einem der Ansprüche 1 bis 8, der weiterhin ein Hydrofluorolefin mit einer Kohlenstoffzahl von 3 oder 4 enthält,
wobei ein Wert eines Gehalts Z, in Mol-Einheiten, des Hydrofluorolefins mit einer Kohlenstoffzahl von 3 oder 4 pro Raumvolumen von 22,4 $10^{-3}$× m³ in dem Phenolharzschaum, bestimmt wie in "(9) Content of hydrocarbon having a carbon number of 6 or less, content of hydrofluoroolefin having a carbon number of 3 or 4, and content of halogenated saturated hydrocarbon in foam" in der Beschreibung beschrieben, 0,01 oder mehr und 0,4 oder weniger beträgt, und eine Gesamtmenge, in Mol-Einheiten, eines Gehalts des Kohlenwasserstoffs mit einer Kohlenstoffzahl von 6 oder weniger und des Gehalts Z des Hydrofluorolefins mit einer Kohlenstoffzahl von 3 oder 4 pro Raumvolumen von 22,4 $10^{-3}$× m³ in dem Phenolharzschaum 0,3 oder mehr und 0,9 oder weniger beträgt.

**10.** Phenolharzschaum nach Anspruch 9,
wobei der Wert der Extraktionsmenge Y, in Einheiten von g, nicht mehr als ein Koeffizient c ist, der gemäß der folgenden Formel (3) berechnet wird:

$$c = -1{,}37Z + 7{,}4 \qquad (3).$$

**11.** Phenolharzschaum nach einem der Ansprüche 1 bis 10, der weiterhin einen halogenierten gesättigten Kohlenwasserstoff enthält,

wobei ein Wert eines Gehalts, in Mol-Einheiten, des halogenierten gesättigten Kohlenwasserstoffs pro Raumvolumen von 22,4 $10^{-3} \times$ m$^3$ in dem Phenolharzschaum, bestimmt wie in "(9) Content of hydrocarbon having a carbon number of 6 or less, content of hydrofluoroolefin having a carbon number of 3 or 4, and content of halogenated saturated hydrocarbon in foam" in der Beschreibung beschrieben, 0,01 oder mehr und 0,35 oder weniger beträgt.

12. Verfahren zur Herstellung des Phenolharzschaums nach einem der Ansprüche 1 bis 8, umfassend:

Mischen einer schäumbaren Phenolharzzusammensetzung, die mindestens ein Phenolharz, ein Tensid, einen hochsiedenden Kohlenwasserstoff mit einem Siedepunkt von 140 °C oder mehr und 350 °C oder weniger, ein Cyclopentan enthaltendes Schäumungsmittel und einen sauren Härtungskatalysator enthält, unter Verwendung eines Mischers;
Abgabe der schäumbaren Phenolharzzusammensetzung aus einem Verteilungsabschnitt in dem Mischer; und danach Erwärmen, um die schäumbare Phenolharzzusammensetzung zu schäumen und zu härten, wobei in einem Verfahren zum Schäumen und Härten der schäumbaren Phenolharzzusammensetzung Druck von oben und unten auf die schäumbare Phenolharzzusammensetzung ausgeübt wird, um einen plattenartigen Phenolharzschaum zu bilden.

13. Verfahren zur Herstellung des Phenolharzschaums nach Anspruch 9 oder 10, umfassend:

Mischen einer schäumbaren Phenolharzzusammensetzung, die mindestens ein Phenolharz, ein Tensid, einen hochsiedenden Kohlenwasserstoff mit einem Siedepunkt von 140 °C oder mehr und 350 °C oder weniger, ein Schäumungsmittel, das Cyclopentan und ein Hydrofluorolefin mit einer Kohlenstoffzahl von 3 oder 4 enthält, und einen sauren Härtungskatalysator enthält, unter Verwendung eines Mischers;
Abgabe der schäumbaren Phenolharzzusammensetzung aus einem Verteilungsabschnitt in dem Mischer; und danach Erwärmen, um die schäumbare Phenolharzzusammensetzung zu schäumen und zu härten, wobei in einem Verfahren zum Schäumen und Härten der schäumbaren Phenolharzzusammensetzung Druck von oben und unten auf die schäumbare Phenolharzzusammensetzung ausgeübt wird, um einen plattenartigen Phenolharzschaum zu bilden.

14. Verfahren zur Herstellung des Phenolharzschaums nach Anspruch 11, umfassend:

Mischen einer schäumbaren Phenolharzzusammensetzung, die mindestens ein Phenolharz, ein oberflächenaktives Mittel, einen hochsiedenden Kohlenwasserstoff mit einem Siedepunkt von 140 °C oder mehr und 350 °C oder weniger, ein Schäumungsmittel, das Cyclopentan und einen halogenierten gesättigten Kohlenwasserstoff enthält, und einen sauren Härtungskatalysator enthält, unter Verwendung eines Mischers;
Abgabe der schäumbaren Phenolharzzusammensetzung aus einem Verteilungsabschnitt in dem Mischer; und danach Erwärmen, um die schäumbare Phenolharzzusammensetzung zu schäumen und zu härten, wobei in einem Verfahren zum Schäumen und Härten der schäumbaren Phenolharzzusammensetzung Druck von oben und unten auf die schäumbare Phenolharzzusammensetzung ausgeübt wird, um einen plattenartigen Phenolharzschaum zu bilden.

15. Verfahren nach einem der Ansprüche 12 bis 14, wobei der hochsiedende Kohlenwasserstoff und das Schäumungsmittel vor dem Mischen der schäumbaren Phenolharzzusammensetzung, die das Phenolharz, das Tensid, den hochsiedenden Kohlenwasserstoff, das Schäumungsmittel und den sauren Härtungskatalysator enthält, vermischt werden.

16. Verfahren nach einem der Ansprüche 12 bis 15, wobei ein Druck des Verteilungsabschnitts 0,3 MPa oder mehr und 10 MPa oder weniger beträgt.

17. Verfahren nach einem der Ansprüche 12 bis 16, wobei ein Wassergehalt in dem Phenolharz, das in den Mischer eingefüllt wird, 2 Massen-% oder mehr und 20 Massen-% oder weniger beträgt, in dem Verfahren zum Schäumen und Härten der schäumbaren Phenolharzzusammensetzung der Druck auf die schäumbare Phenolharzzusammensetzung unter Verwendung einer Doppelfördereinrichtung ausgeübt wird, und eine Temperatur in der Doppelfördereinrichtung 60 °C oder mehr und 100 °C oder weniger beträgt.

18. Verfahren nach einem der Ansprüche 12 bis 17, wobei in dem Verfahren zum Schäumen und Härten der schäumbaren Phenolharzzusammensetzung der Druck auf die schäumbare Phenolharzzusammensetzung unter Verwendung einer Doppelfördereinrichtung aufgebracht wird, und

ein Koeffizient R, der gemäß der folgenden Formel (4) aus einem Wassergehalt P, in Einheiten von Massen-%, in dem in den Mischer eingefüllten Phenolharz, und einer Temperatur Q, in Einheiten von °C, in der Doppelfördereinrichtung berechnet wird, 20 oder mehr und 36 oder weniger beträgt:

$$R = P + 0{,}2286Q \qquad (4).$$

**Revendications**

1. Mousse de résine phénolique, comprenant:

   du cyclopentane comme hydrocarbure comprenant un nombre d'atomes de carbone égal à 6 ou moins;
   optionnellement un autre hydrocarbure comprenant un nombre d'atomes de carbone égal à 6 ou moins; et
   un hydrocarbure à point d'ébullition élevé présentant un point d'ébullition de 140°C ou plus et 350°C ou moins qui est un composé unique ou une pluralité de composés sélectionnés parmi le cyclooctane, le nonane, le décane, la décaline, l'undécane, le dodécane, le tridécane, le tétradécane, le pentadécane, l'hexadécane, l'heptadécane, l'octadécane, le nonadécane et l'icosane, et présentant une densité de 10 kg/m$^3$ ou plus et 150 kg/m$^3$ ou moins,
   dans laquelle une valeur d'une teneur X en unités de moles du cyclopentane pour un volume spatial de 22,4 $\times$ 10$^{-3}$ m$^3$ dans la mousse de résine phénolique, qui est déterminée selon la manière décrite au point "(9) Teneur en hydrocarbure comprenant un nombre d'atomes de carbone égal à 6 ou moins, teneur en hydrofluoroléfine comprenant un nombre d'atomes de carbone égal à 3 ou 4, et teneur en hydrocarbure saturé halogéné dans la mousse" dans la description, est de 0,25 ou plus et de 0,85 ou moins,
   un rapport du cyclopentane dans un hydrocarbure comprenant un nombre d'atomes de carbone égal à 6 ou moins ou des hydrocarbures comprenant un nombre d'atomes de carbone égal à 6 ou moins contenu (s) dans la mousse de résine phénolique, qui est déterminé selon la manière décrite au point "(9) Teneur en hydrocarbure comprenant un nombre d'atomes de carbone égal à 6 ou moins, teneur en hydrofluoroléfine comprenant un nombre d'atomes de carbone égal à 3 ou 4, et teneur en hydrocarbure saturé halogéné dans la mousse" dans la description, est de 60 % molaires ou plus et 100 % molaires ou moins, et
   une valeur d'une quantité d'extraction Y en unités de g de l'hydrocarbure à point d'ébullition élevé présentant un point d'ébullition de 140°C ou plus et 350°C ou moins extrait dans l'heptane lorsque la mousse de résine phénolique est broyée et soumise à un traitement d'extraction dans l'heptane, pour un volume spatial de 22,4 $\times$ 10$^{-3}$ m$^3$ dans la mousse de résine phénolique, est comprise dans une plage non supérieure à un coefficient calculé conformément à la formule (1) ci-dessous et non inférieure à un coefficient b calculé conformément à la formule (2) ci-dessous:

   $$a = -1{,}95X + 6{,}2 \qquad (1),$$

   $$b = 0{,}47X + 0{,}14 \qquad (2).$$

2. Mousse de résine phénolique selon la revendication 1, dans laquelle l'hydrocarbure à point d'ébullition élevé présentant un point d'ébullition de 140°C ou plus et 350°C ou moins est liquide à une pression de 101,325 kPa et une température de 30°C.

3. Mousse de résine phénolique selon la revendication 1 ou 2,
   dans laquelle l'hydrocarbure comprenant un nombre d'atomes de carbone égal à 6 ou moins contenu dans la mousse de résine phénolique comprend 60 % molaires ou plus et 99,9 % molaires ou moins du cyclopentane, et
   une valeur moyenne de point d'ébullition $T_{AV}$ = a x Ta + b x Tb + c x Tc + ..., où les teneurs (fractions molaires) des hydrocarbures respectifs contenus sont a, b, c, ..., et les points d'ébullition (°C) des hydrocarbures respectifs sont Ta, Tb, Tc, ..., de l'hydrocarbure comprenant un nombre d'atomes de carbone égal à 6 ou moins est de 25°C ou plus et 50°C ou moins.

4. Mousse de résine phénolique selon la revendication 1 ou 2,
dans laquelle l'hydrocarbure comprenant un nombre d'atomes de carbone égal à 6 ou moins contenu dans la mousse de résine phénolique comprend 60 % molaires ou plus et 99,9 % molaires ou moins du cyclopentane, et 0,1 % molaires ou plus et 40 % molaires ou moins d'au moins un hydrocarbure sélectionné parmi des hydrocarbures présentant un point d'ébullition de -50°C ou plus et 5°C ou moins, et
une valeur moyenne de point d'ébullition $T_{AV}$ = a x Ta + b x Tb + c x Tc + ..., où les teneurs (fractions molaires) des hydrocarbures respectifs contenus sont a, b, c, ..., et les points d'ébullition (°C) des hydrocarbures respectifs sont Ta, Tb, Tc, ..., de l'hydrocarbure comprenant un nombre d'atomes de carbone égal à 6 ou moins est de 25°C ou plus et 50°C ou moins, et une teneur de l'hydrocarbure comprenant un nombre d'atomes de carbone égal à 6 ou moins dans la mousse de résine phénolique, qui est déterminée selon la manière décrite au point "(9) Teneur en hydrocarbure comprenant un nombre d'atomes de carbone égal à 6 ou moins, teneur en hydrofluoroléfine comprenant un nombre d'atomes de carbone égal à 3 ou 4, et teneur en hydrocarbure saturé halogéné dans la mousse" dans la description, est de 0,3 mole ou plus et 1,0 mole ou moins pour un volume spatial de 22,4 × 10⁻³ m³ dans la mousse de résine phénolique.

5. Mousse de résine phénolique selon l'une quelconque des revendications 1 à 4, dans laquelle la conductivité thermique dans un environnement de 10°C et la conductivité thermique dans un environnement de 23°C, qui sont déterminées selon la manière décrite au point "(5) Conductivité thermique dans un environnement de 10°C et conductivité thermique dans un environnement de 23°C" dans la description, sont chacune de 0,0200 W/m·K ou moins.

6. Mousse de résine phénolique selon l'une quelconque des revendications 1 à 5,
dans laquelle l'hydrocarbure comprenant un nombre d'atomes de carbone égal à 6 ou moins contenu dans la mousse de résine phénolique comprend un hydrocarbure présentant un point d'ébullition de -50°C ou plus et 5°C ou moins, et l'hydrocarbure présentant un point d'ébullition de -50°C ou plus et 5°C ou moins contient de l'isobutane.

7. Mousse de résine phénolique selon l'une quelconque des revendications 1 à 6, comprenant au moins un composé parmi un hydroxyde de métal faiblement soluble dans l'eau qui libère de l'eau à 150°C ou plus, dans laquelle la quantité dissoute dans l'eau lorsque 100 g de l'hydroxyde de métal faiblement soluble dans l'eau sont mélangés avec 100 g d'eau distillée à une température de 23°C, est de 15 g ou moins, et un retardateur de flamme à base de phosphore faiblement soluble dans l'eau présentant une température de décomposition de 150°C ou plus, dans laquelle la quantité dissoute dans l'eau lorsque 100 g du retardateur de flamme à base de phosphore faiblement soluble dans l'eau sont mélangés avec 100 g d'eau distillée à une température de 23°C, est de 15 g ou moins.

8. Mousse de résine phénolique selon l'une quelconque des revendications 1 à 7, présentant un taux de cellules fermées de 90 % ou plus, qui est déterminé selon la manière décrite au point "(3) Taux de cellules fermées" dans la description, un diamètre de cellule moyen, qui est déterminé selon la manière décrite au point "(2) Diamètre de cellule moyen" dans la description, de 40 μm ou plus et 300 μm ou moins, et une résistance à la compression équivalente à une densité de 30 kg/m³, qui est déterminée selon la manière décrite au point "(4) Résistance à la compression équivalente à une densité de 30 kg/m³" dans la description, de 9 N/cm² ou plus.

9. Mousse de résine phénolique selon l'une quelconque des revendications 1 à 8, comprenant en outre une hydrofluoroléfine comprenant un nombre d'atomes de carbone égal à 3 ou 4, dans laquelle une valeur d'une teneur Z en unités de moles de l'hydrofluoroléfine comprenant un nombre d'atomes de carbone égal à 3 ou 4 pour un volume spatial de 22,4 × 10⁻³ m³ dans la mousse de résine phénolique, qui est déterminée selon la manière décrite au point "(9) Teneur en hydrocarbure comprenant un nombre d'atomes de carbone égal à 6 ou moins, teneur en hydrofluoroléfine comprenant un nombre d'atomes de carbone égal à 3 ou 4, et teneur en hydrocarbure saturé halogéné dans la mousse" dans la description, est de 0,01 ou plus et 0,4 ou moins, et
un total en unités de moles d'une teneur de l'hydrocarbure comprenant un nombre d'atomes de carbone égal à 6 ou moins et de la teneur Z de l'hydrofluoroléfine comprenant un nombre d'atomes de carbone égal à 3 ou 4 pour un volume spatial de 22,4 × 10⁻³ m³ dans la mousse de résine phénolique est de 0,3 ou plus et 0,9 ou moins.

10. Mousse de résine phénolique selon la revendication 9, dans laquelle la valeur de la quantité d'extraction Y en unités de g n'est pas supérieure à un coefficient c qui est calculé conformément à la formule (3) ci-dessous:

$$C = -1,37Z + 7,4 \qquad (3).$$

**11.** Mousse de résine phénolique selon l'une quelconque des revendications 1 à 10, comprenant en outre un hydrocarbure saturé halogéné, dans laquelle une valeur d'une teneur en unités de moles de hydrocarbure saturé halogéné pour un volume spatial de $22,4 \times 10^{-3} \, m^3$ dans la mousse de résine phénolique, qui est déterminée selon la manière décrite au point "(9) Teneur en hydrocarbure comprenant un nombre d'atomes de carbone égal à 6 ou moins, teneur en hydrofluoroléfine comprenant un nombre d'atomes de carbone égal à 3 ou 4, et teneur en hydrocarbure saturé halogéné dans la mousse" dans la description, est de 0,01 ou plus et 0,35 ou moins.

**12.** Procédé de production de la mousse de résine phénolique selon l'une quelconque des revendications 1 à 8, comprenant les étapes ci-dessous:

mélanger une composition de résine phénolique expansible contenant au moins une résine phénolique, un tensioactif, un hydrocarbure à point d'ébullition élevé présentant un point d'ébullition de 140°C ou plus et 350°C ou moins, un agent moussant contenant du cyclopentane et un catalyseur de durcissement acide, en utilisant un mélangeur;
décharger la composition de résine phénolique expansible à partir d'une section de distribution dans le mélangeur; et
exécuter ensuite un chauffage, dans le but de faire mousser et durcir la composition de résine phénolique expansible,
dans lequel, dans un procédé de moussage et de durcissement de la composition de résine phénolique expansible, une pression est appliquée à la composition de résine phénolique expansible par le dessus et par en dessous, de manière à former une mousse de résine phénolique en forme de plaque.

**13.** Procédé de production de la mousse de résine phénolique selon la revendication 9 ou 10, comprenant les étapes ci-dessous:

mélanger une composition de résine phénolique expansible contenant au moins une résine phénolique, un tensioactif, un hydrocarbure à point d'ébullition élevé présentant un point d'ébullition de 140°C ou plus et 350°C ou moins, un agent moussant contenant du cyclopentane et une hydrofluoroléfine comprenant un nombre d'atomes de carbone égal à 3 ou 4 et un catalyseur de durcissement acide, en utilisant un mélangeur;
décharger la composition de résine phénolique expansible à partir d'une section de distribution dans le mélangeur; et
exécuter ensuite un chauffage, dans le but de faire mousser et durcir la composition de résine phénolique expansible,
dans lequel, dans un procédé de moussage et de durcissement de la composition de résine phénolique expansible, une pression est appliquée à la composition de résine phénolique expansible par le dessus et par en dessous, de manière à former une mousse de résine phénolique en forme de plaque.

**14.** Procédé de production de la mousse de résine phénolique selon la revendication 11, comprenant les étapes ci-dessous:

mélanger une composition de résine phénolique expansible contenant au moins une résine phénolique, un tensioactif, un hydrocarbure à point d'ébullition élevé présentant un point d'ébullition de 140°C ou plus et 350°C ou moins, un agent moussant contenant du cyclopentane et un hydrocarbure saturé halogéné, et un catalyseur de durcissement acide, en utilisant un mélangeur;
décharger la composition de résine phénolique expansible à partir d'une section de distribution dans le mélangeur; et
exécuter ensuite un chauffage, dans le but de faire mousser et durcir la composition de résine phénolique expansible,
dans lequel, dans un procédé de moussage et de durcissement de la composition de résine phénolique expansible, une pression est appliquée à la composition de résine phénolique expansible par le dessus et par en dessous, de manière à former une mousse de résine phénolique en forme de plaque.

**15.** Procédé selon l'une quelconque des revendications 12 à 14, dans lequel l'hydrocarbure à point d'ébullition élevé et l'agent moussant sont mélangés, avant le mélange de la composition de résine phénolique expansible contenant la résine phénolique, le tensioactif, l'hydrocarbure à point d'ébullition élevé, l'agent moussant et le catalyseur de durcissement acide.

**16.** Procédé selon l'une quelconque des revendications 12 à 15, dans lequel une pression de la section de distribution est de 0,3 MPa ou plus et 10 MPa ou moins.

17. Procédé selon l'une quelconque des revendications 12 à 16,
dans lequel une teneur en eau dans la résine phénolique chargée dans le mélangeur est de 2 % en masse ou plus et 20 % en masse ou moins,
dans le procédé de moussage et de durcissement de la composition de résine phénolique expansible, la pression est appliquée à la composition de résine phénolique expansible en utilisant un convoyeur double, et
une température dans le convoyeur double est de 60°C ou plus et 100°C ou moins.

18. Procédé selon l'une quelconque des revendications 12 à 17,
dans lequel, dans le procédé de moussage et de durcissement de la composition de résine phénolique expansible, la pression est appliquée à la composition de résine phénolique expansible en utilisant un convoyeur double, et
un coefficient R calculé conformément à la formule (4) ci-dessous à partir d'une teneur en eau P en unités de % en masse dans la résine phénolique chargée dans le mélangeur et une température Q en unités de °C dans le convoyeur double est de 20 ou plus et 36 ou moins:

$$R = P + 0,2286Q \qquad (4).$$

# FIG. 1

# FIG. 2

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP H11140216 A
- WO 9911697 A1
- JP 2007131803 A
- EP 3159375 A1
- JP H10225993 A
- JP 2000218635 A